(19) Europäisches Patentamt
European Patent Office
Office européen des brevets

(11) **EP 1 873 268 A1**

(12) **EUROPEAN PATENT APPLICATION**
published in accordance with Art. 153(4) EPC

(43) Date of publication:
**02.01.2008 Bulletin 2008/01**

(21) Application number: **06729425.6**

(22) Date of filing: **17.03.2006**

(51) Int Cl.:
**C22C 21/00** (2006.01)    **C22F 1/04** (2006.01)
**H01G 9/04** (2006.01)

(86) International application number:
**PCT/JP2006/305436**

(87) International publication number:
**WO 2006/098445 (21.09.2006 Gazette 2006/38)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.03.2005 JP 2005077776**
**07.07.2005 JP 2005199226**
**02.08.2005 JP 2005224565**
**12.08.2005 JP 2005234150**

(71) Applicants:
• **SHOWA DENKO KABUSHIKI KAISHA**
**Tokyo 105-8518 (JP)**
• **Nishimori, Hideki**
**Osaka**
**5908576 (JP)**

• **Yamanoi, Tomoaki**
**Osaka**
**5908576 (JP)**

(72) Inventors:
• **SHOWA DENKO KABUSHIKI KAISHA**
**Tokyo 105-8518 (JP)**
• **Nishimori, Hideki**
**Osaka**
**5908576 (JP)**
• **Yamanoi, Tomoaki**
**Osaka**
**5908576 (JP)**

(74) Representative: **Viering, Jentschura & Partner**
**Grillparzerstrasse 14**
**81675 München (DE)**

(54) **PROCESS FOR PRODUCING ALUMINUM MATERIAL FOR ELECTROLYTIC CAPACITOR ELECTRODE, ALUMINUM MATERIAL FOR ELECTROLYTIC CAPACITOR ELECTRODE, PROCESS FOR PRODUCING ELECTROLYTIC CAPACITOR ELECTRODE MATERIAL, ANODE MATERIAL FOR ALUMINUM ELECTROLYTIC CAPACITOR, AND ALUMINUM ELECTROLYTIC CAPACITOR**

(57)     The present invention provides an aluminum material for electrolytic capacitor electrodes capable of assuredly increasing area increasing rate by generating deep etching pits evenly at high density to increase capacitance and the production method thereof, an electrode material for electrolytic capacitor, an anode material for aluminum electrolytic capacitors, a production method of an anode material for electrolytic capacitors, and an aluminum electrolytic capacitor.

The Pb content is not less than 0.3 mass ppm but not more than 2.5 mass ppm, and an aluminummaterial subj ected to evaluation etching under prescribed conditions meets either a condition that a Lab lightness index (L value) of the aluminum material measured by a prescribed method is not less than 25 but not more than 56 when a pre-treatment time is 30 seconds or a condition that the Lab lightness index is not less than 27 but not more than 58 when the pre-treatment time is 45 seconds.

Fig. 1

EP 1 873 268 A1

**Description**

**TECHNICAL FIELD**

The present invention relates to a production method of an aluminum material for electrolytic capacitor electrodes, an aluminum material for electrolytic capacitor electrodes, an anode material for aluminum electrolytic capacitors, a production method of an anode material for electrolytic capacitors, and an aluminum electrolytic capacitor.

In this specification, the term of "aluminum" is used to include the mean of its alloy, and an aluminum material includes a foil, a plate and these formed articles.

**BACKGROUND ART**

An aluminum material generally used as an electrode material for aluminum electrolytic capacitors are subjected to electrochemical or chemical etching processing to increase the effective area of the aluminum material for the purpose of increasing the capacitance.

In a production of an aluminum material for electrolytic capacitor anodes having tunnel-like pits by a DC (direct-current) etching method, in order to develop aluminum cubic textures, it is common to execute final annealing at a temperature of approximately 500 °C in an inert atmosphere or in vacuo. The final annealing is performed at a step after the cold rolling. Furthermore, in the middle of the cold rolling step, annealing canbe performed to increase the area fraction of cube orientation after the final annealing according to need. The annealing executed in the middle of the cold rolling steps will be referred to as intermediate annealing which is generally executed in an inner atmosphere such as a nitrogen or argon atmosphere.

Since the characteristics of an oxide film of an aluminum material surface after final annealing relate to pit growth especially at the electrolytic etching early stage, various considerations on the oxidization treatment of an aluminum material surface have been made. Trace elements contained in an aluminum material affect etching characteristics of an aluminum material. Especially, Pb segregated in the aluminum material surface layer at the final annealing activates the surface layer, influences the initial pit formation and the properties of surface dissolve. Cu affects amount of dissolved aluminum and initial pit formation at the electrolytic etching step, and therefore it is important to appropriately control the Cu content.

Patent Document 1 discloses that a series of processes, removing a surface layer of an aluminum foil, heating and oxidizing the foil under the conditions of temperature: 40-35 °C, dew point: 0-80 °C, time: 30-1,800 sec. aluminum surface oxide film after annealing to be thicker and to be dissolved quickly in an etching solution.

Furthermore, Patent Document 2 discloses Cu concentration and Pb concentration.

Patent Document 3 discloses a production method of an aluminum foil for electrolytic capacitor electrodes characterized in that an aluminum foil rewound from a coil is continuously washed to remove the oxide film, thereafter the aluminum foil surface is continuously subjected to oxidization treatment by bringing into contact with an (oxidizing) atmosphere and then subjected to a high temperature heating treatment.

Patent Document 4 discloses a production method of an aluminum material for electrolytic capacitor electrodes characterized in that a surface layer of a rolled aluminum foil is removed, thereafter the aluminum foil is subjected to a step of forming an oxide layer 5-50 Angstrom in thickness on the surface of the aluminum foil during a state in which the average cell size or the sub-grain size is 10 $\mu$m or less and then subjected to a high temperature heating treatment step in a range in which the total thickness of the oxide film does not exceed 70 Angstrom.

Patent Document 5 discloses a production method of an aluminum material for electrolytic capacitor electrodes comprising a step of heating an aluminum material by bringing into contact with a heating member.

Patent Document 6 discloses a production method of an aluminum material for electrolytic capacitor electrodes in which after a final annealing in an inert atmosphere, oxidizing treatment is executed in the air.

Patent Document 1: JP H07-201673, A
Patent Document 2: JP 2000-239773, A
Patent Document 3: JP H04-127412, A
Patent Document 4: JP H03-122260, A
Patent Document 5: WO03/091482A1
Patent Document 6: JP H02-254140, A

## DISCLOSURE OF THE INVENTION

## PROBLEMS TO BE SOLVED BY THE INVENTION

However, Patent Document 1 fails to describe trace elements, such as, e.g., Pb or Cu, contained in an aluminum material although it teaches that the capacitance can be increased by heating an aluminum material in an oxidizing atmosphere.

Patent Document 2 discloses regulation of the Pb concentration and the Cu concentration and teaches that it is only required to execute hot rolling, cold rolling, intermediate annealing, finish rolling, and final annealing in accordance with a conventionally known method. It also discloses the deposited amount of Fe and Si as the characteristics of the aluminum foil after the final annealing. However, since the characteristic evaluation of the foil obtained after the final annealing is insufficient, sufficient capacitance improvement effects could not have been attained.

Patent Documents 3-5 fail to describe the content of trace elements contained in the aluminum material although the capacitance has been improved by heating in an oxidizing atmosphere or heating by bringing into contact with a heating member. Patent Document 6 also fails to describe the content of trace elements. Furthermore, according to the method, since the oxidization treatment is performed after the final annealing, as compared with the case in which the oxidization treatment is performed before the final annealing, etching characteristic improvement effects by the oxidization treatment may become insufficient.

The first object of this invention is to provide an aluminum material for electrolytic capacitor electrodes capable of assuredly increasing area and increasing rate by generating deep etching pits evenly at high density to increase capacitance.

The second object of this invention is to provide a production method of an aluminum material for electrolytic capacitor electrodes capable of assuredly increasing area increasing rate by generating deep etching pits evenly at high density to increase capacitance.

The third object of this invention is to provide an electrode material for electrolytic capacitor electrodes capable of assuredly increasing area increasing rate by generating deep etching pits evenly at high density to increase capacitance.

The fourth object of this invention is to provide an anode material for electrolytic capacitor electrodes capable of assuredly increasing area increasing rate by generating deep etching pits evenly at high density to increase capacitance.

The fifth object of this invention is to provide an aluminum electrolytic capacitor capable of assuredly increasing area increasing rate by generating deep etching pits evenly at high density to increase capacitance.

## MEANS TO SOLVE THE PROBLEMS

In order to attain the aforementioned objects, the present invention provides the following means.

(1) An aluminum material for electrolytic capacitor electrodes,
wherein Pb content is not less than 0.3 mass ppm but not more than 2.5 mass ppm, and
wherein an aluminum material subjected to evaluation etching defined below meets either a condition that a Lab lightness index (L value) of the aluminum material measured by a method defined below is not less than 25 but not more than 56 when a pre-treatment time is 30 seconds or a condition that the Lab lightness index is not less than 27 but not more than 58 when the pre-treatment time is 45 seconds:
[Method of the Evaluation Etching]
the aluminum material is immersed in a phosphoric acid solution of 50 °C in temperature and 2 mol/L in concentration for 30 seconds or 45 seconds, and then washed with water as pre-treatment. Thereafter, the aluminum material is subjected to DC electrolytic etching in an electrolytic solution defined below at current density of 0.4 A/cm$^2$ for 3 seconds, washed with water, and then dried. Component of the electrolytic solution: Hydrochloric acid of 1.0 mol/L, Sulfuric acid of 2.7 mol/L, and Aluminum sulfate of 1.0 mol/L (Aluminum sulfate is added as hydrate).
Temperature of the electrolytic solution: 82 °C
Carbon electrodes as opposed electrodes are disposed at both sides of the aluminum material at a distance of 17 mm to execute double-sided etching (current density is a value per projected area of the aluminum material)
[Measuring Method of the Lab Light Index (L value)]
Optical Condition: 45-n (Condition "a" described in JIS Z 8722 5.3.1)
Measurement Condition: C light 2° visual field
Specimen Arrangement Condition: Measurement is performed in a state in which a specimen is disposed with the rolling direction perpendicularly intersecting with the normal line of the central optical path of a bundle of rays and contained on a specimen surface.

(2) The aluminum material for electrolytic capacitor electrodes as recited in the aforementioned Item 1, wherein the aluminum material meets both the condition that the lightness index (L value) is not less than 25 but not more than 56 when the pre-treatment time is 30 seconds and the condition that the lightness index is not less than 27 but not more than 58 when the pre-treatment time is 45 seconds.

(3) The aluminum material for electrolytic capacitor electrodes as recited in the aforementioned Item 1 or 2, wherein the lightness index (L value) is not less than 30 but not more than 53 when the pre-treatment time is 30 seconds and not less than 33 but not more than 55 when the pre-treatment time is 45 seconds.

(4) The aluminum material for electrolytic capacitor electrodes as recited in the aforementioned Item 1 or 2, wherein the lightness index (L value) is not less than 33 but not more than 45 when the pre-treatment time is 30 seconds and not less than 40 but not more than 53 when the pre-treatment time is 45 seconds.

(5) The aluminum material for electrolytic capacitor electrodes as recited in any one of the aforementioned Items 1 to 4, wherein the Pb content is not less than 0.4 mass ppm but not more than 1.8 mass ppm.

(6) The aluminum material for electrolytic capacitor electrodes as recited in any one of the aforementioned Items 1 to 4, wherein the Pb content is not less than 0.5 mass ppm but not more than 1.2 mass ppm.

(7) The aluminum material for electrolytic capacitor electrodes as recited in any one of the aforementioned Items 1 to 4, wherein the aluminum material includes Cu not less than 10 mass ppm but not more than 150 mass ppm.

(8) The aluminum material for electrolytic capacitor electrodes as recited in any one of the aforementioned Items 1 to 4, wherein the aluminum material includes Cu not less than 15 mass ppm but not more than 100 mass ppm.

(9) The aluminum material for electrolytic capacitor electrodes as recited in any one of the aforementioned Items 1 to 8, wherein aluminum purity of the aluminum material is 99.9 mass% or higher.

(10) The aluminum material for electrolytic capacitor electrodes as recited in any one of the aforementioned Items 1 to 8, wherein the aluminum material is used as a medium-voltage or high-voltage anode material.

(11) An electrode material for electrolytic capacitors obtained by subjecting the aluminum material as recited in any one of the aforementioned Items 1 to 9 to etching.

(12) The electrode material for electrolytic capacitors as recited in the aforementioned Item 11, wherein at least a part of the etching is executed by DC electrolytic etching.

(13) The electrode material for electrolytic capacitors as recited in the aforementioned Item 11 or 12, wherein the electrode material is obtained by further subjecting the aluminum material to formation of dielectric (by anodizing).

(14) The electrode material for electrolytic capacitors as recited in the aforementioned Item 13, wherein the electrode material is used as an anode material.

(15) An aluminum electrolytic capacitor comprising the electrode material for electrolytic capacitors as recited in the aforementioned Item 13 or 14.

(16) A production method of an aluminum material for electrolytic capacitor electrodes, comprising:

heating an aluminum material containing Pb not less than 0.3 mass ppm but not more than 2.5 mass ppm in an oxidizing atmosphere after completion of cold rolling; and thereafter
subjecting the aluminum material to final annealing.

(17) The production method of an aluminum material for electrolytic capacitor electrodes as recited in the aforementioned Item 16, wherein the aluminum material includes Cu not less than 10 mass ppm but not more than 150 mass ppm.

(18) The production method of an aluminum material for electrolytic capacitor electrodes as recited in the aforementioned Item 16 or 17, wherein aluminum purity of the aluminum material is 99.9 mass% or higher.

(19) The production method of an aluminum material for electrolytic capacitor electrodes as recited in any one of the aforementioned Items 16 to 18, wherein a heating temperature of the oxidizing atmosphere is 50 to 400 °C.

(20) The production method of an aluminum material for electrolytic capacitor electrodes as recited in the aforementioned Item 19, wherein a heating time in the oxidizing atmosphere is not shorter than 3 seconds but not longer than 72 hours.

(21) The production method of an aluminum material for electrolytic capacitor electrodes as recited in any one of the aforementioned Items 16 to 20, wherein oxygen concentration in the oxidizing atmosphere during the heating is not less than 0.1 vol%.

(22) The production method of an aluminum material for electrolytic capacitor electrodes as recited in any one of the aforementioned Items 16 to 21, wherein the aluminum material is sequentially subjected to intermediate annealing and finish cold rolling before completion of cold rolling.

(23) The production method of an aluminum material for electrolytic capacitor electrodes as recited in any one of the aforementioned Items 16 to 22, wherein before the heating in the oxidizing atmosphere but after completion of the cold rolling, washing is performed.

(24) The production method of an aluminum material for electrolytic capacitor electrodes as recited in the aforementioned Item 23, wherein washing liquid for use in the washing is at least one of organic solvent, water containg surfactant, and a mixture of water-soluble organic solvent and water.

(25) The production method of an aluminum material for electrolytic capacitor electrodes as recited in the aforementioned Item 23, wherein washing liquid used for the washing is at least one of acid aqueous solution and alkaline aqueous solution.

(26) The production method of an aluminum material for electrolytic capacitor electrodes as recited in the aforementioned Item 23, wherein the washing is performed by sequentially executing washing with alkaline aqueous solution and washing with acid aqueous solution.

(27) The production method of an aluminum material for electrolytic capacitor electrodes as recited in the aforementioned Item 25 or 26, wherein acid in the acid aqueous solution is one or more selected from the group consisting of hydrochloric acid, sulfuric acid, nitric acid, and acid containing phosphorus.

(28) The production method of an aluminum material for electrolytic capacitor electrodes as recited in the aforementioned Item 25 or 26, wherein alkaline in the alkaline aqueous solution is one or more selected from the group consisting of sodium hydroxide, calcium hydroxide, potassium hydroxide, sodium orthosilicate, sodium metasilicate, sodium tertiary phosphate, and sodium carbonate.

(29) The production method of an aluminum material for electrolytic capacitor electrodes as recited in any one of the aforementioned Items 25 to 28, wherein an average removal amount of a surface layer of the aluminum material by the washing is not less than 1 nm but not more than 500 nm per one side of the aluminum material, and wherein the removal amount is defined by:

$$\text{removal amount D (nm)} = E(g/cm^2) \times 10^7 / 2.7(g/cm^3),$$

where E is a decreased amount per unit surface area by the washing, and 2.7g/cm$^3$ is density of the aluminum material.

(30) The production method of an aluminum material for electrolytic capacitor electrodes as recited in the aforementioned Item 24, wherein Pb concentration in the aluminum material is not less than 0.6 mass ppm but not more than 2.5 mass ppm.

(31) The production method of an aluminum material for electrolytic capacitor electrodes as recited in any one of the aforementioned Items 22 to 30, wherein the intermediate annealing is executed in an inert gas atmosphere.

(32) The production method of an aluminum material for electrolytic capacitor electrodes as recited in any one of the aforementioned Items 16 to 31, wherein the final annealing is executed in an inert gas atmosphere.

(33) The production method of an aluminum material for electrolytic capacitor electrodes as recited in any one of the aforementioned Items 16 to 32, wherein the final annealing is executed at a temperature of not lower than 450 °C but not higher than 600 °C.

(34) An aluminum material for electrolytic capacitor electrodes produced by the production method as recited in any one of the aforementioned Items 16 to 33.

(35) The aluminum material for electrolytic capacitor electrodes as recited in the aforementioned Item 34, wherein the aluminum material is used as a medium-voltage or high-voltage anode material.

(36) A production method of an electrode material for electrolytic capacitors, comprising a step of subjecting the aluminum material produced by the production method as recited in any one of the aforementioned Items 16 to 33 to etching.

(37) The production method of an electrode material for electrolytic capacitors as recited in the aforementioned Item 36, wherein at least a part of the etching is DC electrolytic etching.

(38) The production method of an electrode material for electrolytic capacitors as recited in the aforementioned Item 37, wherein after the etching, formation of dielectric (by anodizing) is executed.

(39) An anode material for aluminum electrolytic capacitors produced by the production method as recited in the aforementioned Item 37 or 38.

(40) An aluminum electrolytic capacitor, wherein the aluminum electrode material produced by the production method as recited in any one of the aforementioned Items 36 to 38 is used as an electrode material.

(41) A production method of an aluminum material for electrolytic capacitor electrodes, comprising:

sequentially subjecting an aluminum material containing Pb not less than 0.3 mass ppm but not more than 2.5 mass ppm to hot rolling, cold rolling, intermediate annealing in an oxidizing atmosphere and finish cold rolling; further heating the aluminum material in an oxidizing atmosphere; and thereafter subjecting the aluminum material to final annealing.

(42) The production method of an aluminum material for electrolytic capacitor electrodes as recited in the aforementioned Item 41, wherein the aluminum material contains Cu not less than 10 mass ppm but not more than 150 mass ppm.

(43) The production method of an aluminum material for electrolytic capacitor electrodes as recited in the aforementioned Item 41 or 42, wherein aluminum purity of the aluminum material is 99.9 mass% or higher.

(44) The production method of an aluminum material for electrolytic capacitor electrodes as recited in any one of the aforementioned Items 41 to 43, wherein a heating temperature of the heating executed in an oxidizing atmosphere after the finish cold rolling is 50 to 400 °C.

(45) The production method of an aluminum material for electrolytic capacitor electrodes as recited in the aforementioned Item 44, wherein a heating time of the heating executed in an oxidizing atmosphere after the final cold rolling is not shorter than 3 seconds but not longer than 72 hours.

(46) The production method of an aluminum material for electrolytic capacitor electrodes as recited in any one of the aforementioned Items 41 to 45, wherein oxygen content in the oxidizing atmosphere at the time of the heating executed after the finish cold rolling is not less than 0.1 vol%.

(47) The production method of an aluminum material for electrolytic capacitor electrodes as recited in any one of the aforementioned Items 41 to 46, wherein the intermediate annealing in the oxidizing atmosphere is executed at a temperature of not lower than 200 °C but not higher than 320 °C.

(48) The production method of an aluminum material for electrolytic capacitor electrodes as recited in any one of the aforementioned Items 41 to 47,
wherein oxygen concentration in the oxidizing atmosphere for executing the intermediate annealing is not less than 0.1 vol%.

(49) The production method of an aluminum material for electrolytic capacitor electrodes as recited in any one of the aforementioned Items 41 to 48, wherein washing is executed before heating in the oxidizing atmosphere after the finish cold rolling.

(50) The production method of an aluminum material for electrolytic capacitor electrodes as recited in the aforementioned Item 49, wherein washing liquid for use in the washing is at least one of organic solvent, water containing surfactant, and a mixture of water-soluble organic solvent and water.

(51) The production method of an aluminum material for electrolytic capacitor electrodes as recited in the aforementioned Item 49, wherein washing liquid used for the washing is at least one of acid aqueous solution and alkaline aqueous solution.

(52) The production method of an aluminum material for electrolytic capacitor electrodes as recited in the aforementioned Item 49, wherein the washing is performed by sequentially executing washing with alkaline aqueous solution and washing with acid aqueous solution.

(53) The production method of an aluminum material for electrolytic capacitor electrodes as recited in the aforementioned Items 51 or 52, wherein acid in the acid aqueous solution is one or more selected from the group consisting of hydrochloric acid, sulfuric acid, nitric acid, and acid containing phosphoric acid.

(54) The production method of an aluminum material for electrolytic capacitor electrodes as recited in the aforementioned Items 51 or 52, wherein alkaline in the alkaline aqueous solution is one or more selected from the group consisting of sodium hydroxide, calcium hydroxide, potassium hydroxide, sodium orthosilicate, sodium metasilicate, sodium tertiary phosphate, and sodium carbonate.

(55) The production method of an aluminum material for electrolytic capacitor electrodes as recited in any one of the aforementioned Items 51 to 54, wherein an average removal amount of a surface layer of the aluminum material by the washing is not less than 1 nm but not more than 500 nm per one side of the aluminum material, and wherein the removal amount is defined by:

$$\text{removal amount D (nm)} = E(g/cm^2) \times 10^7/2.7(g/cm^3),$$

where E is a decreased amount per unit surface area by the washing, and $2.7 g/cm^3$ is density of the aluminum material.

(56) The production method of an aluminum material for electrolytic capacitor electrodes as recited in the aforementioned Item 50, wherein Pb concentration in the aluminum material is not less than 0.6 mass ppm but not more than 2.5 mass ppm.

(57) The production method of an aluminum material for electrolytic capacitor electrodes as recited in any one of the aforementioned Items 41 to 56, wherein the final annealing is executed in an inert gas atmosphere.

(58) The production method of an aluminum material for electrolytic capacitor electrodes as recited in any one of the aforementioned Items 41 to 57, wherein the final annealing is executed at a temperature of not lower than 450 °C but not higher than 600 °C.

(59) An aluminum material for electrolytic capacitor electrodes produced by the production method as recited in any one of the aforementioned Items 41 to 58.

(60) The aluminum material for electrolytic capacitor electrodes as recited in the aforementioned Item 59, wherein the aluminum material is used as a medium-voltage or high-voltage anode material.

(61) A production method of an electrode material for electrolytic capacitors, comprising a step of subjecting the aluminum material produced by the production method as recited in any one of the aforementioned Items 41 to 58 to etching.

(62) The production method of an electrode material for electrolytic capacitors as recited in the aforementioned Item 61, wherein at least a part of the etching is DC electrolytic etching.

(63) The production method of an electrode material for electrolytic capacitors as recited in the aforementioned Item 62, wherein after the etching, formation of dielectric (by anodizing) is executed.

(64) An anode material for aluminum electrolytic capacitors produced by the production method as recited in the aforementioned Item 62 or 63.

(65) An aluminum electrolytic capacitor, wherein the aluminum electrode material produced by the production method as recited in any one of the aforementioned Items 61 to 63 is used as an electrode material.

(66) A production method of an aluminum material for electrolytic capacitor electrodes, comprising:

subjecting an aluminum material to hot rolling and cold rolling; then
subjecting the aluminum material to intermediate annealing;
giving tensile strain to the aluminum material before initiation of final annealing but after the intermediate annealing; and
subjecting the aluminum material to final annealing to thereby produce an aluminum material for electrolytic capacitor electrodes,

wherein the aluminum material contains Pb not less than 0.3 mass ppm but not more than 2.5 mass ppm, and wherein the aluminum material is subjected to heating in an oxidizing atmosphere after giving the tensile strain but before the final annealing.

(67) The production method of an aluminum material for electrolytic capacitor electrodes as recited in the aforementioned Item 66, wherein the aluminum material contains Cu not less than 10 mass ppm but not more than 150 mass ppm.

(68) The production method of an aluminum material for electrolytic capacitor electrodes as recited in the aforementioned Item 66 or 67, wherein aluminum purity of the aluminum material is 99.9 mass% or higher.

(69) The production method of an aluminum material for electrolytic capacitor electrodes as recited in any one of the aforementioned Items 66 to 68, wherein a heating temperature in the oxidizing atmosphere is 50 to 400 °C.

(70) The production method of an aluminum material for electrolytic capacitor electrodes as recited in the aforementioned Item 69, wherein a heating time of the heating executed in an oxidizing atmosphere is not shorter than 3 seconds but not longer than 72 hours.

(71) The production method of an aluminum material for electrolytic capacitor electrodes as recited in any one of the aforementioned Items 66 to 70, wherein oxygen content in the oxidizing atmosphere is not less than 0.1 vol%.

(72) The production method of an aluminum material for electrolytic capacitor electrodes as recited in any one of the aforementioned Items 66 to 71, wherein washing is executed before heating in the oxidizing atmosphere but after giving the tensile strain.

(73) The production method of an aluminum material for electrolytic capacitor electrodes as recited in the aforementioned Item 72, wherein washing liquid for use in the washing is at least one of organic solvent, water containing surfactant, and a mixture of water-soluble organic solvent and water.

(74) The production method of an aluminum material for electrolytic capacitor electrodes as recited in the aforementioned Item 72, wherein washing liquid for use in the washing is at least one of acid aqueous solution and alkaline aqueous solution.

(75) The production method of an aluminum material for electrolytic capacitor electrodes as recited in the aforementioned Item 72, wherein the washing is performed by sequentially executing washing with alkaline aqueous solution and washing with acid aqueous solution.

(76) The production method of an aluminum material for electrolytic capacitor electrodes as recited in the aforementioned Item 74 or 75, wherein acid in the acid aqueous solution is one or more selected from the group consisting of hydrochloric acid, sulfuric acid, nitric acid, and acid containing acid containing phosphorus.

(77) The production method of an aluminum material for electrolytic capacitor electrodes as recited in the aforementioned Item 74 or 75, wherein alkaline in the alkaline aqueous solution is one or more selected from the group consisting of sodium hydroxide, calcium hydroxide, potassium hydroxide, sodium orthosilicate, sodium metasilicate, sodium tertiary phosphate, and sodium carbonate.

(78) The production method of an aluminum material for electrolytic capacitor electrodes as recited in any one of the aforementioned Items 74 to 77, wherein an average removal amount of a surface layer of the aluminum material by the washing is not less than 1 nm but not more than 500 nm per one side of the aluminum material, and wherein the removal amount is defined by:

$$\text{removal amount D (nm)} = E(g/cm^2) \times 10^7/2.7(g/cm^3),$$

where E is a decreased amount per unit surface area by the washing, and 2.7g/cm$^3$ is density of the aluminum material.

(79) The production method of an aluminum material for electrolytic capacitor electrodes as recited in any one of the aforementioned Items 66 to 72, wherein without executing washing after giving the tensile strain, heating in an oxidizing atmosphere is executed.

(80) The production method of an aluminum material for electrolytic capacitor electrodes as recited in the aforementioned Item 73 or 79, wherein Pb concentration in the aluminum material is not less than 0.6 mass ppm but not more than 2.5 mass ppm.

(81) The production method of an aluminum material for electrolytic capacitor electrodes as recited in any one of the aforementioned Items 66 to 80, wherein the final annealing is executed in an inert gas atmosphere.

(82) The production method of an aluminum material for electrolytic capacitor electrodes as recited in any one of the aforementioned Items 66 to 81, wherein the final annealing is executed at a temperature of not lower than 450 °C but not higher than 600 °C.

(83) An aluminum material for electrolytic capacitor electrodes produced by the production method as recited in any one of the aforementioned Items 66 to 82.

(84) An aluminum material for electrolytic capacitor electrodes as recited in the aforementioned Item 83, wherein the aluminum material is used as a medium-voltage or high-voltage anode material.

(85) A production method of an electrode material for electrolytic capacitors, comprising a step of subjecting the aluminum material produced by the production method as recited in any one of the aforementioned Items 66 to 82 to etching.

(86) The production method of an electrode material for electrolytic capacitors as recited in the aforementioned Item 85, wherein at least a part of the etching is DC electrolytic etching.

(87) The production method of an electrode material for electrolytic capacitors as recited in the aforementioned Item 86, wherein after the etching, formation of dielectric (by anodizing) is executed.

(88) An anode material for aluminum electrolytic capacitors produced by the production method as recited in the aforementioned Item 86 or 87.

(89) An aluminum electrolytic capacitor, wherein the aluminum electrode material produced by the production method as recited in any one of the aforementioned Items 85 to 87 is used as an electrode material.

(90) A production method of an aluminum material for electrolytic capacitor electrodes, comprising:

subjecting an aluminum material to hot rolling and cold rolling; then
subjecting the aluminum material to intermediate annealing;
giving tensile strain to the aluminum material before initiation of final annealing but after the intermediate annealing; and
subjecting the aluminum material to final annealing to thereby produce an aluminum material for electrolytic capacitor electrodes,

wherein the aluminum material contains Pb not less than 0.3 mass ppm but not more than 2.5 mass ppm,
wherein the intermediate annealing is executed in an oxidizing atmosphere, and
wherein the aluminum material is subjected to heating in an oxidizing atmosphere after giving the tensile strain but before the final annealing.

(91) The production method of an aluminum material for electrolytic capacitor electrodes as recited in the aforementioned Item 90, wherein the aluminum material contains Cu not less than 10 mass ppm but not more than 150 mass ppm.

(92) The production method of an aluminum material for electrolytic capacitor electrodes as recited in the aforementioned Item 90 or 91, wherein aluminum purity of the aluminum material is 99.9 mass% or higher.

(93) The production method of an aluminum material for electrolytic capacitor electrodes as recited in any one of the aforementioned Items 90 to 92, wherein a heating temperature of heating executed after giving tensile strain but before the final annealing in the oxidizing atmosphere is 50 to 400 °C.

(94) The production method of an aluminum material for electrolytic capacitor electrodes as recited in the aforementioned Item 93, wherein a heating time of the heating executed after giving tensile strain but before the final annealing in an oxidizing atmosphere is not shorter than 3 seconds but not longer than 72 hours.

(95) The production method of an aluminum material for electrolytic capacitor electrodes as recited in any one of the aforementioned Items 90 to 94, wherein oxygen content in the oxidizing atmosphere for the heating executed after giving tensile strain but before the final annealing is not less than 0.1 vol%.

(96) The production method of an aluminum material for electrolytic capacitor electrodes as recited in any one of the aforementioned Items 90 to 95, wherein the intermediate annealing in the oxidizing atmosphere is executed at a temperature of not lower than 200 °C but not higher than 300 °C.

(97) The production method of an aluminum material for electrolytic capacitor electrodes as recited in any one of the aforementioned Items 90 to 96, wherein oxygen content in the oxidizing atmosphere for executing the intermediate annealing is not less than 0.1 vol%.

(98) The production method of an aluminum material for electrolytic capacitor electrodes as recited in any one of the aforementioned Items 90 to 97, wherein washing is executed before heating in the oxidizing atmosphere but after giving the tensile strain.

(99) The production method of an aluminum material for electrolytic capacitor electrodes as recited in the aforementioned Item 98, wherein washing liquid for use in the washing is at least one of organic solvent, water containing surfactant, and a mixture of water-soluble organic solvent and water.

(100) The production method of an aluminum material for electrolytic capacitor electrodes as recited in the aforementioned Item 98, wherein washing liquid for use in the washing is at least one of acid aqueous solution and alkaline aqueous solution.

(101) The production method of an aluminum material for electrolytic capacitor electrodes as recited in the aforementioned Item 98, wherein the washing is performed by sequentially executing washing with alkaline aqueous solution and washing with acid aqueous solution.

(102) The production method of an aluminum material for electrolytic capacitor electrodes as recited in the aforementioned Item 100 or 101, wherein acid in the acid aqueous solution is one or more selected from the group consisting of hydrochloric acid, sulfuric acid, nitric acid, and acid containing acid containing phosphorus.

(103) The production method of an aluminum material for electrolytic capacitor electrodes as recited in the aforementioned Item 100 or 101, wherein alkaline in the alkaline aqueous solution is one or more selected from the group consisting of sodium hydroxide, calcium hydroxide, potassium hydroxide, sodium orthosilicate, sodium metasilicate, sodium tertiary phosphate, and sodium carbonate.

(104) The production method of an aluminum material for electrolytic capacitor electrodes as recited in any one of the aforementioned Items 100 to 103, wherein an average removal amount of a surface layer of the aluminum material by the washing is not less than 1 nm but not more than 500 nm per one side of the aluminum material, and wherein the removal amount is defined by:

$$\text{removal amount D (nm)} = E(g/cm^2) \times 10^7 / 2.7(g/cm^3),$$

where E is a decreased amount per unit surface area by the washing, and 2.7g/cm$^3$ is density of the aluminum material.

(105) The production method of an aluminum material for electrolytic capacitor electrodes as recited in any one of the aforementioned Items 90 to 97, wherein without executing washing after giving the tensile strain, heating in an oxidizing atmosphere is executed.

(106) The production method of an aluminum material for electrolytic capacitor electrodes as recited in the aforementioned Item 99 or 105, wherein Pb concentration in the aluminum material is not less than 0.6 mass ppm but not more than 2.5 mass ppm.

(107) The production method of an aluminum material for electrolytic capacitor electrodes as recited in any one of the aforementioned Items 90 to 106, wherein the final annealing is executed in an inert gas atmosphere.

(108) The production method of an aluminum material for electrolytic capacitor electrodes as recited in any one of the aforementioned Items 90 to 107, wherein the final annealing is executed at a temperature of not lower than 450 °C but not higher than 600 °C.

(109) An aluminum material for electrolytic capacitor electrodes produced by the production method as recited in any one of the aforementioned Items 90 to 108.

(110) An aluminum material for electrolytic capacitor electrodes as recited in the aforementioned Item 109, wherein the aluminum material is used as a medium-voltage or high-voltage anode material.

(111) A production method of an electrode material for electrolytic capacitors, comprising a step of subjecting the aluminum material produced by the production method as recited in any one of the aforementioned Items 90 to 108 to etching.

(112) The production method of an electrode material for electrolytic capacitors as recited the aforementioned Item 111, wherein at least a part of the etching is DC electrolytic etching.

(113) The production method of an electrode material for electrolytic capacitors as recited in the aforementioned Item 112, wherein after the etching, formation of dielectric (by anodizing) is executed.

(114) An anode material for aluminum electrolytic capacitors produced by the production method as recited in the aforementioned Item 112 or 113.

(115) An aluminum electrolytic capacitor, wherein the aluminum electrode material produced by the production method as recited in any one of the aforementioned Items 111 to 113 is used as an electrode material.

**EFFECTS OF THE INVENTION**

According to the invention as recited in the aforementioned Item (1), since an aluminum material subjected to evaluation etching under prescribed conditions meets either a condition that a Lab lightness index (L value) of the aluminum material measured by a prescribed method is not less than 25 but not more than 56 when a pre-treatment time is 30 seconds or a condition that the Lab lightness index is not less than 27 but not more than 58 when the pre-treatment time is 45 seconds, the property of aluminum surface layer dissolve at the time of etching is even, resulting in excellent etching characteristics, which in turn can realize an aluminum material for electrolytic capacitor electrodes with high capacitance.

According to the invention as recited in the aforementioned Item (2), since the aluminum material meets both the condition that the lightness index (L value) is not less than 25 but not more than 56 when the pre-treatment time is 30 seconds and the condition that the lightness index is not less than 27 but not more than 58 when the pre-treatment time is 45 seconds, an aluminum material for electrolytic capacitor electrodes further enhanced in etching characteristics can be provided.

According to the invention as recited in the aforementioned Item (3), an aluminummaterial for electrolytic capacitor electrodes still further enhanced in etching characteristics can be provided.

According to the invention as recited in the aforementioned Item (4), an aluminum material for electrolytic capacitor electrodes still further enhanced in etching characteristics can be provided.

According to the invention as recited in the aforementioned Item (5), an aluminummaterial for electrolytic capacitor electrodes further enhanced in etching characteristics can be provided.

According to the invention as recited in the aforementioned Item (6), an aluminum material for electrolytic capacitor electrodes still further enhanced in etching characteristics can be provided.

According to the invention as recited in the aforementioned Item (7), since the aluminum material includes Cu not less than 10 mass ppm but not more than 150 mass ppm, an aluminum material for electrolytic capacitor electrodes further enhanced in etching characteristics can be provided.

According to the invention as recited in the aforementioned Item (8), an aluminummaterial for electrolytic capacitor electrodes still further enhanced in etching characteristics can be provided.

According to the invention as recited in the aforementioned Item (9), since aluminum purity of the aluminum material is 99.9 mass% or higher, deterioration of etching characteristics due to impurities can be prevented.

According to the invention as recited in the aforementioned Item (10), a medium-voltage or high-voltage anode material excellent in etching characteristics can be provided.

According to the invention as recited in the aforementioned Item (11), an electrode material for electrolytic capacitors high in capacitance can be provided by etching.

According to the invention as recited in the aforementioned Item (12), since at least a part of the etching is executed by DC electrolytic etching, an electrode material for electrolytic capacitors with high capacitance in which a number of deep and large-diameter tunnel-like pits are formed can be provided.

According to the invention as recited in the aforementioned Item (13), since after the etching, formation of dielectric (by anodizing) is executed, an electrode material for electrolytic capacitors preferably used for anode materials can be provided.

According to the invention as recited in the aforementioned Item (14), an electrode material for electrolytic capacitors with high capacitance can be provided.

According to the invention as recited in the aforementioned Item (15), an aluminum electrolytic capacitor with high capacitance can be provided.

According to the invention as recited in the aforementioned Item (16), since an aluminum material containing Pb not less than 0. 3 mass ppm but not more than 2. 5 mass ppm is heated in an oxidizing atmosphere after completion of cold rolling and thereafter the aluminum material is subjected to final annealing, an aluminum material for electrolytic capacitor electrodes with property of homogeneous aluminum surface dissolve at the time of etching and excellent in etching characteristics can be obtained.

According to the invention as recited in the aforementioned Item (17), since the aluminum material includes Cu not less than 10 mass ppm but not more than 150 mass ppm, an aluminum material for electrolytic capacitor electrodes excellent in etching characteristics can be provided.

According to the invention as recited in the aforementioned Item (18), since aluminum purity of the aluminum material is 99.9 mass% or higher, deterioration of etching characteristics due to impurities can be prevented.

According to the invention as recited in the aforementioned Item (19), since a heating temperature in the oxidizing atmosphere is 50 to 400 °C, the property of the aluminum surface layer dissolve at the time of etching the aluminummaterial after the final annealing become even.

According to the invention as recited in the aforementioned Item (20), since a heating time in the oxidizing atmosphere is not shorter than 3 seconds but not longer than 72 hours, the properties of the aluminum surface layer dissolve at the time of etching the aluminum material after the final annealing become even.

According to the invention as recited in the aforementioned Item (21), since oxygen concentration in the oxidizing atmosphere during the heating is not less than 0.1 vol%, the properties of the aluminum surface layer dissolve at the time of etching the aluminum material after the final annealing become even.

According to the invention as recited in the aforementioned Item (22), since the aluminum material sequentially subjected to intermediate annealing and finish cold rolling is subjected to heating in an oxidizing atmosphere and then to final annealing, an aluminum material for electrolytic capacitor electrodes with property of homogeneous aluminum surface layer dissolve at the time of etching and excellent in etching characteristics can be provided.

According to the invention as recited in the aforementioned Item (23), since before the heating in the oxidizing atmosphere but after completion of the cold rolling, washing is performed, the surface can be cleaned, resulting in an aluminum material for electrolytic capacitor electrodes further enhanced in etching characteristics.

According to the invention as recited in the aforementioned Item (24), since washing liquid for use in the washing is at least one of organic solvent, water containing surfactant, and a mixture of water-soluble organic solvent and water, washing can be performed assuredly.

According to the invention as recited in the aforementioned Item (25), since washing liquid for use in the washing is at least one of acid aqueous solution and alkaline aqueous solution, washing can be preformed more assuredly.

According to the invention as recited in the aforementioned Item (26), since the washing is performed by sequentially executing washing with alkaline aqueous solution and washing with acid aqueous solution, washing can be preformed more assuredly.

According to the invention as recited in the aforementioned Item (27), since acid in the acid aqueous solution is one or more selected from the group consisting of hydrochloric acid, sulfuric acid, nitric acid, and acid containing acid containing phosphorus, washing can be preformed more assuredly.

According to the invention as recited in the aforementioned Item (28), since alkaline in the alkaline aqueous solution is one or more selected from the group consisting of sodium hydroxide, calcium hydroxide, potassium hydroxide, sodium orthosilicate, sodium metasilicate, sodium tertiary phosphate, and sodium carbonate, washing can be preformed more assuredly.

According to the invention as recited in the aforementioned Item (29), since an average removal amount of a surface layer of the aluminum material by the washing is not less than 1 nm but not more than 500 nm per one side of the aluminum material, the property of the aluminum surface layer dissolve at the time of etching the aluminum material after the final annealing become even.

According to the invention as recited in the aforementioned Item (30), since Pb concentration in the aluminum material is not less than 0. 6 mass ppm but not more than 2. 5 mass ppm in cases where washing is performed using at least one of organic solvent, water containing surfactant, and a mixture of water-soluble organic solvent and water as washing liquid for use in the washing to be executed before heating in an oxidizing atmosphere but after the final cold rolling, the property of the aluminum surface layer dissolve at the time of etching the aluminum material after the final annealing become even.

According to the invention as recited in the aforementioned Item (31), since the intermediate annealing is executed in an inert gas atmosphere, it becomes possible to prevent the thickness of an oxide film from unnecessarily increasing, resulting in an aluminum material for electrolytic capacitors excellent in etching characteristis.

According to the invention as recited in the aforementioned Item (32), since the final annealing is executed in an inert gas atmosphere, it becomes possible to prevent the thickness of an oxide film from unnecessarily increasing, resulting in an aluminum material for electrolytic capacitors excellent in etching characteristis.

According to the invention as recited in the aforementioned Item (33), since the final annealing is executed at a temperature of not lower than 450 °C but not higher than 600 °C, an aluminum in which etching pits can be formed evenly can be provided.

According to the invention as recited in the aforementioned Item (34), an aluminum material for electrolytic capacitors excellent in etching characteristics can be provided.

According to the invention as recited in the aforementioned Item (35), an aluminum material preferably used as a medium-voltage or high-voltage anode material can be provided.

According to the invention as recited in the aforementioned Item (36), an electrode material for electrolytic capacitors with high capacitance can be produced by executing etching treatment.

According to the invention as recited in the aforementioned Item (37), a number of deep and large tunnel-like pits can be formed by performing DC electrolytic etching as at least a part of the etching, and the effects of heating in an oxidizing atmosphere after completion of the cold rolling but before the final annealing can be exerted effectively.

According to the invention as recited in the aforementioned Item (38), since after the etching, formation of dielectric (by anodizing) is executed, an electrode material for electrolytic capacitors preferably used as an anode material can be provided.

According to the invention as recited in the aforementioned Item (39), an anode material for electrolytic capacitors with high capacitance can be provided.

According to the invention as recited in the aforementioned Item (40), an aluminum electrolytic capacitor with high capacitance can be provided.

According to the invention as recited in the aforementioned Item (41), since an aluminum material containing Pb not less than 0. 3 mass ppm but not more than 2. 5 mass ppm is sequentially subjected to hot rolling, cold rolling, intermediate annealing in an oxidizing atmosphere and finish cold rolling, and the aluminum is further subjected to heating in an oxidizing atmosphere, and thereafter the aluminum material is subjected to final annealing, an aluminum material for electrolytic capacitor electrodes with property of homogeneous aluminum surface layer dissolve at the time of etching and excellent in etching characteristics can be provided.

According to the invention as recited in the aforementioned Item (42), since the aluminum material contains Cu not less than 10 mass ppm but not more than 150 mass ppm, an aluminum material for electrolytic capacitor electrodes excellent in etching characteristics can be provided.

According to the invention as recited in the aforementioned Item (43), since aluminum purity of the aluminum material is 99.9 mass% or higher, deterioration of etching characteristics due to impurities can be prevented.

According to the invention as recited in the aforementioned Item (44), since a heating temperature of the heating executed in an oxidizing atmosphere after the finish cold rolling is 50 to 400 °C, the property of the aluminum surface layer dissolve at the time of etching the aluminum material after the final annealing become even.

According to the invention as recited in the aforementioned Item (45), since a heating time of the heating executed in an oxidizing atmosphere after the final cold rolling is not shorter than 3 seconds but not longer than 72 hours, the property of the aluminum surface layer dissolve at the time of etching the aluminum material after the final annealing become even.

According to the invention as recited in the aforementioned Item (46), since oxygen content in the oxidizing atmosphere executed after the finish cold rolling is not less than 0. 1 vol%, the property of the aluminum surface layer dissolve at the time of etching the aluminum material after the final annealing become even.

According to the invention as recited in the aforementioned Item (47), since the intermediate annealing in the oxidizing atmosphere is executed at a temperature of not lower than 200 °C but not higher than 320 °C, the property of the aluminum surface layer dissolve at the time of etching the aluminum material after the final annealing become even.

According to the invention as recited in the aforementioned Item (48), since oxygen concentration in the oxidizing atmosphere for executing the intermediate annealing is not less than 0.1 vol%, the property of the aluminum surface layer dissolve at the time of etching the aluminum material after the final annealing become even.

According to the invention as recited in the aforementioned Item (49), since washing is executed before heating in the oxidizing atmosphere but after the finish cold rolling, the surface can be cleaned, resulting in an aluminum material for electrolytic capacitor electrodes further enhanced in etching characteristics.

According to the invention as recited in the aforementioned Item (50), since washing liquid for use in the washing is at least one of organic solvent, water containing surfactant, and a mixture of water-soluble organic solvent and water, washing can be performed assuredly.

According to the invention as recited in the aforementioned Item (51), since washing liquid for use in the washing is at least one of acid aqueous solution and alkaline aqueous solution, washing can be preformed more assuredly.

According to the invention as recited in the aforementioned Item (52), since the washing is performed by sequentially executing washing with alkaline aqueous solution and washing with acid aqueous solution, washing can be preformed more assuredly.

According to the invention as recited in the aforementioned Item (53), since acid in the acid aqueous solution is one or more selected from the group consisting of hydrochloric acid, sulfuric acid, nitric acid, and acid containing acid containing phosphorus, washing can be preformed more assuredly.

According to the invention as recited in the aforementioned Item (54), since alkaline in the alkaline aqueous solution is one or more selected from the group consisting of sodium hydroxide, calcium hydroxide, potassium hydroxide, sodium orthosilicate, sodium metasilicate, sodium tertiary phosphate, and sodium carbonate, washing can be preformed more assuredly.

According to the invention as recited in the aforementioned Item (55), since an average removal amount of a surface layer of the aluminum material by the washing is not less than 1 nm but not more than 500 nm per one side of the aluminum material, the property of the aluminum surface layer dissolve at the time of etching the aluminum material after the final annealing become even.

According to the invention as recited in the aforementioned Item (56), since Pb concentration in the aluminum material is not less than 0. 6 mass ppm but not more than 2. 5 mass ppm in cases where washing is performed using at least one of organic solvent, water containing surfactant, and a mixture of water-soluble organic solvent and water as washing liquid for use in the washing to be executed before heating in an oxidizing atmosphere but after the final cold rolling, the property of the aluminum surface layer dissolve at the time of etching the aluminum material after the final annealing become even.

According to the invention as recited in the aforementioned Item (57), since the final annealing is executed in an inert gas atmosphere, it becomes possible to prevent the thickness of an oxide film from unnecessarily increasing, resulting in an aluminum material for electrolytic capacitors excellent in etching characteristics.

According to the invention as recited in the aforementioned Item (58), since the final annealing is executed at a temperature of not lower than 450 °C but not higher than 600 °C, an aluminum in which etching pits can be formed evenly can be provided.

According to the invention as recited in the aforementioned Item (59), an aluminum material for electrolytic capacitors excellent in etching characteristics can be provided.

According to the invention as recited in the aforementioned Item (60), an aluminum material preferably used as a medium-voltage or high-voltage anode material can be provided.

According to the invention as recited in the aforementioned Item (61), an electrode material for electrolytic capacitors with high capacitance can be produced by executing etching treatment.

According to the invention as recited in the aforementioned Item (62), a number of deep and large tunnel-like pits can be formed by performing DC electrolytic etching as at least a part of the etching, and the effects of the intermediate annealing in the oxidizing atmosphere and heating in an oxidizing atmosphere to be executed after completion of the cold rolling but before the final annealing can be exerted effectively.

According to the invention as recited in the aforementioned Item (63), since after the etching, formation of dielectric (by anodizing) is executed, an electrode material for electrolytic capacitors preferably used as an anode material can be provided.

According to the invention as recited in the aforementioned Item (64), an anode material for aluminum electrolytic capacitors with high capacitance can be provided.

According to the invention as recited in the aforementioned Item (65), an aluminum electrolytic capacitor with high capacitance can be provided.

According to the invention as recited in the aforementioned Item (66), in producing an aluminum material for electrolytic capacitor electrodes by subjecting an aluminum material to hot rolling and cold rolling, then subjecting the aluminum material to intermediate annealing, giving tensile strain to the aluminum material before initiation of final annealing but after the intermediate annealing, and subjecting the aluminum material to final annealing to thereby produce an aluminum material for electrolytic capacitor electrodes, since the aluminum material contains Pb not less than 0.3 mass ppm but not more than 2.5 mass ppm, and the aluminum material is subjected to heating in an oxidizing atmosphere after giving the tensile strain but before the final annealing, an aluminum material for electrolytic capacitor electrodes with property of homogeneous aluminum surface layer dissolve at the time of etching and excellent in etching characteristics can be provided.

According to the invention as recited in the aforementioned Item (67), since the aluminum material contains Cu not less than 10 mass ppm but not more than 150 mass ppm, an aluminum material for electrolytic capacitor electrodes excellent in etching characteristics can be provided.

According to the invention as recited in the aforementioned Item (68), since aluminum purity of the aluminum material is 99.9 mass% or higher, deterioration of etching characteristics due to impurities can be prevented.

According to the invention as recited in the aforementioned Item (69), since a heating temperature of the heating executed in an oxidizing atmosphere is 50 to 400 °C, the property of the aluminum surface layer dissolve at the time of etching the aluminum material after the final annealing become even.

According to the invention as recited in the aforementioned Item (70), since a heating time of the heating executed in an oxidizing atmosphere is not shorter than 3 seconds but not longer than 72 hours, the property of the aluminum surface layer dissolve at the time of etching the aluminum material after the final annealing become even.

According to the invention as recited in the aforementioned Item (71), since oxygen content in the oxidizing atmosphere is not less than 0.1vol%, the property of the aluminum surface layer dissolve at the time of etching the aluminummaterial after the final annealing become even.

According to the invention as recited in the aforementioned Item (72), since washing is executed before heating in the oxidizing atmosphere but after giving tensile strain, the surface can be cleaned, resulting in an aluminum material for electrolytic capacitor electrodes further enhanced in etching characteristics.

According to the invention as recited in the aforementioned Item (73), since washing liquid for use in the washing is at least one of organic solvent, water containing surfactant, and a mixture of water-soluble organic solvent and water, washing can be performed assuredly.

According to the invention as recited in the aforementioned Item (74), since washing liquid for use in the washing is at least one of acid aqueous solution and alkaline aqueous solution, washing can be preformed more assuredly.

According to the invention as recited in the aforementioned Item (75), since the washing is performed by sequentially executing washing with alkaline aqueous solution and washing with acid aqueous solution, washing can be preformed more assuredly.

According to the invention as recited in the aforementioned Item (76), since acid in the acid aqueous solution is one or more selected from the group consisting of hydrochloric acid, sulfuric acid, nitric acid, and acid containing acid containing phosphorus, washing can be preformed more assuredly.

According to the invention as recited in the aforementioned Item (77), since alkaline in the alkaline acid aqueous solution is one or more selected from the group consisting of sodium hydroxide, calcium hydroxide, potassium hydroxide, sodium orthosilicate, sodium metasilicate, sodium tertiaryphosphate, and sodium carbonate, washing can be preformed more assuredly.

According to the invention as recited in the aforementioned Item (78), since an average removal amount of a surface layer of the aluminum material by the washing is not less than 1 nm but not more than 500 nm per one side of the aluminum material, the property of the aluminum surface layer dissolve at the time of etching the aluminum material after the final annealing become even.

According to the invention as recited in the aforementioned Item (79), even if washing is not performed before heating in an oxidizing atmosphere after giving tensile strain, since a large amount of oil will not be adhered after giving tensile strain, an aluminum material for electrolytic capacitor electrodes excellent in etching characteristics can be provided.

According to the invention as recited in the aforementioned Item (80), in cases where washing is not performed before heating in an oxidizing atmosphere after giving tensile strain or in cases where washing is performed before heating in an oxidizing atmosphere after giving tensile strain using at least one of organic solvent, water containing surfactant, and a mixture of water-soluble organic solvent and water as washing liquid, since Pb concentration in the aluminum material is not less than 0.6 mass ppm but not more than 2.5 mass ppm, the property of the aluminum surface layer dissolve at the time of etching the aluminum material after the final annealing become even.

According to the invention as recited in the aforementioned Item (81), since the final annealing is executed in an inert gas atmosphere, it becomes possible to prevent the thickness of an oxide film from unnecessarily increasing, resulting in an aluminum material for electrolytic capacitors.

According to the invention as recited in the aforementioned Item (82), since the final annealing is executed at a temperature of not lower than 450 °C but not higher than 600 °C, an aluminum in which etching pits can be formed evenly can be provided.

According to the invention as recited in the aforementioned Item (83), an aluminum material for electrolytic capacitors excellent in etching characteristics can be provided.

According to the invention as recited in the aforementioned Item (84), an aluminum material preferably used as a medium-voltage or high-voltage anode material can be provided.

According to the invention as recited in the aforementioned Item (85), an electrode material for electrolytic capacitors with high capacitance can be produced by executing etching treatment.

According to the invention as recited in the aforementioned Item (86), a number of deep and large tunnel-like pits can be formed by performing DC electrolytic etching as at least a part of the etching, and the effects of the heating to be executed in an oxidizing atmosphere after giving tensile strain but before the final annealing in the oxidizing atmosphere can be exerted effectively.

According to the invention as recited in the aforementioned Item (87), since after the etching, formation of dielectric (by anodizing) is executed, an electrode material for electrolytic capacitors preferably used as an anode material can be provided.

According to the invention as recited in the aforementioned Item (88), an aluminum electrode material for electrolytic capacitors with high capacitance can be provided.

According to the invention as recited in the aforementioned Item (89), an aluminum electrolytic capacitor with high capacitance can be provided.

According to the invention as recited in the aforementioned Item (90), in producing an aluminum material for electrolytic capacitor electrodes by subjecting an aluminum material to hot rolling and cold rolling, then subjecting the aluminum material to intermediate annealing, giving tensile strain to the aluminum material before initiation of final annealing but after the intermediate annealing, and subjecting the aluminum material to final annealing to thereby produce an aluminum material for electrolytic capacitor electrodes, since the aluminum material contains Pb not less than 0.3 mass ppm but not more than 2.5 mass ppm, and the aluminummaterial is subjected to intermediate annealing in an oxidizing atmosphere and heating in an oxidizing atmosphere after giving the tensile strain but before the final annealing, an aluminum material for electrolytic capacitor electrodes with property of homogeneous aluminum surface layer dissolve at the time of etching and excellent in etching characteristics can be provided.

According to the invention as recited in the aforementioned Item (91), since the aluminum material contains Cu not less than 10 mass ppm but not more than 150 mass ppm, an aluminum material for electrolytic capacitor electrodes excellent in etching characteristics can be provided.

According to the invention as recited in the aforementioned Item (92), since aluminum purity of the aluminum material is 99.9 mass% or higher, deterioration of etching characteristics due to impurities can be prevented.

According to the invention as recited in the aforementioned Item (93), since a heating temperature of the heating executed in an oxidizing atmosphere after giving tensile strength but before the final annealing is 50 to 400 °C, the property of the aluminum surface layer dissolve at the time of etching the aluminum material after the final annealing become even.

According to the invention as recited in the aforementioned Item (94), since a heating time of the heating executed in an oxidizing atmosphere after giving tensile strength but before the final annealing is not shorter than 3 seconds but not longer than 72 hours, the property of the aluminum surface layer dissolve at the time of etching the aluminum material after the final annealing become even.

According to the invention as recited in the aforementioned Item (95), since oxygen content in the oxidizing atmosphere at the time of heating executed after giving tensile strength but before the final annealing is not less than 0.1 vol%, the property of the aluminum surface layer dissolve at the time of etching the aluminum material after the final annealing become even.

According to the invention as recited in the aforementioned Item (96), since the intermediate annealing in an oxidizing atmosphere is executed at a temperature of not lower than 200 °C but not higher than 300 °C, an aluminum material for electrolytic capacitor electrodes with property of homogeneous aluminum surface layer dissolve at the time of etching and excellent in etching characteristics can be provided.

According to the invention as recited in the aforementioned Item (97), since oxygen content in the oxidizing atmosphere for executing the intermediate annealing is not less than 0.1 vol%, the property of the aluminum surface layer dissolve at the time of etching the aluminum material after the final annealing become even.

According to the invention as recited in the aforementioned Item (98), since washing is executed before heating in the oxidizing atmosphere but after giving tensile strain, the surface can be cleaned, resulting in an aluminum material for electrolytic capacitor electrodes further enhanced in etching characteristics.

According to the invention as recited in the aforementioned Item (99), since washing liquid for use in the washing is at least one of organic solvent, water containing surfactant, and a mixture of water-soluble organic solvent and water, washing can be performed assuredly.

According to the invention as recited in the aforementioned Item (100), since washing liquid for use in the washing is at least one of acid aqueous solution and alkaline aqueous solution, washing can be preformed more assuredly.

According to the invention as recited in the aforementioned Item (101), since the washing is performed by sequentially executing washing with alkaline aqueous solution and washing with acid aqueous solution, washing can be preformed more assuredly.

According to the invention as recited in the aforementioned Item (102), since acid in the acid aqueous solution is one or more selected from the group consisting of hydrochloric acid, sulfuric acid, nitric acid, and acid containing acid containing phosphorus, washing can be preformed more assuredly.

According to the invention as recited in the aforementioned Item (103), since alkaline in the alkaline acid aqueous solution is one or more selected from the group consisting of sodium hydroxide, calcium hydroxide, potassium hydroxide, sodium orthosilicate, sodium metasilicate, sodium tertiary phosphate, and sodium carbonate, washing can be preformed more assuredly.

According to the invention as recited in the aforementioned Item (104), since an average removal amount of a surface layer of the aluminum material by the washing is not less than 1 nm but not more than 500 nm per one side of the aluminum material, the property of the aluminum surface layer dissolve at the time of etching the aluminum material after the final annealing become even.

According to the invention as recited in the aforementioned Item (105), even if washing is not performed before heating in an oxidizing atmosphere after giving tensile strain, since a large amount of oil will not be adhered after giving tensile strain, an aluminum material for electrolytic capacitor electrodes excellent in etching characteristics.

According to the invention as recited in the aforementioned Item (106), in cases where washing is not performed before heating in an oxidizing atmosphere after giving tensile strain or in cases where washing is performed before heating in an oxidizing atmosphere after giving tensile strain using at least one of organic solvent, water containing surfactant, and a mixture of water-soluble organic solvent and water as washing liquid, since Pb concentration in the aluminum material is not less than 0.6 mass ppm but not more than 2.5 mass ppm, the property of the aluminum surface layer dissolve at the time of etching the aluminum material after the final annealing become even.

According to the invention as recited in the aforementioned Item (107), since the final annealing is executed in an inert gas atmosphere, it becomes possible to prevent the thickness of an oxide film from unnecessarily increasing, resulting in an aluminum material for electrolytic capacitors excellent in etching characteristics.

According to the invention as recited in the aforementioned Item (108), since the final annealing is executed at a temperature of not lower than 450 °C but not higher than 600 °C, an aluminum in which etching pits can be formed evenly can be provided.

According to the invention as recited in the aforementioned Item (109), an aluminum material for electrolytic capacitors excellent in etching characteristics can be provided.

According to the invention as recited in the aforementioned Item (110), an aluminum material preferably used as a medium-voltage or high-voltage anode material can be provided.

According to the invention as recited in the aforementioned Item (111), an electrode material for electrolytic capacitors with high capacitance can be produced by executing etching treatment.

According to the invention as recited in the aforementioned Item (112), a number of deep and large tunnel-like pits can be formed by performing DC electrolytic etching as at least a part of the etching, and the effects of the intermediate annealing in the oxidizing atmosphere and heating in an oxidizing atmosphere executed after giving tensile strain but before the final annealing in the oxidizing atmosphere can be exerted effectively.

According to the invention as recited in the aforementioned Item (113), since after the etching, formation of dielectric (by anodizing) is executed, an electrode material for electrolytic capacitors preferably used as an anode material can be provided.

According to the invention as recited in the aforementioned Item (114), an aluminum electrode material for electrolytic capacitors with high capacitance can be provided.

According to the invention as recited in the aforementioned Item (115), an aluminum electrolytic capacitor with high capacitance can be provided.

## BRIEF DESCRIPTION OF THE DRAWING

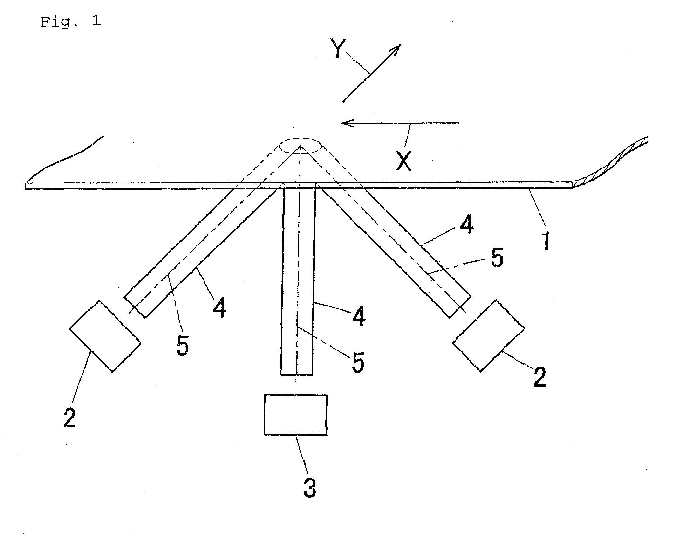

[FIG. 1] is a perspective view for explaining disposing conditions of an L value measuring sample.

## BEST MODE FOR CARRYING OUT THE INVENTON

[FIRST EMBODIMENT]

The present inventors have found the following facts. In an aluminum material for electrolytic capacitor electrodes, if Pb content of an aluminum material is not less than 0.3 mass ppm but not more than 2.5 mass ppm and that a light index (L value) of a foil obtained by immersing an aluminum material in an acid fluid after final annealing for a prescribed time as a pre-treatment and then subjected it to electrolytic etching (evaluation etching) for a short time falls within a prescribed range, the capacitance of the aluminum material can be increased by sequentially subjecting it to pre-treatment, first eching (formation of tunnel-like pits by electrolytic etching), second etching (processing for increasing the diameter of a tunnel-like pit) and formation of dielectric (by anodizing) if necessary.

The L value of the foil to which the aforementioned evaluation etching was executed can be used as an evaluation method of an aluminum to which final annealing was executed. The low L value of the aluminum material after the evaluation etching means less etching pit generation or partially concentrated etching pits. If the L value is excessively large, the surface dissolve of the aluminum material takes precedence over pit generation. Accordingly, if the L value is too small, the pit dispersity deteriorates. If too large, the surface dissolution causes loss of aluminum material. Therefore, the present inventors studied evaluation etching conditions for evaluating the etching pit dispersity and the surface solubility and have found an appropriate L value range for increasing the capacitance.

The inventors also have found that capacitance can be further increased by appropriately controlling the dissolved amount of the aluminum material at the time of the electrolytic etching and the Cu concentration which affects initial pit generation.

Hereinafter, an aluminum material for electrolytic capacitors will be detailed.

The purity of the aluminum material is not specifically limited so long as it falls within a range in which an electrolytic capacitor electrode can be used. It is preferable that the aluminum material is 99.9 mass% or higher in purity, more preferably 99.95 mass% or higher in purity. In this invention, for descriptive purposes, aluminum purity of an aluminum material will be defined as a value obtained by subtracting a total concentration (mass%) of Fe, Si and Cu from 100 mass%.

Pb segregates in an aluminum material surface layer at the time of executing final annealing, which heavily affects etching pit generation. In creating tunnel-like etching pits by a DC etching method, if the Pb concentration is too low, the etching pit dispersity deteriorates, and if the Pb concentration is too high, the surface dissolved amount of the aluminum material increases. In the present invention, in order to exert improving effects of etching characteristics by heating an aluminum material in an oxidizing atmosphere, the Pb content is regulated to not less than 0.3 mass ppm but not more than 2.5 mass ppm. The Pb content is preferably not less than 0.4 mass ppm but not more than 1.8 mapp ppm, more preferably 0.5 mass ppm but not more than 1.2 mass ppm.

Furthermore, it is preferable that Cu not less than 10 mass ppm but not more than 150 mass ppm is contained to further improve the dispersity of etching pits. If the Cu content is less than 10 mass ppm, the dispersity of etching pits may become insufficient. If it exceeds 150 mass ppm, the dissolved decreased amount of the aluminum material during the electrolytic etching increases, which may cause deterioration of capacitance. It is more preferable that the Cu content is not less than 15 mass ppm but not more than 100 mass ppm.

The evaluation etching and the L value measurement of the aluminummaterial after the final annealing are preformed as follows.

As a pre-treatment, an aluminum material is immersed in a phosphoric aqueous solution 50 °C in temperature and 2 mol/L in concentration for 30 seconds or 45 seconds and then washed, and subjected to DC electrolytic etching in the following electrolytic solution at the current density of 0.4 A/cm$^2$ for 3 seconds, washing with water, and drying to obtain an L value measuring aluminum material.

Electrolytic solution composition: hydrochloric acid 1.0 mol/L, sulfuric acid 2. 7 mol/L, aluminum sulfate 1.0 mol/L (Aluminum sulfate is added as hydrate)

Electrolytic solution temperature: 82 °C

Carbon electrodes as opposed electrodes are disposed at both sides of the aluminum material at a distance of 17 mm to execute double-sided etching (current density is a value per projected area of the aluminum material). The projected area of the aluminum material is the same as a cross-sectional area of the thickness intermediate portion of the aluminum material cut in parallel with the surface of the aluminum material.

Next, the Lab Light Index (L value) of the L value measuring aluminum material to which the evaluation etching was executed is measured by the following method.

Optical Condition: 45-n (Condition "a" described in JIS Z 8722 5.3.1)

Measurement Condition: C light 2° visual field

Specimen Arrangement Condition: Measurement is performed in a state in which the aluminum material 1 as a specimen is disposed with the rolling direction X of the specimen (aluminum material 1) perpendicularly intersecting with the normal line Y of the central optical path 5 of a bundle of rays 4 and contained on a specimen surface. In Fig. 1, "2" denotes a light source (light-emitting portion) for illuminating the specimen 1 with a bundle of rays, and "3" denotes a light receiving portion for receiving a reflected light from the specimen 1.

The Hunter color difference, i.e., the Lab color difference (ΔE) can be calculated by the following formula:

$$\Delta E = [\,(\Delta a)^2 + (\Delta b)^2 + (\Delta L)^2\,]^{1/2},$$

where Δa, Δb, and ΔL are a difference between 2 colors a, b and L, respectively.

The relation between L, a, b and tristimulus values X, Y, Z is as follows:

$$L = 10 Y^{1/2}$$

$$a = 17.5(1.02X - Y)/Y^{1/2}$$

$$b = 70.(Y - 0.847Z)/Y^{1/2}$$

In the present invention, the lightness index (L value) of the aluminum material after the aforementioned evaluation etching is defined as a value meeting either a value not less than 25 but not more than 56 when the pre-treatment time is 30 seconds or a value not less than 27 but not more than 58 when the pre-treatment time is 45 seconds. In the case where the pre-treatment time is 30 seconds, if the L value is less than 25, the etching pit dispersity deteriorates. If it exceeds 56, the surface dissolve increases, resulting in less etching pits, which in turn results in poor area increasing effects after the secondary etching. Thus, the capacitance decreases. The L value is defined as mentioned above when the pre-treatment time is 45 seconds because of the same reasons as in the case where the pre-treatment is 30 seconds. If the L value meets both the condition that the L value is not less than 25 but not more than 56 when the pre-treatment time is 30 seconds and the condition that the L value is not less than 27 but not more than 58 when the pre-treatment time is 45 seconds, the capacitance can be further increased, which is preferable.

When the pre-treatment time is 30 seconds, the preferable range of the L value is not less than 30 but not more than 53, more preferably not less than 33 but not more than 45.

When the pre-treatment time is 45 seconds, the preferable range of the L value is not less than 30 but not more than 55, more preferably not less than 40 but not more than 53.

Furthermore, it is preferable that the L value meets both the condition that the L value is not less than 30 but not more than 53 when the pre-treatment time is 30 seconds and the condition that the L value is not less than 30 but not more than 55 when the pre-treatment time is 45 seconds. It is more preferable that the L value meets both the condition that the L value is not less than 33 but not more than 45 when the pre-treatment time is 30 seconds and the condition that the L value is not less than 40 but not more than 53 when the pre-treatment time is 45 seconds.

Hereinafter, an embodiment of a production method of an aluminum material for electrolytic capacitor electrodes will be explained.

As an example of the production method, an embodiment in which a dissolution component adjustment of an aluminum material and slab casting, hot rolling, cold rolling, cold rolling including finish cold rolling (low reduction rolling), and final annealing are executed sequentially, and then heating is executed in an oxidizing atmosphere after the cold rolling but before the final annealing can be exemplified. It is preferable to execute washing after completion of the cold rolling but before the heating in the oxidizing atmosphere. During the cold rolling steps, for the purpose of increasing the area fraction of cube orientation after the final annealing, intermediate annealing can be executed if necessary. In place of the finish cold rolling, tensile strain can be given. A method of giving tensile strain is not specifically limited, and can be, for example, a method disclosed in WO 2004/003248A1.

A washing liquid used for washing the aluminum material can be organic solvent, water containing surfactant, alkaline aqueous solution or acid aqueous solution. Furthermore, a mixture of a water soluble organic solvent and water can also be used.

In the case of removing the aluminum material surface layer by washing, at least one of alkaline aqueous solution and acid aqueous solution can be used. Either one of them can be used. After executing using alkaline aqueous solution, washing can be executed using acid aqueous solution.

The organic solvent for use in the washing is not specifically limited. As examples, alcohol, diol, aromatic hydrocarbon such as, e.g., toluene, xylene, alkane series of hydrocarbons, cyclohexane, ketone, ether, ester, and petroleum products can be exemplified.

As examples of the aforementioned alcohol, methanol ($CH_3oH$), ethanol ($C_2H_5OH$), 1- propanol ($CH_3CH_2CH_2OH$), 2-propanol ($CH_3CH(OH)CH_3$), 1-butanol ($CH_3CH_2CH_2CH_2OH$), 2-butanol ($CH_3CH_2CH(OH)CH_3$), 1-pentanol ($CH_3CH_2CH_2CH_2 CH_2OH$), and 2-pentanol ($CH_3CH_2CH_2CH (OH) CH_3$) can be exemplified. It is preferable that the alcohol is represented by $C_nH_{2n+1}OH$ (n=1-10: natural number). Alicyclic compounds, such as, e.g., cyclohexanol, can also be used.

As examples of the aforementioned diol, 1, 2-ethanediol ($HOCH_2CH_2OH$), 1, 2-propanediol ($CH_3CH(OH) CH_2OH$), and 1, 3-propanediol ($HOCH_2CH_2CH_2OH$) can be exemplified.

As examples of the aforementioned alkane hydrocarbon, pentane ($C_5H_{12}$), hexane ($C_6H_{14}$), heptane ($C_7H_{16}$), octane ($C_8H_{18}$), nonane ($C_9H_{20}$), and decane ($C_{10}H_{22}$) can be exemplified. It is preferable that the alkane hydrocarbon is represented by $C_nH_{2n+2}$ (n=5-15: natural number). Alicyclic hydrocarbon, such as, e.g., cyclohexane, can also be used.

As examples of the aforementioned ketone, acetone ($CH_3COCH_3$), 2- butanone ($CH_3COC_2H_5$), 3-pentanone ($CH_3CH_2COCH_2CH_3$), and 3-methyl-2-butanone ($CH_3COCH(CH_3)H_2$) can be exemplified. It is preferable that the ketone is represented by R1COR2(R1 and R2: aliphatic hydrocarbon group, the total of carbon number of R1 and R2 is 8 or less). Cyclic ketone, such as, e. g. , cyclohexane ($C_6H_{10}O$), can be used.

As examples of the aforementioned ether, a substance represented by R1-O-R2 (R1 and R2: aliphatic hydrocarbon group, the total of carbon number of R1 and R2 is 8 or less), and glycol ether, such as, e.g., 2- methoxyethanol ($CH_3OCH_2CH_2OH$), 2-ethoxyethanol ($CH_3CH_2OCH_2CH_2OH$), 2- butoxyethanol ($CH_3CH_2CH_2 CH_2OCH_2CH_2OH$), 2- (2-ethoxy) ethoxyethanol ($CH_3CH_2OCH_2CH_2O CH_2CH_2OH$), can be exemplified.

As examples of the aforementioned ester, acetate ester represented by $CH_3COOR$ (R: aliphatic hydrocarbon group with carbon number 1-5) can be exemplified.

As examples of the aforementioned petroleum products, industrial gasoline (JIS K 2201), automobile gasoline (JIS K 2202), aviation gasoline (JIS K 2206), kerosene (JIS K 2203), diesel oil (JIS K 2204), petroleum ether (JIS K 8593), petroleum benzin (JIS K 8594), ligroin (JIS K 8937), and kerosene can be exemplified.

The aforementioned surfactant contained in the washing liquid to which surfactant is added to water is not specifically limited, and can be anion surfactant, cationic surfactant, or nonionic surfactant.

As the aforementioned anion surfactant, sulfuric ester salt or sulfonate salt can be used.

As the aforementioned sulfuric ester salt, $R-OSO_3Na$ (R= saturated hydrocarbon group with carbon number 8-18 or non-saturated hydrocarbon group with one double bond) can be used. Concretely, sodium dodecyl sulfate ($C_{12}H_{25}OSO_3Na$), sodium hexadecyl sulfate ($C_{16}H_{33}OSO_3Na$), and sodium stearyl sulfate ($C_{18}H_{37}OSO_3Na$), sodium oleyl sulfate ($C_{18}H_{35}OSO_3Na$) can be exemplified.

The aforementioned sulfonate can be a substance represented by $R-SO_3Na$ (R=saturated hydrocarbon group with a carbon number of 8-18 or unsaturated hydrocarbon group with one double-bond) or $R-SO_3Na$ (R= saturated hydrocarbon group with a carbon number of 8-14 or alkyl-benzil which is unsaturated hydrocarbon group with one double-bond) such as sodium dodecylbenzenesulfonate ($C_{12}H_{25}-C_6H_4-SO_3Na$).

As the aforementioned cationic surfactant, quaternary ammonium represented by $R-N^+(CH_3)_3Cl^-$ (r= saturated hydrocarbon group with carbon number 8-16) can be used.

As the aforementioned nonionic surfactant, polyethylene glycols type ionic surfactant represented by $R-O-(-CH_2CH_2O)_nH$ (R= saturated hydrocarbon group with carbon number 8-16 or non-saturated hydrocarbon group with one double bond, n=6-14) or $R-O-(-CH_2CH_2O)_nH$ (R= alkylphenyl in which alkylphenyl is saturated hydrocarbon group with a carbon number of 8-12 or unsaturated hydrocarbon group with one double-bond, n=6-14) can be exemplified. A substance in which n exceeds the aforementioned range can be contained in nonionic surfactant at the mole ratio of not more than 50%.

Washing liquid in which at least one or more of the aforementioned surfactant is added to water can be used. Surfactant whose carbon number is less than the aforementioned range can be added at the mole ratio of 50% or less. It is preferable to avoid mixture of anion surfactant and cation surfactant in water because the mixture thereof in water results in a precipitate.

Although the additive concentration of the surfactant is not specifically limited, it is preferably not less than the critical micellar concentration to exert the washing effects.

As the alkali in the alkaline aqueous solution used for washing, sodium hydroxide, calcium hydroxide, potassium hydroxide, sodium orthosilicate, sodium metasilicate, sodium tertiary phosphate, and sodium carbonate can be exemplified. One of more selected from the above alkali dissolved with water can be used washing liquid.

As the acid in the acid aqueous solution used for washing, one or more acids selected from the group comprising hydrochloric acid, sulfuric acid, nitric acid, acid containing acid containing phosphorus can be used. As the acid containing phosphorus, orthophosphoric acid (here in after referred to as "phosphoric acid"), pyrophoric acid, metaphosphoric acid, and polyphosphoric acid can be exemplified. Perchloric acid and hypochlorous acid can also be used.

The removal amount of the surface layer of the aluminum material by alkaline aqueous solution or acid aqueous solution can be adjusted by appropriately setting the concentration of alkali or acid, the temperature of the alkaline aqueous solution or the acid aqueous solution, and the contact time of the aluminum material in contact with the alkaline aqueous solution or the acid aqueous solution. For the purpose of enhancing the washing effects of the surface layer of the aluminum member, surfactant or chelating agent can be added to the washing liquid.

The removal amount of the aluminum material surface layer by the washing is preferably not less than 1 nm but not more than 500 nm per one side of the aluminum material on an average. If the surface layer removal amount is less than 1 nm on an average, the removal of the oxide film of the aluminum material surface may become insufficient. If the surface layer is removed by 500 nm or more, generation of etching pit nuclei in the aluminum material surface layer is suppressed, which rather causes deterioration of capacitance due to poor etching characteristics. The preferable removal amount by washing is not less than 1.5 nm but not more than 20 nm per one side of the aluminum material, more preferably not less than 5 nm but not more than 200 nm, still more preferably not less than 10 nm but not more than 150 nm, on an average.

Although the aluminum material surface layer oxide film and the metallic aluminum are different in density, in the present invention, the removal amount D (nm) of the aluminum material surface layer is defined as $D (nm)=E \times 10^7/2.7$ using the reduced amount E ($g/cm^2$) per unit surface area by the washing and the aluminum density 2.7 $g/cm^3$.

The contact method of the washing liquid and the aluminum material is not specifically limited. As the contact method, immersing the aluminum material in washing liquid, contacting the aluminum material to washing liquid surface, and spray washing liquid can be exemplified.

The heating method in an oxidizing atmosphere is not specifically limited. As the heating method, ventilation heating and radiation heating can be exemplified. The form of the aluminum material to be heated is not specifically limited. The aluminum material can be subjected to batch heating in a coiled state or can be winded into a coil after being continuously heated while being rewound.

The heating temperature of the aluminum material in an oxidizing atmosphere is preferably 50 to 400 °C. If the heating temperature is lower than 50 °C, the property of aluminum surface layer dissolve at the time of etching the aluminum material executed after the final annealing becomes uneven. If the heating temperature exceeds 400 °C, the surface layer oxide film of the aluminum material becomes excessively thick, resulting in deteriorated etching characteristics of the aluminum material after the final annealing. The more preferable heating temperature of the aluminum material is 70 to 350 °C.

The heating time is preferably not shorter than 3 seconds but not longer than 72 hours. If the heating time is shorter than 3 seconds, the property of aluminum surface layer dissolve at the time of etching the aluminum material executed after the final annealing becomes uneven. If the heating time exceeds 72 hours, the solubility evenness of the aluminum material surface layer becomes almost saturated, resulting increased cost due to the energy consumption at the time of the heating. The preferable heating time is not shorter than 10 seconds but not longer than 48 hours, more preferably not shorter than 70 seconds but not longer than 48 hours.

The heating temperature and time in the oxidizing atmosphere are appropriately selected depending on the heating method. For example, in the case of heating the aluminum material in a coiled manner, the coiled aluminum material is preferably heated at a temperature of 50 °C to 280 °C for 30 minutes to 72 hours. In the case of heating the aluminum material in an uncoiled manner or in a sheet-like cut manner, it is preferable that the heating time t (time) meets $10/(1.44 \times X^{1.5}) \leqq t \leqq 72$, more preferably $10/(1.44 \times X^{1.5}) \leqq t \leqq 48$, where the heating temperature is X °C.

The oxygen concentration at the time of heating the aluminum material in the oxidizing atmosphere is preferably not less than 0.1 vol%. If the oxygen concentration is less than 0.1 vol%, the aluminum material surface may not be sufficiently oxidized at the time of the heating. It is preferable that the oxygen concentration is not less than 1 vol%, more preferably not less than 5 vol% to preferably utilize air as an oxidizing atmosphere.

The processing atmosphere for the final annealing of the aluminum material is not specifically limited. It is preferable to heat the aluminum material in an atmosphere with less water and oxygen so as not to increase the thickness of the oxide film. Concretely, it is preferable to heat the aluminum material in an inert gas atmosphere such as an argon atmosphere or a nitrogen atmosphere or in a vacuum atmosphere 0.1 Pa or below. As the atmosphere for the final annealing, hydrogen gas can be preferably used.

The area fraction of cube orientation of the aluminum material after the final annealing is preferably not less than 90%.

The method of the final annealing is not specifically limited. The aluminum material can be subj ected to batch annealing in a coiled state, or the coiled aluminum material can be rewound and subjected to continuous annealing, then wound into a coil. At least one of the batch annealing and the continuous annealing can be preformed plural times.

The temperature and time for the annealing is not specifically limited. For example, in the case of executing batch annealing, it is preferable to execute the annealing at a temperature of 450 to 600 °C for 10 minutes to 50 hours. If the temperature is less than 10 minutes, a surface capable of creating etching pits evenly may not be obtained. To the contrary, if the annealing is executed at a temperature exceeding 600 °C, the aluminum material becomes adhesive. Even if the annealing is executed for 50 hours or more, the surface enlarging effects by the etching will be saturated, which rather increases the heat energy cost. Especially, the annealing is preferably executed at a temperature of 460 to 570 °C for 20 minutes to 40 hours.

The temperature raising speed and pattern is not specifically limited. The temperature can be raised at a constant speed. Alternatively, while repeating the temperature raising and the temperature maintaining, step temperature raising and cooling can be performed. In any event, at the annealing step, it is enough to execute the annealing at a temperature range of from 450 °C to 600 °C for a total 10 minutes to 50 hours.

Steps and step conditions other than those defined by the present invention are not specifically limited, and can be performed by common procedures. Considering etching conditions of the aluminum material, the production method of the aluminum material can be arbitrarily changed.

The thickness of the aluminum material for electrolytic capacitor electrodes to be obtained after the final annealing is not specifically limited. In the present invention, the thickness can be 200 $\mu$m or less called "foil" and a thickness exceeding 200 $\mu$m.

The aluminum material to which the final annealing was executed is subjected to etching treatment to enhance the area increasing ratio. Although the etching treatment conditions are not specifically limited, it is preferable to employ a DC etching method. By employing a DC etching method, at portions where etching pit nuclei were generated at the annealing, the aluminum material will be etched deeply and thickly, creating a number of tunnel-like pits, which realizes high capacitance.

After the etching treatment, it is preferable to execute a formation of dielectric (by anodizing) to obtain an anode material. It is preferably used as a medium-voltage or high-voltage electrolytic capacitor electrode, but the present invention does not prevent the material from being used as a cathodic material. An electrolytic capacitor using this electrode material can have high capacitance.

The measurement of capacitance can be performed by a common procedure. For example, in an etched, and then formed foil to which a formation of dielectric (by anodizing) was executed, a method of measuring the capacitance in an ammonium borate aqueous solution 80 g/L at 30 °C using a stainless plate as a counter electrode can be exemplified.

**EXAMPLE 1**

Hereinafter, examples according to a first embodiment and comparative examples are shown.

Aluminum slabs containing Fe, Si, Cu and Pb shown in Table 1 were prepared. A plate obtained by hot-rolling the aluminum slab was cold-rolled. After being subjected to intermediate annealing in a nitrogen atmosphere at 260 °C for 18 hours, the plate was subjected to finish cold rolling to obtain an aluminum material.

EXAMPLE 1

The finish cold-rolled aluminum material with the composition 6 shown in Table 1 was washed with n-hexane, then heated at 240 °C for 6 hours in the air, and further subjected to final annealing at 540 °C for 16 hours in an argon to obtain an aluminum material for electrolytic capacitor electrodes.

EXAMPLE 2

The finish cold-rolled aluminum material with the composition 6 shown in Table 1 was washed with 40 °C and 0.2 mass% sodium hydrate aqueous solution to remove 10 nm of the aluminum material surface layer, then heated at 200 °C for 6 hours in the air, and further subjected to final annealing at 540 °C for 12 hours in an argon to obtain an aluminum material for electrolytic capacitor electrodes.

EXAMPLE 3

An aluminum material for electrolytic capacitor electrodes was obtained in the same manner as in Example 2 except that the aluminum composition is composition 7 shown in Table 1.

EXAMPLE 4 to EXAMPLE 20

The finish cold-rolled aluminum materials having the compositions 1-13 shown in Table 1 were washed with acid aqueous solution, alkaline aqueous solution, or organic solvent, then heated in an oxidizing atmosphere, and further subjected to final annealing in an argon atmosphere to obtain aluminum materials for electrolytic capacitor electrodes different in L value after the evaluation etching.

COMPARATIVE EXAMPLE 1 to COMPARATIVE EXAMPLE 3

The finished cold-rolled aluminum materials having composition 3, composition 14 and composition 15 shown in Table 1 were washed, and then subjected to final annealing in an argon atmosphere without executing heating in an oxidizing atmosphere to obtain aluminum materials for electrolytic capacitor electrodes.

The aluminum material obtained by each of the aforementioned examples and comparative examples was subjected to evaluation etching by the following method and then the Lab lightness index (L value) was measured by the following method:

[Method of the Evaluation Etching]

The aluminum material was immersed in a 50 °C and 2 mol/L phosphoric acid solution for 30 seconds or 45 seconds, and then washed with water as pre-treatment. Thereafter, the aluminum material was subjected to DC electrolytic etching in an electrolytic solution defined below at current density of 0. 4 A/cm$^2$ for 3 seconds, washed with water, and then dried.

Component of the electrolytic solution: Hydrochloric acid of 1.0 mol/L, Sulfuric acid of 2.7 mol/L, and Aluminum sulfate of 1.0 mol/L (Aluminum sulfate is added as hydrate)

Temperature of the electrolytic solution: 82 °C

Carbon electrodes as opposed electrodes were disposed at both sides of the aluminum material at a distance of 17 mm to execute double-sided etching (current density was a value per projected area of the aluminum material)

[Measuring Method of the Lab Light Index (L value) of the aluminum material to which evaluation etching was executed]

Using a measuring apparatus SC-3-CH manufactured by SUGA test instruments Co. , Ltd. , the measurement was performed by the following conditions.

Optical Condition: 45-n (Condition "a" described in JIS Z 8722 5.3.1)

Measurement Condition: C light 2° visual field

Specimen measuring portion: Circle 20 mm in diameter

Specimen Arrangement Condition: Measurement was performed in a state in which a specimen was disposed with the rolling direction perpendicularly intersecting with the normal line of the central optical path of a bundle of rays and contained on a specimen surface.

The measured lightness indexes (L values) are shown in Table 2.

The final annealed aluminum material obtained by each of the aforementioned examples and comparative examples was immersed in 50 °C and 2 mol/L phosphoric acid solution for 30 seconds or 45 seconds, and then washed with water as a pre-treatment, then subjected to DC electrolytic etching at a current density of 0.4 A/cm$^2$ for 120 seconds in the same electrolytic solution as the electrolytic solution used for the evaluation etching to measure the aforementioned lightness index (L value) to create tunnel-like pits. Thereafter, the aluminum material was immersed in a 90 °C solution having the same liquid compositions as those of the electrolytic etching to increase the pitch diameter. The obtained etched foil was subjected to formation of dielectric by anodizing with forming voltage of 270 V in accordance with EIAJ standard to obtain a capacitance measuring sample.

Table 2 shows the relative capacitance when the capacitance of Comparative Example 1 in the case of the pre-treatment of 30 seconds or 45 seconds is defined as 100.

[Table 1]

| Si, Fe and Cu concentration of aluminum slab | | | | |
|---|---|---|---|---|
| | Concentration/Mass ppm | | | |
| | Fe | Si | Cu | Pb |
| Composition 1 | 15 | 22 | 14 | 0.9 |
| Composition 2 | 16 | 24 | 14 | 1.4 |
| Composition 3 | 16 | 23 | 14 | 2.3 |
| Composition 4 | 15 | 20 | 42 | 0.9 |
| Composition 5 | 16 | 21 | 53 | 0.4 |
| Composition 6 | 15 | 20 | 53 | 0.6 |
| Composition 7 | 16 | 21 | 53 | 0.9 |
| Composition 8 | 16 | 20 | 53 | 1.1 |
| Composition 9 | 15 | 21 | 53 | 0.5 |
| Composition 10 | 14 | 21 | 98 | 0.9 |
| Composition 11 | 12 | 20 | 132 | 0.9 |
| Composition 12 | 19 | 25 | 8 | 0.9 |
| Composition 13 | 10 | 18 | 190 | 0.9 |
| Composition 14 | 13 | 21 | 57 | 0.2 |
| Composition 15 | 14 | 21 | 58 | 3.0 |

[Table 2]

| | Ingot Composition | Evaluation etched foil L value (pre-treatment 30s) | Evaluation etched foil L value (pre-treatment 45s) | Relative capacitance % (pre-treatment 30s) | Relative capacitance % (pre-treatment 45s) |
|---|---|---|---|---|---|
| Ex.1 | Comp.6 | 4 0 | 5 1 | 1 1 5 | 1 1 4 |
| Ex.2 | Comp.6 | 3 5 | 4 9 | 1 1 3 | 1 1 5 |

(continued)

| | Ingot Composition | Evaluation etched foil L value (pre-treatment 30s) | Evaluation etched foil L value (pre-treatment 45s) | Relative capacitance % (pre-treatment 30s) | Relative capacitance % (pre-treatment 45s) |
|---|---|---|---|---|---|
| Ex.3 | Comp.7 | 5 1 | 5 1 | 1 1 5 | 1 1 6 |
| Ex.4 | Comp. 1 | 3 4 | 4 4 | 1 1 2 | 1 1 1 |
| Ex.5 | Comp. 4 | 4 1 | 4 8 | 1 1 3 | 1 1 5 |
| Ex.6 | Comp. 8 | 4 2 | 5 1 | 1 1 2 | 1 1 3 |
| Ex.7 | Comp. 9 | 3 4 | 4 1 | 1 1 0 | 1 1 2 |
| Ex.8 | Comp. 2 | 4 4 | 5 2 | 1 0 7 | 1 0 9 |
| Ex.9 | Comp. 5 | 3 3 | 4 2 | 1 0 6 | 1 0 7 |
| Ex.10 | Comp. 3 | 4 5 | 5 2 | 1 0 4 | 1 0 5 |
| Ex.11 | Comp.10 | 4 1 | 5 1 | 1 0 7 | 1 0 8 |
| Ex.12 | Comp.11 | 4 4 | 5 2 | 1 0 6 | 1 0 6 |
| Ex.13 | Comp.12 | 3 5 | 4 7 | 1 0 4 | 1 0 5 |
| Ex.14 | Camp. 13 | 4 3 | 5 3 | 1 0 3 | 1 0 4 |
| Ex.15 | Comp. 6 | 3 1 | 3 8 | 1 1 0 | 1 1 0 |
| Ex.16 | Comp. 7 | 5 0 | 5 5 | 1 0 8 | 1 0 9 |
| Ex.17 | Comp. 9 | 2 7 | 2 9 | 1 0 6 | 1 0 7 |
| Ex.18 | Comp. 8 | 5 5 | 5 7 | 1 0 5 | 1 0 6 |
| Ex.19 | Comp. 5 | 2 4 | 2 8 | 1 0 0 | 1 0 3 |
| Ex.20 | Comp. 3 | 5 4 | 6 0 | 1 0 3 | 1 0 0 |
| Comp. Ex. 1 | Comp. 3 | 5 8 | 6 0 | 1 0 0 | 1 0 0 |
| Comp. Ex. 2 | Comp.14 | 2 4 | 2 5 | 9 7 | 9 6 |
| Comp. Ex. 3 | Comp.15 | 5 9 | 6 1 | 9 8 | 9 9 |

As shown above, when the Pb content is not less than 0.3 mass ppm but not more than 2.5 mass ppm, and the aluminum material to which the aforementioned evaluation etching was executed meets either a condition that the Lab lightness index (L value) of the aluminum material measured by the aforementioned method is not less than 25 but not more than 56 when a pre-treatment time is 30 seconds or a condition that the Lab lightness index is not less than 27 but not more than 58 when the pre-treatment time is 45 seconds, an aluminum material for electrolytic capacitor electrodes excellent in etching characteristics can be obtained.

In the example in which the Cu content is not less than 10 ppm but not more than 150 ppm, the capacitance is higher than the example in which the Cu content is less then 10 ppm or larger than 150 ppm.

On the other hand, In Comparative Example 1, the capacitance is lower than in Examples since the lightness index (L value) falls outside the range defined by the present invention. In Comparative Example 2, the Pb content and the L value are lower than those of the lower limit defined by the present invention, and in Comparative Example 3, the Pb content and the L value exceed the upper limit defined by the present invention. Thus, both of them are low in capacitance.

[SECOND EMBODIMENT]

This embodiment is directed to a production method preferably used to produce the aluminum material for electrolytic capacitor electrodes explained in the first embodiment.

The present inventors have found the fact that in producing an aluminum material for electrolytic capacitor electrodes, if Pb content of an aluminum material is not less than 0.3 mass ppm but not more than 2.5 mass ppm and the aluminum material after completion of cold rolling but before final annealing is washed if necessary and then heated in the oxidation atmosphere, the property of aluminum surface layer dissolve to which etching was executed after the final annealing becomes even, resulting in enhanced electrolytic etching characteristics. They also have found the fact that the etching characteristics can be further improved by appropriately adjusting the Pb composition in accordance with the conditions of washing to be executed after completion of cold rolling but before heating in an oxidizing atmosphere.

Hereinafter, the production method of an aluminum material for electrolytic capacitors will be detailed.

The purity of the aluminum material is not specifically limited so long as it falls within a range in which an electrolytic capacitor electrode can be used. It is preferable that the aluminum material is 99.9 mass% or higher in purity, more preferably 99.95 mass% or higher in purity. In this invention, for descriptive purposes, aluminum purity of an aluminum material will be defined as a value obtained by subtracting a total concentration (mass%) of Fe, Si and Cu from 100 mass%.

Pb segregates in an aluminum material surface layer at the time of executing final annealing, which heavily affects etching pit generation. In creating tunnel-like etching pits by a DC etching method, if the Pb concentration is too low, the etching pit dispersity deteriorates, and if the Pb concentration is too high, the surface dissolved amount of the aluminum material increases. In the present invention, in order to exert improving effects of etching characteristics by heating an aluminum material in an oxidizing atmosphere, the Pb content is regulated to not less than 0.3 mass ppm but not more than 2.5 mass ppm.

Furthermore, it is preferable that Cu not less than 10 mass ppm but not more than 150 mass ppm is contained to further improve the dispersity of etching pits. If the Cu content is less than 10 mass ppm, the dispersability of etching pits may become insufficient. If it exceeds 150 mass ppm, the dissolved decreased amount of the aluminum material during the electrolytic etching increases, which may cause deterioration of capacitance. It is more preferable that the Cu content is not less than 15 mass ppm but not more than 100 mass ppm.

The production steps of the aluminummaterial are not limited. As an example, a dissolution component adjustment of an aluminum material and slab casting, hot rolling, cold rolling, cold rolling including finish cold rolling (low reduction rolling), and final annealing are executed sequentially, and then heating is executed in an oxidizing atmosphere after the cold rolling but before the final annealing can be exemplified. It is preferable to execute washing after completion of the cold rolling but before the heating in the oxidizing atmosphere. The execution of the washing cleans the surface of the aluminum material, improving the etching characteristics, which in turn can increase the capacitance. During the cold rolling steps, at least one intermediate annealing can be executed according to the need in order to increase the area fraction of cube orientation after the final annealing to improve the etching characteristics.

A washing liquid used for washing the aluminum material can be organic solvent, water containing surfactant, alkaline aqueous solution or acid aqueous solution.

In the case of removing the aluminum material surface layer by washing, at least one of alkaline aqueous solution and acid aqueous solution can be used. Either one of them can be used. After executing using alkaline aqueous solution, washing can be executed using acid aqueous solution.

The Pb content in the aluminummaterial in the case of removing the aluminum material surface layer by the washing using at least one of the alkaline aqueous solution and the acid aqueous solution can be not less than 0.3 mass ppm but not more than 2.5 mass ppm which is within the range of the present invention. If the Pb content is less than 0.3 mass ppm, the etching pit dispersity deteriorates. If it exceeds 2.5 mass ppm, the surface dissolution of the aluminum material increases, causing decreased capacitance. The Pb content is preferably not less than 0.4 mass ppm but not more than 1.8 mass ppm, more preferably not less than 0.5 mass ppm but not more than 1.2 mass ppm.

The Pb content in the case of washing the aluminum material using at least one of organic solvent, water containing surfactant, and a mixture of water-soluble organic solvent and water is preferably not less than 0.6 mass ppm but not more than 2.5 mass ppm. If the Pb content is less than 0.6 mass ppm, the etching pit dispersity deteriorates. If it exceeds 2.5 mass ppm, the surface dissolution of the aluminum material increases, which may cause decreased capacitance. The Pb content is preferably not less than 0.7 mass ppm but not more than 1.8 mass ppm, more preferably not less than 0.7 mass ppm but not more than 1.2 mass ppm.

The organic solvent for use in the washing is not specifically limited. As examples, alcohol, diol, aromatic hydrocarbon such as, e.g., toluene, xylene, alkane series of hydrocarbons, cyclohexane, ketone, ether, ester, and petroleum products can be exemplified.

As examples of the aforementioned alcohol, methanol ($CH_3oH$), ethanol ($C_2H_5OH$), 1- propanol ($CH_3CH_2CH_2OH$), 2-propanol ($CH_3CH(OH)CH_3$), 1-butanol ($CH_3CH_2CH_2CH_2OH$), 2-butanol ($CH_3CH_2CH(OH)CH_3$), 1-pentanol ($CH_3CH_2CH_2CH_2\ CH_2OH$), and 2-pentanol ($CH_3CH_2CH_2CH(OH)CH_3$) can be exemplified. It is preferable that the alcohol is represented by $C_nH_{2n+1}OH$(n=1-10: natural number). Alicyclic compounds, such as, e. g. , cyclohexanol, can also be used.

As examples of the aforementioned diol, 1, 2-ethanediol ($HOCH_2CH_2OH$), 1, 2-propanediol ($CH_3CH(OH)CH_2OH$), and 1, 3-propanediol ($HOCH_2CH_2CH_2OH$) can be exemplified.

As examples of the aforementioned alkane hydrocarbon, pentane ($C_5H_{12}$), hexane ($C_6H_{14}$), heptane ($C_7H_{16}$),

octane ($C_8H_{18}$), nonane ($C_9H_{20}$), and decane ($C_{10}H_{22}$) can be exemplified. It is preferable that the alkane hydrocarbon is represented by $C_nH_{2n+2}$ (n=5-15 : natural number). Alicyclic hydrocarbon, such as, e.g., cyclohexane, can also be used.

As examples of the aforementioned ketone, acetone ($CH_3COCH_3$), 2- butanone ($CH_3COC_2H_5$), 3-pentanone ($CH_3CH_2COCH_2CH_3$), and 3-methyl-2-butanone ($CH_3COCH(CH_3)H_2$) can be exemplified. It is preferable that the ketone is represented by R1COR2(R1 and R2: aliphatic hydrocarbon group, the total of carbon number of R1 and R2 is 8 or less) . Cyclic ketone, such as, e.g., cyclohexane ($C_6H_{10}O$), can be used.

As examples of the aforementioned ether, a substance represented by R1-O-R2 (R1 and R2: aliphatic hydrocarbon group, the total of carbon number of R1 and R2 is 8 or less), and glycol ether, such as, e.g., 2- methoxyethanol ($CH_3OCH_2CH_2OH$), 2-ethoxyethanol ($CH_3CH_2OCH_2CH_2OH$), 2- butoxyethanol ($CH_3CH_2CH_2$ $CH_2OCH_2CH_2OH$), 2-(2-ethoxy) ethoxyethanol ($CH_3CH_2OCH_2CH$ $CH_2CH_2OH$), can be exemplified.

As examples of the aforementioned ester, acetate ester represented by $CH_3COOR$ (R: aliphatic hydrocarbon group with carbon number 1-5) can be exemplified.

As examples of the aforementioned petroleum products, industrial gasoline (JIS K 2201), automobile gasoline (JIS K 2202), aviation gasoline (JIS K 2206), kerosene (JIS K 2203), diesel oil (JIS K 2204), petroleum ether (JIS K 8593), petroleum benzin (JIS K 8594), ligroin (JIS K 8937), and kerosene can be exemplified.

As water-soluble organic solvent capable of being used by mixing in water, Among the aforementioned organic solvents, methanol, ethanol, propanol, acetone, etc., can be exemplified.

The aforementioned surfactant contained in the washing liquid to which surfactant is added to water is not specifically limited, and can be anion surfactant, cationic surfactant, or nonionic surfactant.

As the aforementioned anion surfactant, sulfuric ester salt or sulfonate salt can be used.

As the aforementioned sulfuric ester salt, $R-OSO_3Na$ (R= saturated hydrocarbon group with carbon number 8-18 or non-saturated hydrocarbon group with one double bond) can be used. Concretely, sodium dodecyl sulfate ($C_{12}H_{25}OSO_3Na$), sodium hexadecyl sulfate ($C_{16}H_{33}OSO_3Na$), and sodium stearyl sulfate ($C_{18}H_{37}OSO_3Na$), sodiumoleyl sulfate ($C_{18}H_{35}OSO_3Na$) can be exemplified.

The aforementioned sulfonate can be a substance represented by $R-SO_3Na$ (R=saturated hydrocarbon group with a carbon number of 8-18 or unsaturated hydrocarbon group with one double-bond) or $R-SO_3Na$ (R= saturated hydrocarbon group with a carbon number of 8-14 or alkyl-benzil which is unsaturated hydrocarbon group with one double-bond) such as sodium dodecylbenzenesulfonate ($C_{12}H_{25}-C_6H_4-SO_3Na$).

As the aforementioned cationic surfactant, quaternary ammonium represented by $R-N^+$ $(CH_3)_3Cl^-$ (r= saturated hydrocarbon group with carbon number 8-16) can be used.

As the aforementioned nonionic surfactant, polyethylene glycols type ionic surfactant represented by $R-O-(-CH_2CH_2O)_nH$ (R= saturated hydrocarbon group with carbon number 8-16 or non-saturated hydrocarbon group with one double bond, n=6-14) or $R-O-(-CH_2CH_2O)_nH$ (R= alkylphenyl in which alkylphenyl is saturated hydrocarbon group with a carbon number of 8-12 or unsaturated hydrocarbon group with one double-bond, n=6-14) can be exemplified. A substance in which n exceeds the aforementioned range can be contained in nonionic surfactant at the mole ratio of not more than 50%.

Washing liquid in which at least one or more of the aforementioned surfactant is added to water can be used. Surfactant whose carbon number is less than the aforementioned range can be added at the mole ratio of 50% or less. It is preferable to avoid mixture of anion surfactant and cation surfactant in water because the mixture thereof in water results in a precipitate.

Although the additive concentration of the surfactant is not specifically limited, it is preferably not less than the critical micellar concentration to exert the washing effects.

As the alkali in the alkaline aqueous solution used for washing, sodium hydroxide, calcium hydroxide, potassium hydroxide, sodium orthosilicate, sodium metasilicate, sodium tertiary phosphate, and sodium carbonate can be exemplified. One of more selected from the above alkali dissolved with water can be used washing liquid.

As the acid in the acid aqueous solution used for washing, one or more acids selected from the group comprising hydrochloric acid, sulfuric acid, nitric acid, acid containing phosphorus can be used. As the acid containing phosphorus, orthophosphoric acid (hereinafter referred to as "phosphoric acid"), pyrophoric acid, metaphosphoric acid, and polyphosphoric acid can be exemplified. Perchloric acid and hypochlorous acid can also be used.

The removal amount of the surface layer of the aluminum material by alkaline aqueous solution or acid aqueous solution can be adjusted by appropriately setting the concentration of alkali or acid, the temperature of the alkaline aqueous solution or the acid aqueous solution, and the contact time of the aluminum material in contact with the alkaline aqueous solution or the acid aqueous solution. For the purpose of enhancing the washing effects of the surface layer of the aluminum member, surfactant or chelating agent can be added to the washing liquid.

The removal amount of the aluminum material surface layer by the washing is preferably not less than 1 nm but not more than 500 nm per one side of the aluminum material on an average. If the surface layer removal amount is less than 1 nm on an average, the removal of the oxide film of the aluminum material surface may become insufficient. If the surface layer is removed by 500 nm or more, generation of etching pit nuclei in the aluminum material surface layer is suppressed, which rather causes deterioration of capacitance due to poor etching characteristics. The preferable removal amount by washing is not less than 1.5 nm but not more than 20 nm per one side of the aluminum material, more preferably not less than 5 nm but not more than 200 nm, still more preferably not less than 10 nm but not more than 150 nm, on an average.

Although the aluminum material surface layer oxide film and the metallic aluminum are different in density, in the present invention, the removal amount D (nm) of the aluminum material surface layer is defined as $D (nm)=Ex10^7/2.7$ using the reduced amount E (g/cm$^2$) per unit surface area by the washing and the aluminum density 2.7 g/cm$^3$.

The contact method of the washing liquid and the aluminum material is not specifically limited. As the contact method, immersing the aluminum material in washing liquid, contacting the aluminum material to washing liquid surface, and spray washing liquid can be exemplified.

The heating method in an oxidizing atmosphere is not specifically limited. As the heating method, ventilation heating and radiation heating can be exemplified. The form of the aluminum material to be heated is not specifically limited. The aluminum material can be subjected to batch heating in a coiled state or can be winded into a coil after being continuously heated while being rewound.

The heating temperature of the aluminum material in an oxidizing atmosphere is preferably 50 to 400 °C. If the heating temperature is lower than 50 °C, the property of the aluminum surface layer dissolve at the time of etching the aluminum material executed after the final annealing becomes uneven. If the heating temperature exceeds 400 °C, the surface layer oxide film of the aluminum material becomes excessively thick, resulting in deteriorated etching characteristics of the aluminum material after the final annealing. The more preferable heating temperature of the aluminum material is 70 to 350 °C.

The heating time is preferably not shorter than 3 seconds but not longer than 72 hours. If the heating time is shorter than 3 seconds, the property of the aluminum surface layer dissolve at the time of etching the aluminum material executed after the final annealing becomes uneven. If the heating time exceeds 72 hours, the solubility evenness of the aluminum material surface layer becomes almost unchanged, resulting increased cost due to the energy consumption at the time of the heating. The preferable heating time is not shorter than 10 seconds but not longer than 48 hours, more preferably not shorter than 70 seconds but not longer than 48 hours.

The heating temperature and time in the oxidizing atmosphere are appropriately selected depending on the heating method. For example, in the case of heating the aluminum material in a coiled manner, the coiled aluminum material is preferably heated at a temperature of 50 °C to 280 °C for 30 minutes to 72 hours. In the case of heating the aluminum material in an uncoiled manner or in a sheet-like cut manner, it is preferable that the heating time t (time) meets $10/(1.44 \times X^{1.5}) \leqq t \leqq 72$, more preferably $10/(1.44 \times X^{1.5}) \leqq t \leqq 48$, where the heating temperature is X °C.

The oxygen concentration at the time of heating the aluminum material in the oxidizing atmosphere is preferably not less than 0.1 vol%. If the oxygen concentration is less than 0.1 vol%, the aluminum material surface may not be sufficiently oxidized at the time of the heating. It is preferable that the oxygen concentration is not less than 1 vol%, more preferably not less than 5 vol% to preferably utilize air as an oxidizing atmosphere.

The processing atmosphere for the final annealing of the aluminum material is not specifically limited. It is preferable to heat the aluminum material in an atmosphere with less water and oxygen so as not to increase the thickness of the oxide film. Concretely, it is preferable to heat the aluminum material in an inert gas atmosphere such as an argon atmosphere or a nitrogen atmosphere or in a vacuum atmosphere 0.1 Pa or below. As the atmosphere for the final annealing, hydrogen gas can be preferably used.

The area fraction of cube orientation of the aluminummaterial after the final annealing is preferably not less than 90%.

Themethodof the final annealing is not specifically limited. The aluminum material can be subjected to batch annealing in a coiled state, or the coiled aluminum material can be rewound and subjected to continuous annealing, then wound into a coil. At least one of the batch annealing and the continuous annealing can be preformed plural times.

The temperature and time for the annealing is not specifically limited. For example, in the case of executing batch annealing, it is preferable to execute the annealing at a temperature of 450 to 600 °C for 10 minutes to 50 hours. If the temperature is less than 10 minutes, a surface capable of creating etching pits evenly may not be obtained. To the contrary, if the annealing is executed at a temperature exceeding 600 °C, the aluminum material becomes adhesive. Even if the annealing is executed for 50 hours or more, the surface enlarging effects by the etching will be saturated, which rather increases the heat energy cost. Especially, the annealing is preferably executed at a temperature of 460 to 570 °C for 20 minutes to 40 hours.

The temperature raising speed and pattern is not specifically limited. The temperature can be raised at a constant speed. Alternatively, while repeating the temperature raising and the temperature maintaining, step temperature raising and cooling can be performed. In any event, at the annealing step, it is enough to execute the annealing at a temperature range of from 450 °C to 600 °C for a total 10 minutes to 50 hours.

Steps and step conditions other than those defined by the present invention are not specifically limited, and can be performed by common procedures. Considering etching conditions of the aluminum material, the production method of the aluminum material can be arbitrarily changed.

The thickness of the aluminum material for electrolytic capacitor electrodes to be obtained after the final annealing is not specifically limited. In the present invention, the thickness can be 200 $\mu$m or less called "foil" and a thickness exceeding 200 $\mu$m.

The aluminum material to which the final annealing was executed is subjected to etching treatment to enhance the area increasing ratio. Although the etching treatment conditions are not specifically limited, it is preferable to employ a DC etching method. By employing a DC etching method, at portions where etching pit nuclei were generated at the annealing, the aluminum material will be etched deeply and thickly, creating a number of tunnel-like pits, which realizes high capacitance.

After the etching treatment, it is preferable to execute a formation of dielectric (by anodizing) to obtain an anode material. It is preferably used as a medium-voltage or high-voltage electrolytic capacitor electrode, but the present invention does not prevent the material from being used as a cathodic material. An electrolytic capacitor using this electrode material can have large capacitance.

The measurement of capacitance can be performed by a common procedure. For example, in an etched, and then formed foil to which a formation of dielectric (by anodizing) was executed, a method of measuring the capacitance in an ammonium borate aqueous solution 80 g/L at 30 °C using a stainless plate as a counter electrode can be exemplified.

**EXAMPLE 2**

Hereinafter, examples according to a second embodiment and comparative examples are shown.

Aluminum slabs containing Fe, Si, Cu and Pb shown in Table 3 were prepared. A plate obtained by hot-rolling the aluminum slab was cold-rolled into a thickness of 130 $\mu$m. After being subjected to intermediate annealing in a nitrogen atmosphere at 250 °C for 18 hours, the plate was subjected to finish cold rolling to obtain an aluminum material 110 $\mu$m in thickness, 500 mm in width, 2,000 m in length and 99.99 mass% in purity. Table 2 shows types of steps (Step 1 to Step 3) executed after the cold rolling, Tables 5-7 show the conditions of the washing (Step 1) shown in Table 4, and Table 8 shows the conditions of the heating (Step 2) in an oxidizing atmosphere shown in Table 4.

The removal amount of the aluminum material surface layer was controlled by adjusting the immersion time in washing liquid in the case of washing using alkaline aqueous solution or acid aqueous solution, and by adjusting the immersion time in alkaline aqueous solution in the case of washing using acid aqueous solution after washing using alkaline aqueous solution.

EXAMPLE 1

Using the aluminum slab having the composition 6 shown in Table 3, an aluminum material was obtained by executing the aforementioned steps upon the finish cold rolling.

Next, the aluminum material was washed with 80°C 20 mass% $H_2SO_4$ aqueous solution under the condition 29 shown in Table 7 and the aluminum material surface layer was removed by 10 nm (Step 1), heated for 200 °Cx8 hours in the air under the condition H4 shown in Table 8 (Step 2), and further subjected to final annealing for 540 °C×4 hours in an argon atmosphere to obtain an aluminum material for electrolytic capacitor electrodes.

EXAMPLES 2 to 77, COMPARATIVE EXAMPLES 1 to 5

Using the aluminum slabs having various compositions (concrete compositions are shown in Table 1) shown in Tables 9-12, aluminum materials were obtained by executing the aforementioned steps upon the finish cold rolling.

Next, each obtained aluminum material was processed under the conditions shown in Tables 9-12 to obtain an aluminum material for electrolytic capacitor electrodes.

The aluminum material obtained in each Example satisfied at least a condition that the L value measured under the same conditions as those of the example in the first embodiment is not less than 25 but not more than 56 when a pre-treatment time is 30 seconds or a condition that the Lab lightness index is not less than 27 but not more than 58 when the pre-treatment time is 45 seconds.

After immersing in an aqueous solution 75 °C containing HCl 1.0 mol/L and $H_2SO_4$ 3.5 mol/L, the aluminum materials obtained in each Example and Comparative Example were subjected to electrolytic treatment at current density of 0.2 A/cm$^2$. The aluminum materials to which the electrolytic treatment were executed were immersed in hydrochloric acid-sulfuric acid mixed aqueous solution having the aforementioned compositions at 90 °C for 360 seconds to increase the pit diameter. Thus, etched foils were obtained. The obtained etched foils were subjected to formation of dielectric (by anodizing) with forming voltage of 270 V in accordance with EIAJ standard to obtain capacitance measuring samples.

Tables 9-12 show the relative capacitance when the capacitance of Comparative Example 1 in the case of the pre-treatment of 30 seconds or 45 seconds is defined as 100.

[Table 3]

| Si, Fe and Cu concentration of Aluminum Slab | | | | |
|---|---|---|---|---|
| | Concentration/Mass ppm | | | |
| | Fe | Si | Cu | Pb |
| Composition 1 | 16 | 23 | 15 | 0.9 |
| Composition 2 | 16 | 23 | 15 | 1.4 |
| Composition 3 | 16 | 23 | 15 | 2.3 |
| Composition 4 | 15 | 21 | 40 | 0.9 |
| Composition 5 | 15 | 21 | 55 | 0.4 |
| Composition 6 | 15 | 21 | 55 | 0.6 |
| Composition 7 | 15 | 21 | 55 | 0.9 |
| Composition 8 | 14 | 21 | 100 | 0.9 |
| Composition 9 | 12 | 20 | 130 | 0.9 |
| Composition 1 0 | 18 | 25 | 8 | 0.9 |
| Composition 1 1 | 10 | 18 | 200 | 0.9 |
| Composition 1 2 | 14 | 21 | 58 | Less than 0.1 |
| Composition 1 3 | 14 | 21 | 57 | 0.2 |
| Composition 1 4 | 13 | 21 | 58 | 3.0 |

[Table 4]

| Step | | | |
|---|---|---|---|
| | | | Method |
| Step 1 | Washing | | Executed under the conditions Shown in Tables 3-5. After rewinding the coil, washed and wound. |
| Step 2 | Heating in oxidizing atmosphere | | Executed under the conditions shown in Table 6 in an atmosphere containing oxygen. In the case of executing in a rewinded state, after heating, winding is performed. |
| Step 3 | Final annealing | | Executed in argon atmosphere |

[Table 5]

| Step 1 Condition (Washing) | |
|---|---|
| Washing method | Condition Number |
| After immersing in n- hexane, dried in the air | Condition 1 |
| After immersing in water containing 0.2 mass% sodium dodecyl sulfate, washed and dried. | Condition 2 |

[Table 6]

| Step 1 Condition (Washing) | | |
|---|---|---|
| Washing method | Aluminum material surface layer removal amount | Condition number |
| 40°C 0.2mass% sodium hydroxide aqueous solution immersion(※1)→ water washing→ drying in the air | 7nm | Condition 3 |
| 40°C 0.2mass% sodium hydroxide aqueous solution immersion(※1)→ water washing→ drying in the air | 10nm | Condition 4 |
| 40°C 0.2mass% sodium hydroxide aqueous solution immersion(1)→ water washing→ drying in the air | 100nm | Condition 5 |
| ※ 40°C 0.2mass% sodium hydroxide aqueous solution immersion(1)→ water washing→ drying in the air | 190nm | Condition 6 |
| ※ 40°C 0.2mass% sodium hydroxide aqueous solution immersion(1)→ water washing→ drying in the air | 490nm | Condition 7 |
| ※ 40°C 0.2mass% calcium hydroxide aqueous solution immersion( 1 )→ water washing→ drying in the air | 100nm | Condition 8 |
| ※ 40°C 0.2mass% potassium hydroxide aqueous solution immersion( 1 )→ water washing→ drying in the air | 100nm | Condition 9 |
| ※ 40°C 0.2mass% sodium orthosilicate aqueous solution immersion( 1)→ water washing→ drying in the air | 100nm | Condition 1 0 |
| ※ 40°C 0.2mass% sodium metasilicate aqueous solution immersion( 1 )→ water washing→ drying in the air | 100nm | Condition 1 1 |
| ※ 40°C 0.2mass% sodium tertiary phosphate aqueous solution immersion( 1 )→ water washing→ drying in the air | 100nm | Condition 1 2 |
| ※ 40°C 0.2mass% sodium carbonate aqueous solution immersion( 1 )→ water washing→ drying in the air | 100nm | Condition 1 3 |
| ※ 40°C (0.2mass% sodium hydroxide+0.2mass%calcium hydroxide aqueous solution) aqueous solution immersion(※ 1)→ water washing→ drying in the air | 100nm | Condition 1 4 |
| 40°C (0.2mass% sodium hydroxide + 0.2mass% potassium hydroxide) aqueous solution immersion (※ 1 )→ water washing→ drying in the air | 100nm | Condition 1 5 |

(continued)

| Step 1 Condition (Washing) | | |
|---|---|---|
| Washing method | Aluminum material surface layer removal amount | Condition number |
| 40°C (0.2mass% sodium hydroxide + 0.2mass% sodium orthosilicate) aqueous solution immersion (※ 1 )→ water washing→ drying in the air | 100nm | Condition 1 6 |
| 40°C (0.2mass% sodium hydroxide+0.2mass% sodium tertiary phosphate) aqueous solution immersion (※ 1) → | 100nm | Condition 1 7 |
| water washing→ drying in the air | | |
| ※ 1 : The removal amount of the aluminum material surface layer was controlled by changing the immersion time in aqueous solution. | | |

[Table 7]

| Step 1 Condition (washing) | | |
|---|---|---|
| Washing method | Aluminum material surface layer removal amount | Condition number |
| 40°C 0.2mass% sodium hydroxide aqueous solution immersion (※ 1) → water washing→ 40°C 5mass% hydrochloric acid aqueous solution 1 minute immersion→ water washing→ drying in the air | 100nm | Condition 1 8 |
| 40°C 0.2mass% sodium hydroxide aqueous solution immersion (※ 1) → water washing→ 40°C 5mass% sulfuric acid aqueous solution 1 minute immersion→ water washing→ drying in the air | 100nm | Condition 1 9 |
| 40°C 0.2mass% sodium hydroxide aqueous solution immersion (1) → water washing → 40°C 5mass% nitric acid aqueous solution1 minute immersion→ water washing→ drying in the air | ※100nm | Condition 2 0 |
| 40°C 0.2mass% sodium hydroxide aqueous solution immersion (※ 1) → water washing→ 40°C 5mass% orthophosphoric acid aqueous solution1 minute immersion→ water washing→ drying in the air | 100nm | Condition 2 1 |
| 40°C 0.2mass% sodium hydroxide aqueous solution immersion (※1) → water washing→ 40°C 3mass% hydrochloric acid+3mass% sulfuric acid aqueous solution 1 minute immersion→ water washing→ drying in the air | 100nm | Condition 2 2 |

(continued)

| Step 1 Condition (washing) | | |
|---|---|---|
| Washing method | Aluminum material surface layer removal amount | Condition number |
| 40°C 0.2mass% sodium hydroxide aqueous solution immersion (※ 1) → water washing→ 40°C3mass% hydrochloric acid+3mass% nitric acid aqueous solution 1 minute immersion→ water washing→ drying in the air | 100nm | Condition 2 3 |
| 40°C 0.2mass% sodium hydroxide aqueous solution immersion (※ 1) → water washing → 40°C 3mass% hydrochloric acid+ 3mass% orthophosphoric acid aqueous solution 1 minute immersion→ water washing→ drying in the air | 100nm | Condition 2 4 |
| 40°C 0.2mass% sodium hydroxide aqueous solution immersion (※ 1) → water washing→ 40°C3mass% sulfuric acid+3mass% nitric acid aqueous solution 1 minute immersion→ water washing→ drying in the air | 100nm | Condition 2 5 |
| 40°C 0.2mass% sodium hydroxide aqueous solution immersion (※ 1) → water washing→ 40°C3mass% sulfuric acid+3mass% orthophosphoric acid aqueous solution 1 minute immersion→ water washing→ drying in the air | 100nm | Condition 2 6 |
| 40°C 0.2mass% sodium hydroxide aqueous solution immersion (※ 1) → water washing→ 40°C3mass% nitric acid +3mass% orthophosphoric acid aqueous solution 1 minute immersion→ water washing→ drying in the air | 100nm | Condition 2 7 |
| 80°C8mass% hydrochloric acid aqueous solutionimmersion(※1) → water washing→ drying in the air | 1.3nm | Condition 2 8 |
| 80°C 20mass% sulfuric acid aqueous solution immersion(※ 1) → water washing→ drying in the air | 10nm | Condition 2 9 |
| 80°C 4.5mass% nitric acid aqueous solution immersion(※ 1) → water washing→ drying in the air | 1.7nm | Condition 3 0 |
| 80°C 20mass% phosphoric acid aqueous solution immersion(※ 1) → water washing→ drying in the air | 10nm | Condition 3 1 |
| ※ 1 : The removal amount of the aluminum material surface layer was controlled by changing the immersion time in aqueous solution. | | |

[Table 8]

| Step 2 Condition (heating in oxidizing atmosphere) | | | | |
|---|---|---|---|---|
| Atmosphere | Heating temperature °C | Heating time | Heating type Batch type: Heating in a coiled state Continuous type: Heating in a uncoiled state | Heating condition |
| Air | 5 0 | 7 2 hours | Batch type | H1 |
| | 7 0 | 4 8 hours | Batch type | H2 |
| | 1 5 0 | 2 4 hours | Batch type | H3 |
| | 2 0 0 | 8 hours | Batch type | H4 |
| | 2 0 0 | 3 0 minutes | Batch type | H5 |
| | 2 2 0 | 5 hours | Batch type | H6 |
| | 3 5 0 | 1 0 seconds | Continuous type | H7 |
| | 3 8 0 | 4 seconds | Continuous type | H8 |
| | 3 3 0 | 7 0 seconds | Continuous type | H9 |
| Oxygen 5vol%, Nitrogen 95vol% | 2 0 0 | 8 hours | Batch type | H10 |
| Oxygen 1vol%, Nitrogen 99vol% | 2 0 0 | 8 hours | Batch type | H11 |
| Oxygen 0.1vol%, Nitrogen 99.9vol% | 2 0 0 | 8 hours | Batch type | H12 |

[Table 9]

| | Ingot Composition | Step 1 | Step 2 | Step 3 | Relative Capacitance % |
|---|---|---|---|---|---|
| | | Washing | Heating in oxidizing atmosphere | Final annealing | |
| Ex. 1 | Composition6 | Condition29 | H4 | 540°C4h | 118 |
| Ex. 2 | Composition7 | Condition1 | H4 | 540°C4h | 116 |
| Ex. 3 | Composition7 | Condition2 | H4 | 540°C4h | 116 |
| Ex. 4 | Composition6 | Condition31 | H4 | 540°C4h | 117 |
| Ex. 5 | Composition6 | Condition30 | H4 | 540°C4h | 109 |
| Ex. 6 | Composition6 | Condition28 | H4 | 540°C4h | 107 |
| Ex. 7 | Composition6 | Condition9 | H4 | 500°C24h | 108 |
| Ex. 8 | Composition6 | Condition10 | H4 | 500°C24h | 109 |
| Ex. 9 | Composition6 | Condition11 | H4 | 500°C24h | 108 |
| Ex. 1 0 | Composition6 | Condition12 | H4 | 500°C24h | 109 |
| Ex. 1 1 | Composition6 | Condition13 | H4 | 500°C24h | 108 |
| Ex. 1 2 | Composition6 | Condition14 | H4 | 500°C24h | 108 |
| Ex. 1 3 | Composition6 | Condition15 | H4 | 500°C24h | 109 |
| Ex. 1 4 | Composition6 | Condition16 | H4 | 500°C24h | 109 |

(continued)

|  | Ingot Composition | Step 1 | Step 2 | Step 3 | Relative Capacitance % |
|---|---|---|---|---|---|
|  |  | Washing | Heating in oxidizing atmosphere | Final annealing |  |
| Ex. 1 5 | Composition6 | Condition17 | H4 | 500°C24h | 109 |
| Ex. 1 6 | Composition6 | Condition18 | H4 | 500°C24h | 114 |
| Ex. 1 7 | Composition6 | Condition19 | H4 | 500°C24h | 113 |
| Ex. 1 8 | Composition6 | Condition20 | H4 | 500°C24h | 113 |
| Ex. 1 9 | Composition6 | Condition21 | H4 | 500°C24h | 113 |
| Ex. 2 0 | Composition6 | Condition22 | H4 | 500°C24h | 113 |

[Table 10]

|  | Ingot Composition | Step 1 | Step 2 | Step 3 | Relative Capacitance % |
|---|---|---|---|---|---|
|  |  | Washing | Heating in oxidizing atmosphere | Final annealing |  |
| Ex. 2 1 | Composition6 | Condition23 | H4 | 500°C24h | 114 |
| Ex. 2 2 | Composition6 | Condition24 | H4 | 500°C24h | 113 |
| Ex. 2 3 | Composition6 | Condition25 | H4 | 500°C24h | 114 |
| Ex. 2 4 | Composition6 | Condition26 | H4 | 500°C24h | 114 |
| Ex. 2 5 | Composition6 | Condition27 | H4 | 500°C24h | 114 |
| Ex. 2 6 | Composition6 | Condition8 | H4 | 500°C24h | 109 |
| Ex. 2 7 | Composition6 | Condition5 | H4 | 500°C24h | 109 |
| Ex. 2 8 | Composition6 | Condition4 | H4 | 500°C24h | 107 |
| Ex. 2 9 | Composition7 | Condition6 | H4 | 500°C24h | 106 |
| Ex. 3 0 | Composition6 | Condition3 | H4 | 500°C24h | 105 |
| Ex. 3 1 | Composition7 | Condition7 | H4 | 500°C24h | 104 |
| Ex. 3 2 | Composition1 | Condition29 | H4 | 540°C4h | 113 |
| Ex. 3 3 | Composition2 | Condition29 | H4 | 540°C4h | 110 |
| Ex. 3 4 | Composition3 | Condition29 | H4 | 540°C4h | 107 |
| Ex. 3 5 | Composition4 | Condition29 | H4 | 540°C4h | 115 |
| Ex. 3 6 | Composition5 | Condition29 | H4 | 540°C4h | 114 |
| Ex. 3 7 | Composition7 | Condition29 | H4 | 540°C4h | 118 |
| Ex. 3 8 | Composition8 | Condition29 | H4 | 540°C4h | 112 |
| Ex. 3 9 | Composition9 | Condition29 | H4 | 540°C4h | 108 |

[Table 11]

| | Ingot Composition | Step 1 | Step 2 | Step 3 | Relative Capacitance % |
|---|---|---|---|---|---|
| | | Washing | Heating in oxidizing atmosphere | Final annealing | |
| Ex. 4 0 | Composition 10 | Condition29 | H4 | 540°C4h | 103 |
| Ex. 41 | Composition11 | Condition29 | H4 | 540°C4h | 104 |
| Ex. 4 2 | Composition1 | Condition1 | H4 | 540°C4h | 112 |
| Ex. 4 3 | Composition2 | Condition1 | H4 | 540°C4h | 111 |
| Ex. 4 4 | Composition3 | Condition1 | H4 | 540°C4h | 108 |
| Ex. 4 5 | Composition4 | Condition1 | H4 | 540°C4h | 114 |
| Ex. 4 6 | Composition5 | Condition1 | H4 | 540°C4h | 103 |
| Ex. 4 7 | Composition6 | Condition1 | H4 | 540°C4h | 105 |
| Ex. 4 8 | Composition8 | Condition1 | H4 | 540°C4h | 112 |
| Ex. 4 9 | Composition9 | Condition1 | H4 | 540°C4h | 108 |
| Ex. 5 0 | Composition10 | Condition1 | H4 | 540°C4h | 103 |
| Ex. 51 | Composition11 | Condition1 | H4 | 540°C4h | 105 |
| Ex. 5 2 | Composition6 | Condition29 | H1 | 540°C4h | 104 |
| Ex. 5 3 | Composition6 | Condition29 | H2 | 540°C4h | 107 |
| Ex. 5 4 | Composition6 | Condition29 | H3 | 540°C4h | 116 |
| Ex. 5 5 | Composition6 | Condition29 | H5 | 540°C4h | 110 |
| Ex. 5 6 | Composition6 | Condition29 | H6 | 540°C4h | 115 |
| Ex. 5 7 | Composition6 | Condition29 | H7 | 540°C4h | 110 |
| Ex. 5 8 | Composition6 | Condition29 | H8 | 540°C4h | 108 |

[Table 12]

| | Ingot Composition | Step 1 | Step 2 | Step 3 | Relative Capacitance % |
|---|---|---|---|---|---|
| | | Washing | Heating in oxidizing atmosphere | Final annealing | |
| Ex. 5 9 | Composition6 | Condition29 | H9 | 540°C4h | 111 |
| Ex. 6 0 | Composition6 | Condition29 | H10 | 540°C4h | 115 |
| Ex. 6 1 | Composition6 | Condition29 | H11 | 540°C4h | 110 |
| Ex. 6 2 | Composition6 | Condition29 | H12 | 540°C4h | 104 |
| Ex. 6 3 | Composition7 | Condition 1 | H1 | 540°C4h | 103 |
| Ex. 6 4 | Composition7 | Condition 1 | H2 | 540°C4h | 106 |
| Ex. 6 5 | Composition7 | Conditian1 | H3 | 540°C4h | 115 |
| Ex. 6 6 | Composition7 | Condition 1 | H5 | 540°C4h | 109 |
| Ex. 6 7 | Composition7 | Condition 1 | H6 | 540°C4h | 114 |
| Ex. 6 8 | Composition7 | Condition 1 | H7 | 540°C4h | 108 |
| Ex. 6 9 | Composition7 | Condition1 | H8 | 540°C4h | 107 |

(continued)

| | Ingot Composition | Step 1 | Step 2 | Step 3 | Relative Capacitance % |
|---|---|---|---|---|---|
| | | Washing | Heating in oxidizing atmosphere | Final annealing | |
| Ex. 7 0 | Composition7 | Condition1 | H9 | 540°C4h | 110 |
| Ex. 7 1 | Composition7 | Condition1 | H10 | 540°C4h | 113 |
| Ex. 7 2 | Composition7 | Condition1 | H11 | 540°C4h | 109 |
| Ex. 7 3 | Composition7 | Condition1 | H12 | 540°C4h | 103 |
| Ex. 7 4 | Composition7 | No washing | H3 | 540°C4h | 113 |
| Ex. 7 5 | Composition7 | No washing | H3 | 480°C24h | 108 |
| Ex. 7 6 | Composition7 | No washing | H3 | 570°C4h | 110 |
| Ex. 7 7 | Composition6 | Condition4 | H4 | 540°C4h | 107 |
| Com. Ex. 1 | Composition6 | Condition4 | No heating | 540°C4h | 100 |
| com. Ex.2 | Composition12 | Condition4 | H4 | 540°C4h | 75 |
| Com. Ex.3 | Composition12 | Condition4 | No heating | 540°C4h | 70 |
| Com. Ex.4 | Composition13 | Condition1 | H4 | 540°C4h | 98 |
| Com. Ex.5 | Composition14 | Condition1 | H4 | 540°C4h | 98 |

As understood from the results shown in the aforementioned Tables, by subjecting an aluminum material containing Pb falling within the range specified by the present invention to final annealing after heating it in an oxidizing atmosphere, an aluminum material for electrolytic capacitors excellent in etching characteristics can be obtained. Furthermore, in Examples in which the Cu content is not less than 10 ppm but not more than 150 ppm, as compared with Examples to which heating in the oxidizing atmosphere and the final annealing under the same conditions in which the Cu content exceeds 150 ppm, the capacitance is higher.

On the other hand, in Comparative Example 1, since no heating in an oxidizing atmosphere was executed, the capacitance is lower than Examples. In Comparative Example 2, since heating was executed in an oxidizing atmosphere, although the capacitance was increased as compared with Comparative Example 3 in which no heating in an oxidizing atmosphere was executed, in Comparative Example 2 and 3, since the Pb content was less than 0.1 mass ppm, the capacitance was lower than those of Examples. In Comparative Example 4, the Pb content was less than the lower limit of the present invention. In Comparative Example 5, the Pb content exceeded the upper limit of the present invention. Therefore, both of them were low in capacitance.

[THIRD EMBODIMENT]

This embodiment is also directed to a production method preferably used to produce the aluminum material for electrolytic capacitor electrodes explained in the first embodiment.

The present inventors have found the fact that in producing an aluminum material for electrolytic capacitor electrodes in which an aluminum material containing Pb not less than 0.3 mass ppm but not more than 2.5 mass ppm is sequentially subjected to hot rolling, cold rolling, intermediate rolling and finish cold rolling, and then final annealing, by executing intermediate annealing in an oxidizing atmosphere and executing heating of the aluminum material in an oxidizing atmosphere after finish cold rolling but before final annealing, when the aluminum material is etched after the final annealing, the solubility of the surface layer of the aluminum material becomes even, resulting in enhanced electrolytic etching characteristics. They also have found the fact that the etching characteristics can be further improved by appropriately adjusting the Pb composition in accordance with the conditions of washing to be executed after completion of cold rolling but before heating in an oxidizing atmosphere.

Hereinafter, the production method of an aluminum material for electrolytic capacitors will be detailed.

The purity of the aluminum material is not specifically limited so long as it falls within a range in which an electrolytic capacitor electrode can be used. It is preferable that the aluminum material is 99.9 mass% or higher in purity, more preferably 99.95 mass% or higher in purity. In this invention, for descriptive purposes, aluminum purity of an aluminum material will be defined as a value obtained by subtracting a total concentration (mass%) of Fe, Si and Cu from 100 mass%.

In this specification, in some cases, "mass ppm" is used in place of "mass%." In this case, 1 mass% is 10,000 mass ppm.

Pb segregates in an aluminum material surface layer at the time of executing final annealing, which heavily affects etching pit generation. In creating tunnel-like etching pits by a DC etching method, if the Pb concentration is too low, the etching pit dispersity deteriorates, and if the Pb concentration is too high, the surface dissolved amount of the aluminum material increases. In the present invention, in order to exert improving effects of etching characteristics by heating an aluminum material in an oxidizing atmosphere, the Pb content is regulated to not less than 0.3 mass ppm but not more than 2.5 mass ppm.

Furthermore, it is preferable that Cu not less than 10 mass ppm but not more than 150 mass ppm is contained to further improve the dispersity of etching pits. If the Cu content is less than 10 mass ppm, the dispersity of etching pits may become insufficient. If it exceeds 150 mass ppm, the dissolved decreased amount of the aluminum material during the electrolytic etching increases, which may cause deterioration of capacitance. It is more preferable that the Cu content is not less than 15 mass ppm but not more than 100 mass ppm.

The production steps of the aluminummaterial are not limited. A dissolution component adjustment of an aluminum material and slab casting, hot rolling, cold rolling, intermediate annealing in an oxidizing atmosphere, finish cold rolling (low reduction rolling), heating in an oxidizing atmosphere and final annealing are executed sequentially. It is preferable to execute washing after completion of the cold rolling but before the heating in the oxidizing atmosphere. The execution of the washing cleans the surface of the aluminum material, improving the etching characteristics, which in turn can increase the capacitance.

The heating method for the intermediate annealing in an oxidizing atmosphere is not specifically limited. As the heating method, ventilation heating and radiation heating can be exemplified. The temperature raising rate and pattern at the time of heating the aluminum material in an oxidizing atmosphere is not specifically limited, and can be performed under the conditions that the area fraction of cube orientation after the final annealing increases. The form of the aluminum material to be heated is not specifically limited. The aluminum material can be subjected to batch heating in a coiled state or can be winded into a coil after being continuously heated while being rewinded.

The intermediate annealing temperature in an oxidizing atmosphere is preferably not lower than 200 °C but not higher than 320 °C because of the following reasons. If the intermediate annealing temperature is less than 200 °C, it may be difficult to obtain sufficient texture required to preferentially growth recrystallized grains with cube orientation at the time of the final annealing. To the contrary, if the intermediate annealing temperature exceeds 320 °C, recrystallized grains which disturbs preferential growth of cubic orientation grains at the time of the final annealing may grow. The intermediate annealing temperature and time to obtain good area fraction of cube orientation depends on the composition of the aluminum material. Conditions capable of obtaining high area fraction of cube orientation after the final annealing are selected.

The intermediate annealing in the oxidizing atmosphere within the aforementioned temperature range causes oxidization of the aluminum material, resulting in even dissolve of the aluminum material surface layer.

The finish cold rolling is a step for controlling the cube orientation to be executed in combination with the intermediate annealing, and can be executed by a known method.

A washing liquid used for washing the aluminum material can be organic solvent, water containing surfactant, alkaline aqueous solution or acid aqueous solution.

In the case of removing the aluminum material surface layer by washing, at least one of alkaline aqueous solution and acid aqueous solution can be used. Eitheroneofthemcanbeused. Afterexecuting using alkaline aqueous solution, washing can be executed using acid aqueous solution.

The Pb content in the aluminummaterial in the case of removing the aluminum material surface layer by the washing using at least one of the alkaline aqueous solution and the acid aqueous solution can be not less than 0.3 mass ppm but not more than 2.5 mass ppm which is within the range of the present invention. If the Pb content is less than 0.3 mass ppm, the etching pit dispersity deteriorates. If it exceeds 2.5 mass ppm, the surface dissolution of the aluminum material increases, causing decreased capacitance. The Pb content is preferably not less than 0.4 mass ppm but not more than 1.8 mass ppm, more preferably not less than 0.5 mass ppm but not more than 1.2 mass ppm.

The Pb content in the case of washing the aluminum material using at least one of organic solvent, water containing surfactant, and a mixture of water-soluble organic solvent and water is preferably not less than 0.6 mass ppm but not more than 2.5 mass ppm. If the Pb content is less than 0.6 mass ppm, the etching pit dispersity deteriorates. If it exceeds 2.5 mass ppm, the surface dissolution of the aluminum material increases, which may cause decreased capacitance. The Pb content is preferably not less than 0.7 mass ppm but not more than 1.8 mass ppm, more preferably not less than 0.7 mass ppm but not more than 1.2 mass ppm.

The organic solvent for use in the washing is not specifically limited. As examples, alcohol, diol, aromatic hydrocarbon such as, e.g., toluene, xylene, alkane series of hydrocarbons, cyclohexane, ketone, ether, ester, and petroleum products can be exemplified.

As examples of the aforementioned alcohol, methanol ($CH_3oH$), ethanol ($C_2H_5OH$), 1- propanol ($CH_3CH_2CH_2OH$), 2-propanol ($CH_3CH(OH)CH_3$), 1-butanol ($CH_3CH_2CH_2CH_2OH$), 2-butanol ($CH_3CH_2CH(OH)CH_3$), 1-pentanol ($CH_3CH_2CH_2CH_2 CH_2OH$), and 2-pentanol ($CH_3CH_2CH_2CH(OH)CH_3$) can be exemplified. It is preferable that the alcohol is represented by $C_nH_{2n+1}OH$(n=1-10: natural number). Alicyclic compounds, such as, e. g. , cyclohexanol, can also be used.

As examples of the aforementioned diol, 1, 2-ethanediol ($HOCH_2CH_2OH$), 1, 2-propanediol ($CH_3CH(OH) CH_2OH$), an 1, 3-propanediol ($HOCH_2CH_2CH_2OH$) can be exemplified.

As examples of the aforementioned alkane hydrocarbon, pentane ($C_5H_{12}$), hexane ($C_6H_{14}$), heptane ($C_7H_{16}$) , octane ($C_8H_{18}$) , nonane ($C_9H_{20}$), and decane ($C_{10}H_{22}$) can be exemplified. It is preferable that the alkane hydrocarbon is represented by $C_nH_{2n+2}$ (n=5-15: natural number). Alicyclic hydrocarbon, such as, e.g., cyclohexane, can also be used.

As examples of the aforementioned ketone, acetone ($CH_3COCH_3$), 2- butanone ($CH_3COC_2H_5$), 3-pentanone ($CH_3CH_2COCH_2CH_3$) , and 3-methyl-2-butanone ($CH_3COCH(CH_3)H_2$) can be exemplified. It is preferable that the ketone is represented by R1COR2(R1 and R2: aliphatic hydrocarbon group, the total of carbon number of R1 and R2 is 8 or less) . Cyclic ketone, such as, e. g. , cyclohexane ($C_6H_{10}O$), can be used.

As examples of the aforementioned ether, a substance represented by R1-O-R2 (R1 and R2: aliphatic hydrocarbon group, the total of carbon number of R1 and R2 is 8 or less), and glycol ether, such as, e.g., 2- methoxyethanol ($CH_3OCH_2CH_2OH$), 2-ethoxyethanol ($CH_3CH_2OCH_2CH_2OH$), 2- butoxyethanol ($CH_3CH_2CH_2OCH_2CH_2OH$), 2-(2-ethoxy) ethoxyethanol ($CH_3CH_2OCH_2CH_2O CH_2CH_2OH$), can be exemplified.

As examples of the aforementioned ester, acetate ester represented by $CH_3COOR$ (R: aliphatic hydrocarbon group with carbon number 1-5) can be exemplified.

As examples of the aforementioned petroleum products, industrial gasoline (JIS K 2201), automobile gasoline (JIS K 2202) , aviation gasoline (JIS K 2206), kerosene (JIS K 2203), diesel oil (JIS K 2204), petroleum ether (JIS K 8593), petroleum benzin (JIS K 8594), ligroin (JIS K 8937), and kerosene can be exemplified.

As water-soluble organic solvent capable of being used by mixing in water, Among the aforementioned organic solvents, methanol, ethanol, propanol, acetone, etc., can be exemplified.

The aforementioned surfactant contained in the washing liquid to which surfactant is added to water is not specifically limited, and can be anion surfactant, Cationic surfactant, or nonionic surfactant.

As the aforementioned anion surfactant, sulfuric ester salt or sulfonate salt can be used.

As the aforementioned sulfuric ester salt, $R-OSO_3Na$ (R= saturated hydrocarbon group with carbon number 8-18 or non-saturated hydrocarbon group with one double bond) can be used. Concretely, sodium dodecyl sulfate ($C_{12}H_{25}OSO_3Na$), sodium hexadecyl sulfate ($C_{16}H_{33}OSO_3Na$), and sodium stearyl sulfate ($C_{18}H_{37}OSO_3Na$), sodiumo-leyl sulfate ($C_{18}H_{35}OSO_3Na$) can be exemplified.

The aforementioned sulfonate can be a substance represented by $R-SO_3Na$ (R=saturated hydrocarbon group with a carbon number of 8-18 or unsaturated hydrocarbon group with one double-bond) or $R-SO_3Na$ (R= saturated hydrocarbon group with a carbon number of 8-14 or alkyl-benzil which is unsaturated hydrocarbon group with one double-bond) such as sodium dodecylbenzenesulfonate ($C_{12}H_{25}-C_6H_6-SO_3Na$).

As the aforementioned cationic surfactant, quaternary ammonium represented by $R-N^+ (CH_3) _3Cl^-$ (r= saturated hydrocarbon group with carbon number 8-16) can be used.

As the aforementioned nonionic surfactant, polyethylene glycols type ionic surfactant represented by $R-O-(-CH_2CH_2O)_nH$ (R= saturated hydrocarbon group with carbon number 8-16 or non-saturated hydrocarbon group with one double bond, n=6-14) or $R-O-(-CH_2CH_2O)_nH$ (R= alkylphenyl in which alkylphenyl is saturated hydrocarbon group with a carbon number of 8-12 or unsaturated hydrocarbon group with one double-bond, n=6-14) can be exemplified. A substance in which n exceeds the aforementioned range can be contained in nonionic surfactant at the mole ratio of not more than 50%.

Washing liquid in which at least one or more of the aforementioned surfactant is added to water can be used. Surfactant whose carbon number is less than the aforementioned range can be added at the mole ratio of 50% or less. It is preferable to avoid mixture of anion surfactant and cation surfactant in water because the mixture thereof in water results in a precipitate.

Although the additive concentration of the surfactant is not specifically limited, it is preferably not less than the critical micellar concentration to exert the washing effects.

As the alkali in the alkaline aqueous solution used for washing, sodium hydroxide, calcium hydroxide, potassium hydroxide, sodium orthosilicate, sodium metasilicate, sodium tertiary phosphate, and sodium carbonate can be exemplified. One of more selected from the above alkali dissolved with water can be used washing liquid.

As the acid in the acid aqueous solution used for washing, one or more acids selected from the group comprising hydrochloric acid, sulfuric acid, nitric acid, acid containing phosphorus can be used. As the acid containing acid containing phosphorus, orthophosphoric acid (hereinafter referred to as "phosphoric acid"), pyrophoric acid, metaphosphoric acid, and polyphosphoric acid can be exemplified. Perchloric acid and hypochlorous acid can also be used.

The removal amount of the surface layer of the aluminum material by alkaline aqueous solution or acid aqueous solution can be adjusted by appropriately setting the concentration of alkali or acid, the temperature of the alkaline aqueous solution or the acid aqueous solution, and the contact time of the aluminum material in contact with the alkaline aqueous solution or the acid aqueous solution. For the purpose of enhancing the washing effects of the surface layer of the aluminum member, surfactant or chelating agent can be added to the washing liquid.

The removal amount of the aluminum material surface layer by the washing is preferably not less than 1 nm but not more than 500 nm per one side of the aluminum material on an average. If the surface layer removal amount is less than 1 nm on an average, the removal of the oxide film of the aluminum material surface may become insufficient. If the surface layer is removed by 500 nm or more, generation of etching pit nuclei in the aluminum material surface layer is suppressed, which rather causes deterioration of capacitance due to poor etching characteristics. The preferable removal amount by washing is not less than 1.5 nm but not more than 20 nm per one side of the aluminum material, more preferably not less than 5 nm but not more than 200 nm, still more preferably not less than 10 nm but not more than 150 nm, on an average.

Although the aluminum material surface layer oxide film and the metallic aluminum are different in density, in the present invention, the removal amount D (nm) of the aluminum material surface layer is defined as D (nm) =$E \times 10^7/2.7$ using the reduced amount E (g/cm$^2$) per unit surface area by the washing and the aluminum density 2.7 g/cm$^3$.

The contact method of the washing liquid and the aluminum material is not specifically limited. As the contact method, immersing the aluminum material in washing liquid, contacting the aluminummaterial to washing liquid surface, and spray washing liquid can be exemplified.

The heating method in an oxidizing atmosphere is not specifically limited. As the heating method, ventilation heating and radiation heating can be exemplified. The form of the aluminum material to be heated is not specifically limited. The aluminum material can be subjected to batch heating in a coiled state or can be winded into a coil after being continuously heated while being rewound.

The heating temperature of the aluminum material in an oxidizing atmosphere is preferably 50 to 400 °C. If the heating temperature is lower than 50 °C, the property of the aluminum surface layer dissolve at the time of etching the aluminum material executed after thefinalannealing becomes uneven. If the heating temperature exceeds 400 °C, the surface layer oxide film of the aluminum material becomes excessively thick, resulting in deteriorated etching characteristics of the aluminum material after the final annealing. The more preferable heating temperature of the aluminum material is 70 to 350 °C

The heating time is preferably not shorter than 3 seconds but not longer than 72 hours. If the heating time is shorter than 3 seconds, the property of the aluminum surface layer dissolve at the time of etching the aluminum material executed after the final annealing becomes uneven. If the heating time exceeds 72 hours, the solubility evenness of the aluminum material surface layer becomes almost unchanged, resulting increased cost due to the energy consumption at the time of the heating. The preferable heating time is not shorter than 10 seconds but not longer than 48 hours, more preferably not shorter than 70 seconds but not longer than 48 hours.

The heating temperature and time in the oxidizing atmosphere are appropriately selected depending on the heating method. For example, in the case of heating the aluminum material in a coiled manner, the coiled aluminum material is preferably heated at a temperature of 50 °C to 280 °C for 30 minutes to 72 hours. In the case of heating the aluminum material in an uncoiled manner or in a sheet-like cut manner, it is preferable that the heating time t (time) meets $10/(1.44 \times X^{1.5}) \leqq t \leqq 72$, more preferably $10/(1.44 \times X^{1.5}) \leqq t \leqq 48$, where the heating temperature is X °C.

The oxygen concentration at the time of heating the aluminum material in the oxidizing atmosphere is preferably not less than 0.1 vol%. If the oxygen concentration is less than 0.1 vol%, the aluminum material surface may not be sufficiently oxidized at the time of the heating. It is preferable that the oxygen concentration is not less than 1 vol%, more preferably not less than 5 vol% to preferably utilize air as an oxidizing atmosphere.

The processing atmosphere for the final annealing of the aluminum material is not specifically limited. It is preferable to heat the aluminum material in an atmosphere with less water and oxygen so as not to increase the thickness of the oxide film. Concretely, it is preferable to heat the aluminum material in an inert gas atmosphere such as an argon atmosphere or a nitrogen atmosphere or in a vacuum atmosphere 0.1 Pa or below. As the atmosphere for the final annealing, hydrogen gas can be preferably used.

The area fraction of cube orientation of the aluminummaterial after the final annealing is preferably not less than 90%.

The method of the final annealing is not specifically limited. The aluminum material can be subjected to batch annealing in a coiled state, or the coiled aluminum material can be rewound and subjected to continuous annealing, then wound into a coil. At least one of the batch annealing and the continuous annealing can be preformed plural times.

The temperature and time for the annealing is not specifically limited. For example, in the case of executing batch annealing, it is preferable to execute the annealing at a temperature of 450 to 600 °C for 10 minutes to 50 hours. If the temperature is less than 10 minutes, a surface capable of creating etching pits evenly may not be obtained. To the contrary, if the annealing is executed at a temperature exceeding 600 °C, the aluminum material becomes adhesive. Even if the annealing is executed for 50 hours or more, the surface enlarging effects by the etching will be saturated, which rather increases the heat energy cost. Especially, the annealing is preferably executed at a temperature of 460 to 570 °C for 20 minutes to 40 hours.

The temperature raising speed and pattern is not specifically limited. The temperature can be raised at a constant speed. Alternatively, while repeating the temperature raising and the temperature maintaining, step temperature raising and cooling can be performed. In any event, at the annealing step, it is enough to execute the annealing at a temperature range of from 450 °C to 600 °C for a total 10 minutes to 50 hours.

Steps and step conditions other than those defined by the present invention are not specifically limited, and can be performed by common procedures. Considering etching conditions of the aluminum material, the production method of the aluminum material can be arbitrarily changed.

The thickness of the aluminum material for electrolytic capacitor electrodes to be obtained after the final annealing is not specifically limited. In the present invention, the thickness can be 200 $\mu$m or less called "foil" and a thickness exceeding 200 $\mu$m.

The aluminum material to which the final annealing was executed is subjected to etching treatment to enhance the area increasing ratio. Although the etching treatment conditions are not specifically limited, it is preferable to employ a DC etching method. By employing a DC etching method, at portions where etching pit nuclei were generated at the annealing, the aluminum material will be etched deeply and thickly, creating a number of tunnel-like pits, which realizes high capacitance.

After the etching treatment, it is preferable to execute a formation of dielectric (by anodizing) to obtain an anode material. It is preferably used as a medium-voltage or high-voltage electrolytic capacitor electrode, but the present invention does not prevent the material from being used as a cathodic material. An electrolytic capacitor using this electrode material can have large capacitance.

The measurement of capacitance can be performed by a common procedure. For example, in an etched, and then formed foil to which a formation of dielectric (by anodizing) was executed, a method of measuring the capacitance in an ammonium borate aqueous solution 80 g/L at 30 °C using a stainless plate as a counter electrode can be exemplified.

## EXAMPLE 3

Hereinafter, examples according to a third embodiment and comparative examples are shown.

Aluminum slabs containing Fe, Si, Cu and Pb shown in Table 13 were prepared. A plate obtained by hot-rolling the aluminum slab was cold-rolled into an aluminum plate 140 $\mu$m in thickness, 500 mm in width, and 1,500 m in length. The plate was sequentially subjected to intermediate annealing, finish cold rolling, washing, heating in an oxidizing atmosphere, and final annealing to obtain an aluminum material for electrolytic capacitor electrodes.

Table 14 shows types of steps (Step 1 to Step 5) from intermediate annealing to final annealing, Table 15 shows the conditions of the intermediate annealing (Step 1), Tables 16-18 shows the conditions of the washing (Step 3) shown in Table 2, and Table 19 shows the conditions of the heating (Step 4) in an oxidizing atmosphere shown in Table 14.

The removal amount of the aluminum material surface layer was controlled by adjusting the immersion time in washing liquid in the case of washing using alkaline aqueous solution or acid aqueous solution, and by adjusting the immersion time in alkaline aqueous solution in the case of washing using acid aqueous solution after washing using alkaline aqueous solution.

EXAMPLE 1

The plate obtained by hot-rolling the aluminum slab having the composition 6 shown in Table 13 was cold-rolled into an aluminum member 140 $\mu$m in thickness, 500 mm in width, and 1, 500 m in length. After executing intermediate annealing (Step 1) in the air at 260 °C for 18 hours, this aluminum material was subjected to finish cold rolling 20% in reduction rate. The aluminum member after the finish cold rolling was washed with 80 °C 20 mass % sulfuric acid aqueous solution under the conditions 29 shown in Table 18, and the aluminum material surface layer was removed by 10 nm (Step 3). The aluminum material was heated in the air for 8 hours at 200 °C under the condition H4 shown in Table 19 (Step 4) and then subjected to 540 °C x 4 hours final annealing (Step 5) in argon atmosphere. Thus, an aluminum material for electrolytic capacitor electrodes was obtained.

EXAMPLES 2-86, COMPARATIVE EXAMPLES 1-5

The aluminum slabs having various compositions (concrete compositions ware shown in Table 13) shown in Tables 20-24 were processed under the conditions shown in Tables 20-24 to obtain an aluminum material for electrolytic capacitor electrodes.

The aluminum material obtained in each Example satisfied at least a condition that the L value measured under the same conditions as those of the example in the first embodiment is not less than 25 but not more than 56 when a pre-treatment time is 30 seconds or a condition that the Lab lightness index is not less than 27 but not more than 58 when the pre-treatment time is 45 seconds.

After immersing in an aqueous solution 75 °C containing HCl 1.0 mol/L and $H_2SO_4$ 3.5 mol/L, the aluminum materials obtained in each Example and Comparative Example were subjected to electrolytic treatment at current density of 0.2 A/cm$^2$. The aluminum materials to which the electrolytic treatment were executed were immersed in hydrochloric acid-sulfuric acid mixed aqueous solution having the aforementioned compositions at 90 °C for 360 seconds to increase the pit diameter. Thus, etched foils were obtained. The obtained etched foils were subjected to formation of dielectric (by anodizing) with forming voltage of 270 V in accordance with EIAJ standard to obtain capacitance measuring samples.

Tables 20-24 show the relative capacitance when the capacitance of Comparative Example 1 in the case of the pre-treatment of 30 seconds or 45 seconds is defined as 100.

[Table 13]

| Si, Fe, and Cu concentration of aluminum slab | | | | |
|---|---|---|---|---|
| | Concentration/Mass ppm | | | |
| | Fe | Si | Cu | Pb |
| Composition 1 | 16 | 23 | 15 | 0.9 |
| Composition 2 | 16 | 23 | 15 | 1.4 |
| Composition 3 | 16 | 23 | 15 | 2.3 |
| Composition 4 | 15 | 21 | 40 | 0.9 |
| Composition 5 | 15 | 21 | 55 | 0.4 |
| Composition 6 | 15 | 21 | 55 | 0.6 |
| Composition 7 | 15 | 21 | 55 | 0.9 |
| Composition 8 | 14 | 21 | 100 | 0.9 |
| Composition 9 | 12 | 20 | 130 | 0.9 |
| Composition 1 0 | 18 | 25 | 8 | 0.9 |
| Composition 1 1 | 10 | 18 | 200 | 0.9 |
| Composition 1 2 | 14 | 21 | 58 | Less than 0.1 |
| Composition 1 3 | 14 | 21 | 57 | 0.2 |
| Composition 1 4 | 15 | 21 | 58 | 3.0 |
| Composition 1 5 | 50 | 50 | 20 | 0.9 |
| Composition 1 6 | 30 | 38 | 20 | 0.9 |
| Composition 1 7 | 8 | 8 | 35 | 0.9 |

[Table 14]

| Step | | |
|---|---|---|
| | | Method |
| Step 1 | intermediate annealing | Executed under conditions shown in Table 3 |
| Step 2 | finish cold rolling | Executed at reduction ratio of 20% |
| Step 3 | washing | Executed under conditions shown in Tables 4-6. After rewinding from a coil, washed and winded. |

(continued)

| Step | | | |
|---|---|---|---|
| | | | Method |
| Step 4 | Heating in oxidizing atmosphere | | Executed under conditions containing oxygen shown in Table 7. In the case of executing in a rewinded state, winded after heating. |
| Step 5 | final annealing | | Executed in argon atmosphere |

[Table 15]

| Step 1 Condition (intermediate annealing) | | | |
|---|---|---|---|
| Atmosphere | Heating temperature (°C) | Heating time | Heating condition |
| Air | 210 | 12hours | Condition A |
| | 210 | 30hours | Condition B |
| | 230 | 22hours | Condition C |
| | 260 | 18hours | Condition D |
| | 275 | 4hours | Condition E |
| | 275 | 7hours | Condition F |
| | 310 | 3hours | Condition G |
| Oxygen 5vol%, nitrogen 95vol% | 260 | 18hours | Condition H |
| Oxygen 1vol%, nitrogen 99vol% | 260 | 18hours | Condition I |
| Oxygen 0.1 vol%, nitrogen 99.9vol% | 260 | 18hours | Condition J |
| Nitrogen 99.99vol% or more | 260 | 18hours | Condition K |

[Table 16]

| Step 3 Condition (washing) | |
|---|---|
| Washing method | Condition number |
| After immersing in n- hexane, dried in the air | Condition 1 |
| After immersing in water containing 0.2 mass% sodium dodecyl sulfate, washed and dried. | Condition 2 |

[Table 17]

| Step 3 Condition (washing) | | |
|---|---|---|
| Washing method | Aluminum material surface layer removal amount | Condition number |
| 40°C 0.2mass% sodium hydroxide aqueous solution immersion (※ 1) → water washing→ drying in the air | 7nm | Condition 3 |
| 40°C 0.2mass% sodium hydroxide aqueous solution immersion(※ 1 )→ water washing→ drying in the air | 10nm | Condition 4 |

(continued)

| Step 3 Condition (washing) | | |
| --- | --- | --- |
| Washing method | Aluminum material surface layer removal amount | Condition number |
| 40°C 0.2mass% sodium hydroxide aqueous solution immersion(※1)→ water washing→ drying in the air | 100nm | Condition 5 |
| 40°C 0.2mass% sodium hydroxide aqueous solution immersion(※ 1 )→ water washing→ drying in the air | 190nm | Condition 6 |
| 40°C 0.2mass% sodium hydroxide aqueous solution immersion(※ 1 )→ water washing→ drying in the air | 490nm | Condition 7 |
| 40°C 0.2mass% calcium hydroxide aqueous solution immersion(※ 1 )→ water washing→ drying in the air | 100nm | Condition 8 |
| 40°C 0.2mass% potassium hydroxide aqueous solution immersion(※1 )→ water washing→ drying in the air | 100nm | Condition 9 |
| 40°C 0.2mass% sodium orthosilicate aqueous solution immersion(※ 1)→ water washing→ drying in the air | 100nm | Condition 1 0 |
| 40°C 0.2mass% sodium metasilicate aqueous solution immersion(※ 1)→ water washing→ drying in the air | 100nm | Condition 1 1 |
| 40°C 0.2mass% sodium tertiary phosphate aqueous solution immersion(※ 1)→ water washing→ drying in the air | 100nm | Condition 1 2 |
| 40°C 0.2mass% sodium carbonate aqueous solution immersion(※1)→ water washing→ drying in the air | 100nm | Condition 1 3 |
| 40°C (0.2mass% sodium hydroxide+0.2mass%calcium hydroxide aqueous solution)aqueous solution immersion (X 1 )→ water washing→ drying in the air | 100nm | Condition 1 4 |
| 40°C (0.2mass% sodium hydroxide+0.2mass% potassium hydroxide) aqueous solution immersion(※ 1 )→ water washing → drying in the air | 100nm | Condition 1 5 |
| 40°C (0.2mass% sodium hydroxide+0.2mass% sodium orthosilicate) aqueous solution immersion(※ 1 )→water washing→ drying in the air | 100nm | Condition 1 6 |

(continued)

| Step 3 Condition (washing) | | |
| --- | --- | --- |
| Washing method | Aluminum material surface layer removal amount | Condition number |
| 40°C (0.2mass% sodium hydroxide+0.2mass% sodium tertiary phosphate) aqueous solution immersion(※ 1 )→ water washing→ drying in the air | 100nm | Condition 1 7 |
| ※ 1 : The removal amount of the aluminum material surface layer was controlled by changing the immersion time in aqueous solution. | | |

[Table 18]

| Step 3 Condition (washing) | | |
| --- | --- | --- |
| Washing method | Aluminum material surface layer removal amount | Condition number |
| 40°C 0.2mass% sodium hydroxide aqueous solution immersion (※ 1) → water washing→ 40°C 5mass% hydrochloric acid aqueous solution 1 minute immersion→ water washing→ drying in the air | 100nm | Condition 1 8 |
| 40°C 0.2mass% sodium hydroxide aqueous solution immersion (※ 1) → water washing→ 40°C 5mass% sulfuric acid aqueous solution 1 minute immersion→ water washing→ drying in the air | 100nm | Condition 1 9 |
| 40°C 0.2mass% sodium hydroxide aqueous solution immersion (※ 1) → water washing→ 40°C 5mass% nitric acid aqueous solution1 minute immersion→ water washing→ drying in the air | 100nm | Condition 2 0 |
| 40°C 0.2mass% sodium hydroxide aqueous solution immersion (※ 1) → water washing→ 40°C 5mass% orthophosphoric acid aqueous solution1 minute immersion→ water washing→ drying in the air | 100nm | Condition 2 1 |
| 40°C 0.2mass% sodium hydroxide aqueous solution immersion (※1) → water washing→ 40°C 3mass% hydrochloric acid+3mass% sulfuric acid aqueous solution 1 minute immersion→ water washing→ drying in the air | 100nm | Condition 2 2 |
| 40°C 0.2mass% sodium hydroxide aqueous solution immersion (※1) → water washing→ 40°C3mass% hydrochloric acid+3mass% nitric acid aqueous solution 1 minute immersion→ water washing→ drying in the air | 100nm | Condition 2 3 |

(continued)

| Step 3 Condition (washing) | | |
| --- | --- | --- |
| Washing method | Aluminum material surface layer removal amount | Condition number |
| 40°C 0.2mass% sodium hydroxide aqueous solution immersion (※1) → water washing → 40°C 3mass% hydrochloric acid+3 mass% orthophosphoric acid aqueous solution 1 minute immersion→ water washing→ drying in the air | 100nm | Condition 2 4 |
| 40°C 0.2mass% sodium hydroxide aqueous solution immersion (※1) → water washing→ 40°C3mass% sulfuric acid+3mass% nitric acid aqueous solution 1 minute immersion→ water washing→ drying in the air | 100nm | Condition 2 5 |
| 40°C 0.2mass% sodium hydroxide aqueous solution immersion (※1) → water washing→ 40°C3mass% sulfuric acid+3mass% orthophosphoric acid aqueous solution 1 minute immersion→ water washing→ drying in the air | 100nm | Condition 2 6 |
| 40°C 0.2mass% sodium hydroxide aqueous solution immersion (※1) → water washing→ 40°C3mass% nitric acid +3mass% orthophosphoric acid aqueous solution 1 minute immersion→ water washing→ drying in the air | 100nm | Condition 2 7 |
| 80°C8mass% hydrochloric acid aqueous solutionimmersion (※ 1) → water washing→ drying in the air | 1.3nm | Condition 2 8 |
| 80°C 20mass% sulfuric acid aqueous solution immersion (※ 1)→ water washing→ drying in the air | 10nm | Condition 2 9 |
| 80°C 4.5mass% nitric acid aqueous solution immersion (※ 1)→ water washing→ drying in the air | 1.7nm | Condition 3 0 |
| 80°C 20mass% phosphoric acid aqueous solution immersion (※ 1) → water washing→ drying in the air | 10nm | Condition 3 1 |
| ※ 1 : The removal amount of the aluminum material surface layer was controlled by changing the immersion time in aqueous solution. | | |

[Table 19]

| Step 4 Condition (heating in oxidizing atmosphere) | | | | |
|---|---|---|---|---|
| Atmosphere | Heating temperature °C | Heating time | Heating type Batch type: Heating in a coiled state Continuous type: Heating in a uncoiled state | Heating condition |
| Air | 5 0 | 7 2 hours | Batch type | H1 |
| | 7 0 | 4 8 hours | Batch type | H2 |
| | 1 5 0 | 2 4 hours | Batch type | H3 |
| | 2 0 0 | 8 hours | Batch type | H4 |
| | 2 0 0 | 3 0 minutes | Batch type | H5 |
| | 2 2 0 | 5 hours | Batch type | H6 |
| | 3 5 0 | 10 seconds | Continuous type | H7 |
| | 3 8 0 | 4 seconds | Continuous type | H8 |
| | 3 3 0 | 7 0 seconds | Continuous type | H9 |
| Oxygen 5vol%, Nitrogen 95vol% | 2 0 0 | 8 hours | Batch type | H10 |
| Oxygen 1vol%, Nitrogen 99vol% | 2 0 0 | 8 hours | Batch type | H11 |
| Oxygen 0.1vol%, Nitrogen 99.9vol% | 2 0 0 | 8 hours | Batch type | H12 |

[Table 20]

| | Ingot Composition | Step 1 intermediate annealing | Step 2 finish cold rolling | Step 3 washing | Step 4 Heating in oxidizing atmosphere | Step 5 Final annealing | Relative capacitance % |
|---|---|---|---|---|---|---|---|
| Ex. 1 | Composition 6 | Condition D | Executed | Condition 29 | H4 | 540°C,4h | 122 |
| Ex. 2 | Composition 7 | Condition I | Executed | Condition 1 | H4 | 540°C, 4h | 118 |
| Ex. 3 | Composition 7 | Condition I | Executed | Condition 2 | H4 | 540°C,4h | 118 |
| Ex. 4 | Composition 6 | Condition D | Executed | Condition 31 | H4 | 540°C,4h | 120 |
| Ex. 5 | Composition 6 | Condition I | Executed | Condition 30 | H4 | 540°C,4h | 111 |
| Ex. 6 | Composition 6 | Condition I | Executed | Condition 28 | H4 | 540°C,4h | 109 |
| Ex. 7 | Composition 6 | Condition D | Executed | Condition 9 | H4 | 500°C,24h | 110 |
| Ex. 8 | Composition 6 | Condition D | Executed | Condition 10 | H4 | 500°C,24h | 112 |
| Ex. 9 | Composition 6 | Condition D | Executed | Condition 11 | H4 | 500°C,24h | 113 |
| Ex. 10 | Composition 6 | Condition D | Executed | Condition 12 | H4 | 500°C,24h | 113 |
| Ex. 11 | Composition 6 | Condition D | Executed | Condition 13 | H4 | 500°C,24h | 111 |
| Ex. 12 | Composition 6 | Condition D | Executed | Condition 14 | H4 | 500°C,24h | 112 |
| Ex. 13 | Composition 6 | Condition D | Executed | Condition 15 | H4 | 500°C,24h | 112 |
| Ex. 14 | Composition 6 | Condition D | Executed | Condition 16 | H4 | 500°C24h | 112 |
| Ex. 15 | Composition 6 | Condition D | Executed | Condition 17 | H4 | 500°C,24h | 113 |
| Ex. 16 | Composition 6 | Condition D | Executed | Condition 18 | H4 | 500°C,24h | 116 |
| Ex. 17 | Composition 6 | Condition D | Executed | Condition 19 | H4 | 500°C,24h | 116 |
| Ex. 18 | Composition 6 | Condition D | Executed | Condition 20 | H4 | 500°C,24h | 116 |
| Ex. 19 | Composition 6 | Condition D | Executed | Condition 21 | H4 | 500°C,24h | 117 |
| Ex. 20 | Composition 6 | Condition D | Executed | Condition 22 | H4 | 500°C,24h | 116 |

[Table 21]

| | Ingot Composition | Step 1 intermediate annealing | Step 2 finish cold rolling | Step 3 washing | Step 4 Heating in oxidizing atmosphere | Step 5 Final annealing | Relative capacitance % |
|---|---|---|---|---|---|---|---|
| Ex.21 | Composition 6 | Condition D | Executed | Condition23 | H4 | 500°C24h | 117 |
| Ex.22 | Composition 6 | Condition D | Executed | Condition24 | H4 | 500°C24h | 116 |
| Ex.23 | Composition 6 | Condition D | Executed | Condition25 | H4 | 500°C24h | 117 |
| Ex.24 | Composition 6 | Condition D | Executed | Condition26 | H4 | 500°C24h | 118 |
| Ex.25 | Composition 6 | Condition D | Executed | Condition27 | H4 | 500°C24h | 117 |
| Ex.26 | Composition 6 | Condition D | Executed | Condition8 | H4 | 500°C24h | 112 |
| Ex.27 | Composition 6 | Condition D | Executed | Condition5 | H4 | 500°C24h | 113 |
| Ex.28 | Composition 6 | Condition D | Executed | Condition4 | H4 | 500°C24h | 110 |
| Ex.29 | Composition 7 | Condition D | Executed | Condition6 | H4 | 500°C24h | 110 |
| Ex.30 | Composition 6 | Condition D | Executed | Condition3 | H4 | 500°C24h | 109 |
| Ex.31 | Composition 7 | Condition D | Executed | Condition7 | H4 | 500°C24h | 107 |
| Ex.32 | Composition 1 | Condition D | Executed | Condition29 | H4 | 540°C6h | 116 |
| Ex.33 | Composition 2 | Condition D | Executed | Condition29 | H4 | 540°C6h | 113 |
| Ex.34 | Composition 3 | Condition D | Executed | Condition29 | H4 | 540°C6h | 111 |
| Ex.35 | Composition 4 | Condition D | Executed | Condition29 | H4 | 540°C6h | 118 |
| Ex.36 | Composition5 | Condition D | Executed | Condition29 | H4 | 540°C6h | 117 |
| Ex.37 | Composition 7 | Condition D | Executed | Condition29 | H4 | 540°C6h | 122 |
| Ex.38 | Composition 8 | Condition D | Executed | Condition29 | H4 | 540°C6h | 116 |
| Ex.39 | Composition 9 | Condition D | Executed | Condition29 | H4 | 540°C6h | 112 |

[Table 22]

| | Ingot Composition | Step 1 intermediate annealing | Step 2 finish cold rolling | Step 3 washing | Step 4 Heating in oxidizing atmosphere | Step 5 Final annealing | Relative capacitance % |
|---|---|---|---|---|---|---|---|
| Ex.40 | Composition10 | ConditionD | Executed | Condition29 | H4 | 540°C6h | 106 |
| Ex.41 | Composition11 | ConditionD | Executed | Condition29 | H4 | 540°C6h | 107 |
| Ex.42 | Composition1 | ConditionI | Executed | Condition1 | H4 | 540°C6h | 113 |
| Ex.43 | Composition2 | ConditionI | Executed | Condition1 | H4 | 540°C6h | 112 |
| Ex.44 | Composition3 | ConditionI | Executed | Condition1 | H4 | 540°C6h | 109 |
| Ex.45 | Composition4 | ConditionI | Executed | Condition1 | H4 | 540°C6h | 116 |
| Ex.46 | Composition5 | ConditionI | Executed | Condition1 | H4 | 540°C6h | 105 |
| Ex.47 | Composition6 | ConditionI | Executed | Condition1 | H4 | 540°C6h | 107 |
| Ex.48 | Composition8 | ConditionI | Executed | Condition1 | H4 | 540°C6h | 114 |
| Ex.49 | Composition9 | ConditionI | Executed | Condition1 | H4 | 540°C6h | 110 |
| Ex.50 | Composition10 | ConditionI | Executed | Condition1 | H4 | 540°C6h | 105 |
| Ex.51 | Composition11 | ConditionI | Executed | Condition1 | H4 | 540°C6h | 107 |
| Ex.52 | Composition6 | ConditionD | Executed | Condition29 | H1 | 540°C6h | 107 |
| Ex.53 | Composition6 | ConditionD | Executed | Condition29 | H2 | 540°C6h | 111 |
| Ex.54 | Composition6 | ConditionD | Executed | Condition29 | H3 | 540°C6h | 119 |
| Ex.55 | Composition6 | ConditionD | Executed | Condition29 | H5 | 540°C6h | 113 |
| Ex.56 | Composition6 | ConditionD | Executed | Condition29 | H6 | 540°C6h | 118 |
| Ex.57 | Composition6 | ConditionD | Executed | Condition29 | H7 | 540°C6h | 114 |
| Ex.58 | Composition6 | ConditionD | Executed | Condition29 | H8 | 540°C6h | 112 |

[Table 23]

| | Ingot Composition | Step 1 intermediate annealing | Step 2 finish cold rolling | Step 3 washing | Step 4 Heating in oxidizing atmosphere | Step 5 Final annealing | Relative capacitance % |
|---|---|---|---|---|---|---|---|
| Ex.59 | Composition6 | ConditionD | Executed | Condition29 | H9 | 540°C6h | 115 |
| Ex.60 | Composition6 | ConditionD | Executed | Condition29 | H10 | 540°C6h | 118 |
| Ex.61 | Composition6 | ConditionD | Executed | Condition29 | H11 | 540°C6h | 113 |
| Ex.62 | Composition6 | ConditionD | Executed | Condition29 | H12 | 540°C6h | 107 |
| Ex.63 | Composition7 | ConditionI | Executed | Condition1 | H1 | 540°C6h | 105 |
| Ex.64 | Composition7 | ConditionI | Executed | Condition1 | H2 | 540°C6h | 108 |
| Ex.65 | Composition7 | ConditionI | Executed | Condition1 | H3 | 540°C6h | 116 |
| Ex.66 | Composition7 | ConditionI | Executed | Condition1 | H5 | 540°C6h | 111 |
| Ex.67 | Composition7 | ConditionI | Executed | Condition1 | H6 | 540°C6h | 115 |
| Ex.68 | Composition7 | ConditionI | Executed | Condition1 | H7 | 540°C6h | 109 |
| Ex.69 | Composition7 | ConditionI | Executed | Condition1 | H8 | 540°C6h | 108 |
| Ex.70 | Composition7 | ConditionI | Executed | Condition1 | H9 | 540°C6h | 112 |
| Ex.71 | Composition7 | ConditionI | Executed | Condition1 | H10 | 540°C6h | 115 |
| Ex.72 | Composition7 | ConditionI | Executed | Condition1 | H11 | 540°C6h | 111 |
| Ex.73 | Composition7 | ConditionI | Executed | Condition1 | H12 | 540°C6h | 104 |
| Ex.74 | Composition7 | ConditionI | Executed | No washing | H3 | 540°C6h | 114 |
| Ex.75 | Composition7 | ConditionI | Executed | No washing | H3 | 480°C24h | 109 |
| Ex.76 | Composition7 | ConditionI | Executed | No washing | H3 | 570°C4h | 111 |
| Ex.77 | Composition6 | ConditionI | Executed | Condition4 | H4 | 540°C6h | 109 |

[Table 24]

| | Ingot Composition | Step 1 intermediate annealing | Step 2 finish cold rolling | Step 3 washing | Step 4 Heating in oxidizing atmosphere | Step 5 Final annealing | Relative capacitance % |
|---|---|---|---|---|---|---|---|
| Ex.78 | Composition7 | ConditionH | Executed | 29 | H4 | 540°C6h | 121 |
| Ex.79 | Composition7 | ConditionI | Executed | 29 | H4 | 540°C6h | 120 |
| Ex.80 | Composition7 | ConditionJ | Executed | 29 | H4 | 540°C6h | 119 |
| Ex.81 | Composition17 | ConditionC | Executed | 29 | H4 | 540°C6h | 122 |
| Ex.82 | Composition17 | ConditionB | Executed | 29 | H4 | 540°C6h | 120 |
| Ex.83 | Composition17 | ConditionA | Executed | 29 | H4 | 540°C6h | 118 |
| Ex.84 | Composition16 | ConditionF | Executed | 29 | H4 | 540°C6h | 117 |
| Ex.85 | Composition16 | ConditionE | Executed | 29 | H4 | 540°C6h | 115 |
| Ex.86 | Composition15 | ConditionG | Executed | 29 | H4 | 540°C6h | 113 |
| Com.Ex.1 | Composition6 | ConditionK | Executed | Condition4 | No heating | 540°C6h | 100 |
| Com.Ex.2 | Composition12 | ConditionK | Executed | Condition4 | H4 | 540°C6h | 76 |
| Com.Ex.3 | Composition12 | ConditionK | Executed | Condition4 | No heating | 540°C6h | 71 |
| Com.Ex.4 | Composition13 | ConditionK | Executed | Condition1 | H4 | 540°C6h | 98 |
| Com.Ex.5 | Composition14 | ConditionK | Executed | Condition1 | H4 | 540°C6h | 98 |

As understood from the results shown in the aforementioned Tables, by subjecting an aluminum material containing Pb falling within the concentration range specified by the present invention to final annealing after sequentially subjecting it to intermediate annealing in an oxidizing atmosphere, finish cold rolling, and heating in an oxidizing atmosphere, an aluminum material for electrolytic capacitors excellent in etching characteristics can be obtained. Furthermore, in Examples in which the Cu content is not less than 10 ppm but not more than 150 ppm, as compared with Examples in which the Pb content and steps are the same and the Cu content is less than 10 ppm or exceeds 150 ppm, the capacitance is higher.

On the other hand, in Comparative Example 1, since the atmosphere was not oxidizing and no heating was executed in an oxidizing atmosphere before the final annealing but after the finish cold rolling, the capacitance was lower than Examples. In Comparative Example 2, since heating was executed in an oxidizing atmosphere before the final annealing but after the finish cold rolling, although the capacitance was increased as compared with Comparative Example 3 in which no heating in an oxidizing atmosphere was executed, in Comparative Example 2 and 3, since the Pb content was less than 0.1 mass ppm and the atmosphere at the time of intermediate annealing was not oxidizing, the capacitance was lower than those of Examples. In Comparative Example 4, the atmosphere in the intermediate annealing was not oxidizing and the Pb content was less than the lower limit of the present invention. In Comparative Example 5, the atmosphere in the intermediate annealing was not oxidizing and the Pb content exceeded the upper limit of the present invention. Therefore, both of them were low in capacitance.

[FOURTH EMBODIMENT]

This embodiment is also directed to a production method preferably used to produce the aluminum material for electrolytic capacitor electrodes explained in the first embodiment.

The present inventors have found the fact that in producing an aluminum material for electrolytic capacitor electrodes in which an aluminum material containing Pb not less than 0.3 mass ppm but not more than 2.5 mass ppm is sequentially subjected to hot rolling, cold rolling, intermediate annealing, tensile strain giving, and then final annealing, by heating the aluminummaterial in an oxidizing atmosphere before the final annealing but after giving tensile strain, when the aluminum material is etched after the final annealing, the solubility of the surface layer of the aluminum material becomes even, resulting in enhanced electrolytic etching characteristics.

Hereinafter, the production method of an aluminum material for electrolytic capacitors will be detailed.

The purity of the aluminum material is not specifically limited so long as it falls within a range in which an electrolytic capacitor electrode can be used. It is preferable that the aluminum material is 99.9 mass% or higher in purity, more preferably 99.95 mass% or higher in purity. In this invention, for descriptive purposes, aluminum purity of an aluminum material will be defined as a value obtained by subtracting a total concentration (mass%) of Fe, Si and Cu from 100 mass%.

In this specification, in some cases, "mass ppm" is used in place of "mass%." In this case, 1 mass% is 10,000 mass ppm.

Pb segregates in an aluminum material surface layer at the time of executing final annealing, which heavily affects etching pit generation. In creating tunnel-like etching pits by a DC etching method, if the Pb concentration is too low, the etching pit dispersity deteriorates, and if the Pb concentration is too high, the surface dissolved amount of the aluminum material increases. In the present invention, in order to exert improving effects of etching characteristics by heating an aluminum material in an oxidizing atmosphere, the Pb content is regulated to not less than 0.3 mass ppm but not more than 2.5 mass ppm.

Furthermore, it is preferable that Cu not less than 10 mass ppm but not more than 150 mass ppm is contained to further improve the dispersity of etching pits. If the Cu content is less than 10 mass ppm, the dispersity of etching pits may become insufficient. If it exceeds 150 mass ppm, the dissolved decreased amount of the aluminum material during the electrolytic etching increases, which may cause deterioration of capacitance. It is more preferable that the Cu content is not less than 15 mass ppm but not more than 100 mass ppm.

The production steps of the aluminummaterial are not limited. A dissolution component adjustment of an aluminum material and slab casting, hot rolling, cold rolling, intermediate annealing, tensile strain giving, heating in an oxidizing atmosphere, and final annealing are executed sequentially. Washing can be executed after giving tensile strain but before the heating in the oxidizing atmosphere.

The tensile strain giving is a step for controlling the cube orientation to be executed in combination with intermediate annealing. The tensile strain giving does not cause a problem that a large amount of lubricant oil adheres to the aluminum material surface at the time of executing finish cold rolling. Therefore, without executing washing before the heating in an oxidizing atmosphere after giving tensile strength, the aluminum material surface layer can be oxidized by the heating in an oxidizing atmosphere. Furthermore, tensile strain giving tends to be difficut to cause growing of aluminum crystal grains at the time of executing the final annealing even if the aluminum material is thick as compared with the finish cold rolling, which makes it easy to produce a thick aluminum material. The tensile strain giving method is not specifically limited, and can be a method disclosed in WO2004-003248A1.

The tensile strain to be given after the intermediate annealing is preferably not less than 1% but not larger than 15%. If the tensile strain is less than 1%, the process strain for preferentially growing crystal grains with cube orientation becomes insufficient. If it exceeds 15%, the aluminum material may break during the tensile giving step. The tensile strain giving can be performed by giving tensile strain in one direction with respect to an aluminum material, for example, by uniaxial extension giving tensile strain only in the length direction, or by giving tensile strain in two directions, for example, by biaxial extension giving tensile strain in the length and width directions. The tensile stain can be given by bending the aluminum material.

A washing liquid used for washing the aluminum material can be organic solvent, water dissolved surfactant, alkaline aqueous solution or acid aqueous solution.

In the case of removing the aluminum material surface layer by washing, at least one of alkaline aqueous solution and acid aqueous solution can be used. Either one of them can be used. After executing using alkaline aqueous solution, washing can be executed using acid aqueous solution.

The Pb content in the aluminummaterial in the case of removing the aluminum material surface layer by the washing using at least one of the alkaline aqueous solution and the acid aqueous solution can be not less than 0.3 mass ppm but not more than 2.5 mass ppm which is wiyhin the range of the present invention. If the Pb content is less than 0.3 mass ppm, the etching pit dispersity deteriorates. If it exceeds 2.5 mass ppm, the surface dissolution of the aluminum material increases, causing decreased capacitance. The Pb content is preferably not less than 0.4 mass ppm but not more than 1.8 mass ppm, more preferably not less than 0.5 mass ppm but not more than 1.2 mass ppm.

The Pb content in the case of washing the aluminum material using at least one of organic solvent, water containing surfactant, and a mixture of water-soluble organic solvent and water is preferably not less than 0.6 mass ppm but not more than 2.5 mass ppm. If the Pb content is less than 0.6 mass ppm, the etching pit dispersity deteriorates. If it exceeds 2.5 mass ppm, the surface dissolution of the aluminum material increases, which may cause decreased capacitance. The Pb content is preferably not less than 0.7 mass ppm but not more than 1.8 mass ppm, more preferably not less than 0.7 mass ppm but not more than 1.2 mass ppm.

The organic solvent for use in the washing is not specifically limited. As examples, alcohol, diol, aromatic hydrocarbon such as, e.g., toluene, xylene, alkane series of hydrocarbons, cyclohexane, ketone, ether, ester, and petroleum products can be exemplified.

As examples of the aforementioned alcohol, methanol ($CH_3oH$), ethanol ($C_2H_5OH$), 1- propanol ($CH_3CH_2CH_2OH$), 2-propanol ($CH_3CH(OH)CH_3$), 1-butanol ($CH_3CH_2CH_2CH_2OH$), 2-butanol ($CH_3CH_2CH(OH)CH_3$), 1-pentanol ($CH_3CH_2CH_2CH_2\ CH_2OH$), and 2-pentanol ($CH_3CH_2CH_2CH\ (OH)\ CH_3$) can be exemplified. It is preferable that the alcohol is represented by $C_nH_{2n+1}OH$(n=1-10: natural number). Alicyclic compounds, such as, e.g., cyclohexanol, can also be used.

As examples of the aforementioned diol, 1, 2-ethanediol ($HOCH_2CH_2OH$), 1, 2-propanediol ($CH_3CH(OH)CH_2OH$), an 1, 3-propanediol ($HOCH_2CH_2CH_2OH$) can be exemplified.

As examples of the aforementioned alkane hydrocarbon, pentane ($C_5H_{12}$), hexane ($C_6H_{14}$), heptane ($C_7H_{16}$), octane ($C_8H_{18}$), nonane ($C_9H_{20}$), and decane ($C_{10}H_{22}$) can be exemplified. It is preferable that the alkane hydrocarbon is represented by $C_nH_{2n+2}$ (n=5-15 : natural number). Alicyclic hydrocarbon, such as, e.g., cyclohexane, can also be used.

As examples of the aforementioned ketone, acetone ($CH_3COCH_3$), 2- butanone ($CH_3COC_2H_5$), 3-pentanone ($CH_3CH_2COCH_2CH_3$), and 3-methyl-2-butanone ($CH_3COCH(CH_3)H_2$) can be exemplified. It is preferable that the ketone is represented by R1COR2(R1 and R2: aliphatic hydrocarbon group, the total of carbon number of R1 and R2 is 8 or less). Cyclic ketone, such as, e.g., cyclohexane ($C_6H_{10}O$), can be used.

As examples of the aforementioned ether, a substance represented by R1-O-R2 (R1 and R2: aliphatic hydrocarbon group, the total of carbon number of R1 and R2 is 8 or less), and glycol ether, such as, e.g., 2- methoxyethanol ($CH_3OCH_2CH_2OH$), 2-ethoxyethanol ($CH_3CH_2OCH_2CH_2OH$), 2- butoxyethanol ($CH_3CH_2CH_2OCH_2CH_2OH$), 2-(2-ethoxy) ethoxyethanol ($CH_3CH_2OCH_2CH_2O\ CH_2CH_2OH$), can be exemplified.

As examples of the aforementioned ester, acetate ester represented by $CH_3COOR$ (R: aliphatic hydrocarbon group with carbon number 1-5) can be exemplified.

As examples of the aforementioned petroleum products, industrial gasoline (JIS K 2201), automobile gasoline (JIS K 2202), aviation gasoline (JIS K 2206), kerosene (JIS K 2203), diesel oil (JIS K 2204), petroleum ether (JIS K 8593), petroleum benzin (JIS K 8594), ligroin (JIS K 8937), and kerosene can be exemplified.

As water-soluble organic solvent capable of being used by mixing in water, Among the aforementioned organic solvents, methanol, ethanol, propanol, acetone, etc., can be exemplified.

The aforementioned surfactant contained in the washing liquid to which surfactant is added to water is not specifically limited, and can be anion surfactant, Cationic surfactant, or nonionic surfactant.

As the aforementioned anion surfactant, sulfuric ester salt or sulfonate salt can be used.

As the aforementioned sulfuric ester salt, $R\text{-}OSO_3Na$ (R= saturated hydrocarbon group with carbon number 8-18 or non-saturated hydrocarbon group with one double bond) can be used. Concretely, sodium dodecyl sulfate ($C_{12}H_{25}OSO_3Na$), sodium hexadecyl sulfate ($C_{16}H_{33}OSO_3Na$), and sodium stearyl sulfate ($C_{18}H_{37}OSO_3Na$), sodium oleyl sulfate ($C_{18}H_{35}OSO_3Na$) can be exemplified.

The aforementioned sulfonate can be a substance represented by $R\text{-}SO_3Na$ (R=saturated hydrocarbon group with a carbon number of 8-18 or unsaturated hydrocarbon group with one double-bond) or $R\text{-}SO_3Na$ (R= saturated hydrocarbon group with a carbon number of 8-14 or alkyl-benzil which is unsaturated hydrocarbon group with one double-bond) such as sodium dodecylbenzenesulfonate ($C_{12}H_{25}\text{-}C_6H_6\text{-}SO_3Na$).

As the aforementioned cationic surfactant, quaternary ammonium represented by $R\text{-}N^+(CH_3)_3Cl^-$ (r= saturated hydrocarbon group with carbon number 8-16) can be used.

As the aforementioned nonionic surfactant, polyethylene glycols type ionic surfactant represented by $R\text{-}O\text{-}(\text{-}CH_2CH_2O)_nH$ (R= saturated hydrocarbon group with carbon number 8-16 or non-saturated hydrocarbon group with one double bond, n=6-14) or $R\text{-}O\text{-}(\text{-}CH_2CH_2O)_nH$ (R= alkylphenyl in which alkylphenyl is saturated hydrocarbon group with a carbon number of 8-12 or unsaturated hydrocarbon group with one double-bond, n=6-14) can be exemplified. A substance in which n exceeds the aforementioned range can be contained in nonionic surfactant at the mole ratio of not more than 50%.

Washing liquid in which at least one or more of the aforementioned surfactant is added to water can be used. Surfactant whose carbon number is less than the aforementioned range can be added at the mole ratio of 50% or less. It is preferable to avoid mixture of anion surfactant and cation surfactant in water because the mixture thereof in water results in a precipitate.

Although the additive concentration of the surfactant is not specifically limited, it is preferably not less than the critical micellar concentration to exert the washing effects.

As the alkali in the alkaline aqueous solution used for washing, sodium hydroxide, calcium hydroxide, potassium hydroxide, sodium orthosilicate, sodium metasilicate, sodium tertiary phosphate, and sodium carbonate can be exemplified. One of more selected from the above alkali dissolved with water can be used washing liquid.

As the acid in the acid aqueous solution used for washing, one or more acids selected from the group comprising hydrochloric acid, sulfuric acid, nitric acid, acid containing phosphorus can be used. As the acid containing phosphorus, orthophosphoric acid (hereinafter referred to as "phosphoric acid"), pyrophoric acid, metaphosphoric acid, and polyphosphoric acid can be exemplified. Perchloric acid and hypochlorous acid can also be used.

The removal amount of the surface layer of the aluminum material by alkaline aqueous solution or acid aqueous solution can be adjusted by appropriately setting the concentration of alkali or acid, the temperature of the alkaline aqueous solution or the acid aqueous solution, and the contact time of the aluminum material in contact with the alkaline aqueous solution or the acid aqueous solution. For the purpose of enhancing the washing effects of the surface layer of the aluminum member, surfactant or chelating agent can be added to the washing liquid.

The removal amount of the aluminum material surface layer by the washing is preferably not less than 1 nm but not more than 500 nm per one side of the aluminum material on an average. If the surface layer removal amount is less than 1 nm on an average, the removal of the oxide film of the aluminum material surface may become insufficient. If the surface layer is removed by 500 nm or more, generation of etching pit nuclei in the aluminum material surface layer is suppressed, which rather causes deterioration of capacitance due to poor etching characteristics. The preferable removal amount by washing is not less than 1.5 nm but not more than 20 nm per one side of the aluminum material, more preferably not less than 5 nm but not more than 200 nm, still more preferably not less than 10 nm but not more than 150 nm, on an average.

Although the aluminum material surface layer oxide film and the metallic aluminum are different in density, in the present invention, the removal amount D (nm) of the aluminum material surface layer is defined as $D (nm)=E \times 10^7/2.7$ using the reduced amount E ($g/cm^2$) per unit surface area by the washing and the aluminum density 2.7 $g/cm^3$.

The contact method of the washing liquid and the aluminum material is not specifically limited. As the contact method, immersing the aluminum material in washing liquid, contacting the aluminum material to washing liquid surface, and spray washing liquid can be exemplified.

The heating method in an oxidizing atmosphere is not specifically limited. As the heating method, ventilation heating and radiation heating can be exemplified. The form of the aluminum material to be heated is not specifically limited. The aluminum material can be subjected to batch heating in a coiled state or can be winded into a coil after being continuously heated while being rewound.

The heating temperature of the aluminum material in an oxidizing atmosphere is preferably 50 to 400 °C. If the heating temperature is lower than 50 °C, the property of the aluminum surface layer dissolve at the time of etching the aluminum material executed after the final annealing becomes uneven. If the heating temperature exceeds 400 °C, the surface layer oxide film of the aluminum material becomes excessively thick, resulting in deteriorated etching characteristics of the aluminum material after the final annealing. The more preferable heating temperature of the aluminum material is 70 to 350 °C.

The heating time is preferably not shorter than 3 seconds but not longer than 72 hours. If the heating time is shorter than 3 seconds, the property of the aluminum surface layer dissolve at the time of etching the aluminum material executed after the final annealing becomes uneven. If the heating time exceeds 72 hours, the solubility evenness of the aluminum material surface layer becomes almost unchanged, resulting increased cost due to the energy consumption at the time of the heating. The preferable heating time is not shorter than 10 seconds but not longer than 48 hours, more preferably not shorter than 70 seconds but not longer than 48 hours.

The heating temperature and time in the oxidizing atmosphere are appropriately selected depending on the heating method. For example, in the case of heating the aluminum material in a coiled manner, the coiled aluminum material is preferably heated at a temperature of 50 °C to 280 °C for 30 minutes to 72 hours. In the case of heating the aluminum material in an uncoiled manner or in a sheet-like cut manner, it is preferable that the heating time t (time) meets $10/(1.44 \times X^{1.5}) \leqq t \leqq 72$, more preferably $10/(1.44 \times X^{1.5}) \leqq t \leqq 48$, where the heating temperature is X °C.

The oxygen concentration at the time of heating the aluminum material in the oxidizing atmosphere is preferably not less than 0.1 vol%. If the oxygen concentration is less than 0.1 vol%, the aluminum material surface may not be sufficiently oxidized at the time of the heating. It is preferable that the oxygen concentration is not less than 1 vol%, more preferably not less than 5 vol% to preferably utilize air as an oxidizing atmosphere.

The processing atmosphere for the final annealing of the aluminum material is not specifically limited. It is preferable to heat the aluminum material in an atmosphere with less water and oxygen so as not to increase the thickness of the oxide film. Concretely, it is preferable to heat the aluminum material in an inert gas atmosphere such as an argon atmosphere or a nitrogen atmosphere or in a vacuum atmosphere 0.1 Pa or below. As the atmosphere for the final annealing, hydrogen gas can be preferably used.

The area fraction of cube orientation of the aluminum material after the final annealing is preferably not less than 90%.

The method of the final anneal ing is not specifically limited. The aluminum material can be subj ected to batch annealing in a coiled state, or the coiled aluminum material can be rewound and subjected to continuous annealing, then wound into a coil. At least one of the batch annealing and the continuous annealing can be preformed plural times.

The temperature and time for the annealing is not specifically limited. For example, in the case of executing batch annealing, it is preferable to execute the annealing at a temperature of 450 to 600 °C for 10 minutes to 50 hours. If the temperature is less than 10 minutes, a surface capable of creating etching pits evenly may not be obtained. To the contrary, if the annealing is executed at a temperature exceeding 600 °C, the aluminum material becomes adhesive. Even if the annealing is executed for 50 hours or more, the surface enlarging effects by the etching will be saturated, which rather increases the heat energy cost. Especially, the annealing is preferably executed at a temperature of 460 to 570 °C for 20 minutes to 40 hours.

The temperature raising speed and pattern is not specifically limited. The temperature can be raised at a constant speed. Alternatively, while repeating the temperature raising and the temperature maintaining, step temperature raising and cooling can be performed. In any event, at the annealing step, it is enough to execute the annealing at a temperature range of from 450 °C to 600 °C for a total 10 minutes to 50 hours.

Steps and step conditions other than those defined by the present invention are not specifically limited, and can be performed by common procedures. Considering etching conditions of the aluminum material, the production method of the aluminum material can be arbitrarily changed.

The thickness of the aluminum material for electrolytic capacitor electrodes to be obtained after the final annealing is not specifically limited. In the present invention, the thickness can be 200 μm or less called "foil" and a thickness exceeding 200 μm.

The aluminum material to which the final annealing was executed is subjected to etching treatment to enhance the area increasing ratio. Although the etching treatment conditions are not specifically limited, it is preferable to employ a DC etching method. By employing a DC etching method, at portions where etching pit nuclei were generated at the annealing, the aluminum material will be etched deeply and thickly, creating a number of tunnel-like pits, which realizes high capacitance.

After the etching treatment, it is preferable to execute a formation of dielectric (by anodizing) to obtain an anode material. It is preferably used as a medium-voltage or high-voltage electrolytic capacitor electrode, but the present invention does not prevent the material from being used as a cathodic material. An electrolytic capacitor using this electrode material can have large capacitance.

The measurement of capacitance can be performed by a common procedure. For example, in an etched, and then formed foil to which a formation of dielectric (by anodizing) was executed, a method of measuring the capacitance in an ammonium borate aqueous solution 80 g/L at 30 °C using a stainless plate as a counter electrode can be exemplified.

**EXAMPLE 4**

Hereinafter, examples according to a fourth embodiment and comparative examples are shown.

Aluminum slabs containing Fe, Si, Cu and Pb shown in Table 25 were prepared. A plate obtained by hot-rolling the aluminum slab was cold-rolled into an aluminum plate 118 μm in thickness. The plate was subjected to intermediate rolling at 250 °C for 11 hours, and then tensile strain was given by uniaxial tensile extension in the rolling direction to obtain an aluminum material for electrolytic capacitor electrodes 110 μm in thickness, 500 mm in width and 2,000 m in length. Table 26 shows types of production steps (Step 1 to Step 3) for an aluminum material for electrolytic capacitor electrodes produced after the tensile strain giving, Tables 27-29 show the conditions of the washing (Step 1) shown Table 26, and Tables 30 shows the conditions of the heating (Step 2) in an oxidizing atmosphere shown in Table 26.

The removal amount of the aluminum material surface layer was controlled by adjusting the immersion time in washing liquid in the case of sequentially washing using alkaline aqueous solution, washing using acid aqueous solution, washing using alkaline aqueous solution and washing using acid aqueous solution, or by adjusting the immersion time in alkaline aqueous solution in the case of washing using acid aqueous solution after washing using alkaline aqueous solution.

EXAMPLE 1

The aluminum slab having the composition 6 shown in Table 25 was subjected to up to the aforementioned tensile giving step to obtain an aluminum material.

Next, this aluminum material was washed with 80 °C 20 mass % $H_2SO_4$ aqueous solution under the conditions 29 shown in Table 29, the aluminum material surface layer was removed by 10 nm (Step 1). The aluminum material was heated in the air for 8 hours at 200 °C under the condition H4 shown in Table 30 (Step 2), and then subjected to 530 °Cx4 hours final annealing in argon atmosphere. Thus, an aluminum material for electrolytic capacitor electrodes was obtained.

EXAMPLES 2-77, COMPARATIVE EXAMPLES 1-5

The aluminum slabs having various compositions (concrete compositions ware shown in Table 25) shown in Tables 31-35 were processed up to the aforementioned tensile strain giving to obtain an aluminum material for electrolytic capacitor electrodes.

Next, each obtained aluminum material was processed under the conditions shown in Tables 31-35 to obtain an aluminum material for electrolytic capacitor electrodes.

The aluminum material obtained in each Example satisfied at least a condition that the L value measured under the same conditions as those of the example in the first embodiment is not less than 25 but not more than 56 when a pre-treatment time is 30 seconds or a condition that the L value is not less than 27 but not more than 58 when the pre-treatment time is 45 seconds.

After immersing in an aqueous solution 75 °C containing HCl 1.0 mol/L and $H_2SO_4$ 3.5 mol/L, the aluminum materials obtained in each Example and Comparative Example were subjected to electrolytic treatment at current density of 0.2 A/cm$^2$. The aluminum materials to which the electrolytic treatment were executed were immersed in hydrochloric acid-sulfuric acid mixed aqueous solution having the aforementioned compositions at 90 °C for 360 seconds to increase the pit diameter. Thus, etched foils were obtained. The obtained etched foils were subjected to formation of dielectric (by anodizing) with forming voltage of 270 V in accordance with EIAJ standard to obtain capacitance measuring samples.

Tables 31-35 show the relative capacitance when the capacitance of Comparative Example 1 is defined as 100.

[Table 25]

| Si, Fe, Cu and Pb concentration of aluminum slab | | | | |
|---|---|---|---|---|
| | Concentration/Mass ppm | | | |
| | Fe | Si | Cu | Pb |
| Composition 1 | 16 | 23 | 15 | 0.9 |
| Composition 2 | 16 | 23 | 15 | 1.4 |
| Composition 3 | 16 | 23 | 15 | 2.3 |
| Composition 4 | 15 | 21 | 40 | 0.9 |
| Composition 5 | 15 | 21 | 55 | 0.4 |
| Composition 6 | 15 | 21 | 55 | 0.6 |
| Composition 7 | 15 | 21 | 55 | 0.9 |
| Composition 8 | 11 | 21 | 100 | 0.9 |
| Composition 9 | 10 | 20 | 130 | 0.9 |
| Composition 1 0 | 18 | 25 | 8 | 0.9 |
| Composition 1 1 | 10 | 18 | 200 | 0.9 |
| Composition 1 2 | 14 | 21 | 58 | Less than 0.1 |
| Composition 1 3 | 14 | 21 | 57 | 0.2 |
| Composition 1 4 | 13 | 21 | 58 | 3.0 |

[Table 26]

| Step | | | |
|---|---|---|---|
| | | | Method |
| Step 1 | Washing | | Executed under conditions shown in Tables 3-5. After rewinding from a coil, washed and winded. |
| Step 2 | Heating in oxidizing atmosphere | | Executed under conditions containing oxygen shown in Table 6. In the case of executing in a rewinded state, winded after heating. |
| Step 3 | final annealing | | Executed in argon atmosphere. |

[Table 27]

| Step 1 Condition (Washing) | |
|---|---|
| Washing method | Condition number |
| After immersing in n- hexane, dried in the air | Condition 1 |
| After immersing in water containing 0.2 mass% sodium dodecyl sulfate, washed and dried. | Condition 2 |

[Table 28]

| Step 1 Condition (Washing) | | |
|---|---|---|
| Washing method | Aluminum material surface layer removal amount | Condition number |
| 40°C 0.2mass% sodium hydroxide aqueous solution immersion (※ 1)→ water washing→ drying in the air | 7nm | Condition 3 |
| 40°C 0.2mass% sodium hydroxide aqueous solution immersion (※ 1 )→ water washing→ drying in the air | 10nm | Condition 4 |
| 40°C 0.2mass% sodium hydroxide aqueous solution immersion (※ 1)→ water washing→ drying in the air | 100nm | Condition 5 |
| 40°C 0.2mass% sodium hydroxide aqueous solution immersion (※ 1 )→ water washing→ drying in the air | 190nm | Condition 6 |
| 40°C 0.2mass% sodium hydroxide aqueous solution immersion (※ 1 )→ water washing→ drying in the air | 490nm | Condition 7 |
| 40°C 0.2mass% calcium hydroxide aqueous solution immersion (※ 1)→ water washing→ drying in the air | 100nm | Condition 8 |
| 40°C 0.2mass% pottasium hydroxide aqueous solution immersion(※ 1)→ water washing→ drying in the air | 100nm | Condition 9 |
| 40°C 0.2mass% sodium orthosilicate aqueous solution immersion(※ 1 )→ water washing→ drying in the air | 100nm | Condition 1 0 |
| 40°C 0.2mass% sodium metasilicate aqueous solution immersion(※ 1 )→ water washing→ drying in the air | 100nm | Condition 1 1 |
| 40°C 0.2mass% sodium tertiary phosphate aqueous solution immersion(※ 1 )→ water washing→ drying in the air | 100nm | Condition 1 2 |
| 40°C 0.2mass% sodium carbonate aqueous solution immersion(※1 )→ water washing→ drying in the air | 100nm | Condition 1 3 |

(continued)

| Step 1 Condition (Washing) | | |
|---|---|---|
| 40°C (0.2mass% sodium hydroxide+0.2mass%calcium hydroxide aqueous solution) aqueous solution immersion (※ 1 )→ water washing→ drying in the air | 100nm | Condition 1 4 |
| 40°C (0.2mass% sodium hydroxide + 0.2mass% potassium hydroxide)aqueous solution immersion(※ 1)→ water washing → drying in the air | 100nm | Condition 1 5 |
| 40°C (0.2mass% sodium hydroxide+0.2mass% sodium orthosilicate) aqueous solution immersion(※ 1 )→ water washing→ drying in the air | 100nm | Condition 1 6 |
| 40°C (0.2mass% sodium hydroxide+0.2mass% sodium tertiary phosphate) aqueous solution immersion(※ 1)→ water washing→ drying in the air | 100nm | Condition 1 7 |
| ※ 1 : The removal amount of the aluminum material surface layer was controlled by changing the immersion time in aqueous solution. | | |

[Table 29]

| Step 1 Condition (Washing) | | |
|---|---|---|
| Washing method | Aluminum material surface layer removal amount | Condition number |
| 40°C 0.2mass% sodium hydroxide aqueous solution immersion (※ 1 ) → water washing→ 40°C 5mass% hydrochloric acid aqueous solution 1 minute immersion→ water washing→ drying in the air | 100nm | Condition 1 8 |
| 40°C 0.2mass% sodium hydroxide aqueous solution immersion (※ 1 ) → water washing→ 40°C 5mass% sulfuric acid aqueous solution 1 minute immersion→ water washing→ drying in the air | 100nm | Condition 19 |
| 40°C 0.2mass% sodium hydroxide aqueous solution immersion (※ 1 ) → water washing→ 40°C 5mass% nitric acid aqueous solution1 minute immersion→ water washing→ drying in the air | 100nm | Condition 2 0 |
| 40°C 0.2mass% sodium hydroxide aqueous solution immersion (※ 1 ) → water washing→ 40°C 5mass% orthophosphoric acid aqueous solution1 minute immersion→ water washing→ drying in the air | 100nm | Condition 2 1 |

(continued)

| Step 1 Condition (Washing) | | |
|---|---|---|
| Washing method | Aluminum material surface layer removal amount | Condition number |
| 40°C 0.2mass% sodium hydroxide aqueous solution immersion (※ 1) → water washing→ 40°C 3mass% hydrochloric acid+3mass% sulfuric acid aqueous solution 1 minute immersion→ water washing→ drying in the air | 100nm | Condition 2 2 |
| 40°C 0.2mass% sodium hydroxide aqueous solution immersion (※1) → water washing→ 40°C3mass% hydrochloric acid+3mass% nitric acid aqueous solution 1 minute immersion→ water washing→ drying in the air | 100nm | Condition 2 3 |
| 40°C 0.2mass% sodium hydroxide aqueous solution immersion (※ 1) → water washing → 40°C 3mass% hydrochloric acid+3 mass% orthophosphoric acid aqueous solution 1 minute immersion→ water washing→ drying in the air | 100nm | Condition 2 4 |
| 40°C 0.2mass% sodium hydroxide aqueous solution immersion (※ 1) → water washing→ 40°C3mass% sulfuric acid+3mass% nitric acid aqueous solution 1 minute immersion→ water washing→ drying in the air | 100nm | Condition 2 5 |
| 40°C 0.2mass% sodium hydroxide aqueous solution immersion (※ 1) → water washing→ 40°C3mass% sulfuric acid+3mass% orthophosphoric acid aqueous solution 1 minute immersion→ water washing→ drying in the air | 100nm | Condition 2 6 |
| 40°C 0.2mass% sodium hydroxide aqueous solution immersion (※1) → water washing→ 40°C3mass% nitric acid +3mass% orthophosphoric acid aqueous solution 1 minute immersion→ water washing→ drying in the air | 100nm | Condition 2 7 |
| 80°C8mass% hydrochloric acid aqueous solution immersion(※ 1) → water washing→ drying in the air | 1.3nm | Condition 2 8 |
| 80°C 20mass% sulfuric acid aqueous solution immersion(※ 1)→ water washing→ drying in the air | 10nm | Condition 2 9 |
| 80°C 4.5mass% nitric acid aqueous solution immersion(※1)→ water washing→ drying in the air | 1.7nm | Condition 3 0 |

(continued)

| Step 1 Condition (Washing) | | |
|---|---|---|
| Washing method | Aluminum material surface layer removal amount | Condition number |
| 80°C 20mass% phosphoric acid aqueous solution immersion(※ 1) → water washing→ drying in the air | 10nm | Condition 3 1 |
| ※ 1 : The removal amount of the aluminum material surface layer was controlled by changing the immersion time in aqueous solution. | | |

[Table 30]

| Step 2 Condition (heating in oxidizing atmosphere) | | | | |
|---|---|---|---|---|
| Atmosphere | Heating temperature °C | Heating time | Heating type Batch type: Heating in a coiled state Continuous type: Heating in a uncoiled state | Heating condition |
| Air | 5 0 | 7 2 hours | Batch type | H1 |
| | 7 0 | 4 8 hours | Batch type | H2 |
| | 1 5 0 | 2 4 hours | Batch type | H3 |
| | 2 0 0 | 8 hours | Batch type | H4 |
| | 2 0 0 | 3 0 minutes | Batch type | H5 |
| | 2 2 0 | 5 hours | Batch type | H6 |
| | 3 5 0 | 1 0 seconds | Continuous type | H7 |
| | 3 8 0 | 4 seconds | Continuous type | H8 |
| | 3 3 0 | 7 0 seconds | Continuous type | H9 |
| Oxygen 5vol%, Nitrogen 95vol% | 2 0 0 | 8 hours | Batch type | H10 |
| Oxygen Ivol%, Nitrogen 99vol% | 2 0 0 | 8 hours | Batch type | H11 |
| Oxygen 0.1vol%, Nitrogen 99.9vol% | 2 0 0 | 8 hours | Batch type | H12 |

[Table 31]

| | Ingot Composition | Step1 | Step2 | Step3 | Relative capacitance % |
|---|---|---|---|---|---|
| | | Washing | Heating in oxidizing atmosphere | Final annealing | |
| Ex. 1 | Composition6 | Condition 29 | H4 | 530□4h | 120 |
| Ex. 2 | Composition7 | Condition 1 | H4 | 530□4h | 117 |
| Ex. 3 | Composition7 | Condition 2 | H4 | 530□4h | 117 |
| Ex. 4 | Composition6 | Condition 31 | H4 | 530□4h | 118 |

(continued)

|  | Ingot Composition | Step1 | Step2 | Step3 | Relative capacitance % |
|---|---|---|---|---|---|
|  |  | Washing | Heating in oxidizing atmosphere | Final annealing |  |
| Ex. 5 | Composition6 | Condition 30 | H4 | 530□4h | 111 |
| Ex. 6 | Composition6 | Condition 28 | H4 | 530□4h | 108 |
| Ex. 7 | Composition6 | Condition 9 | H4 | 510□24h | 109 |
| Ex.8 | Composition6 | Condition 10 | H4 | 510□24h | 110 |
| Ex. 9 | Composition6 | Condition 11 | H4 | 510□24h | 110 |
| Ex. 1 0 | Composition6 | Condition 12 | H4 | 510□24h | 110 |
| Ex. 1 1 | Composition6 | Condition 13 | H4 | 510□24h | 109 |
| Ex. 1 2 | Composition6 | Condition 14 | H4 | 510□24h | 109 |
| Ex. 1 3 | Composition6 | Condition 15 | H4 | 510□24h | 111 |
| Ex. 1 4 | Composition6 | Condition 16 | H4 | 510□24h | 110 |
| Ex. 1 5 | Composition6 | Condition 17 | H4 | 510□24h | 110 |
| Ex. 1 6 | Composition6 | Condition 18 | H4 | 510□24h | 115 |
| Ex. 1 7 | Composition6 | Condition 19 | H4 | 510□24h | 114 |
| Ex. 1 8 | Composition6 | Condition 20 | H4 | 510□24h | 115 |
| Ex. 1 9 | Composition6 | Condition 21 | H4 | 510□24h | 114 |
| Ex. 2 0 | Composition6 | Condition 22 | H4 | 510□24h | 114 |

[Table 32]

|  | Ingot Composition | Step1 | Step2 | Step3 | Relative capacitance % |
|---|---|---|---|---|---|
|  |  | Washing | Heating in oxidizing atmosphere | Final annealing |  |
| Ex. 2 1 | Composition6 | Condition 23 | H4 | 510□24h | 115 |
| Ex. 2 2 | Composition6 | Condition 24 | H4 | 510□24h | 114 |
| Ex. 2 3 | Composition6 | Condition 25 | H4 | 510□24h | 115 |
| Ex. 2 4 | Composition6 | Condition 26 | H4 | 510□24h | 116 |
| Ex. 2 5 | Composition6 | Condition 27 | H4 | 510□24h | 115 |
| Ex. 2 6 | Composition6 | Condition 8 | H4 | 510□24h | 110 |
| Ex. 2 7 | Composition6 | Condition 5 | H4 | 510□24h | 110 |
| Ex. 2 8 | Composition6 | Condition 4 | H4 | 510□24h | 109 |
| Ex. 2 9 | Composition7 | Condition 6 | H4 | 510□24h | 108 |
| Ex. 3 0 | Composition6 | Condition 3 | H4 | 510□24h | 106 |
| Ex. 3 1 | Composition 7 | Condition 7 | H4 | 510□24h | 105 |
| Ex. 3 2 | Composition1 | Condition 29 | H4 | 530□4h | 115 |
| Ex. 3 3 | Composition2 | Condition 29 | H4 | 530□4h | 111 |
| Ex. 3 4 | Composition3 | Condition 29 | H4 | 530□4h | 108 |

(continued)

| | Ingot Composition | Step1 | Step2 | Step3 | Relative capacitance % |
|---|---|---|---|---|---|
| | | Washing | Heating in oxidizing atmosphere | Final annealing | |
| Ex. 3 5 | Composition4 | Condition 29 | H4 | 530□4h | 116 |
| Ex. 3 6 | Composition5 | Condition 29 | H4 | 530□4h | 115 |
| Ex. 3 7 | Composition7 | Condition 29 | H4 | 530□4h | 119 |
| Ex. 3 8 | Composition8 | Condition 29 | H4 | 530□4h | 114 |
| Ex. 3 9 | Composition9 | Condition 29 | H4 | 530□4h | 110 |

[Table 33]

| | Ingot Composition | Step1 | Step2 | Step3 | Relative capacitance % |
|---|---|---|---|---|---|
| | | Washing | Heating in oxidizing atmosphere | Final annealing | |
| Ex. 4 0 | Composition10 | Condition 29 | H4 | 530□4h | 104 |
| Ex. 4 1 | Composition11 | Condition 29 | H4 | 530□4h | 105 |
| Ex.4 2 | Composition1 | Condition 1 | H4 | 530□4h | 114 |
| Ex.4 3 | Composition2 | Condition 1 | H4 | 530□4h | 113 |
| Ex.4 4 | Composition3 | Condition 1 | H4 | 530□4h | 110 |
| Ex.4 5 | Composition4 | Condition 1 | H4 | 530□4h | 115 |
| Ex.4 6 | Composition5 | Condition 1 | H4 | 530□4h | 105 |
| Ex.4 7 | Composition6 | Condition 1 | H4 | 530□4h | 107 |
| Ex.4 8 | Composition8 | Condition 1 | H4 | 530□4h | 113 |
| Ex.4 9 | Composition9 | Condition 1 | H4 | 530□4h | 109 |
| Ex. 5 0 | Composition10 | Condition 1 | H4 | 530□4h | 104 |
| Ex. 5 1 | Composition11 | Condition 1 | H4 | 530□4h | 106 |
| Ex. 5 2 | Composition6 | Condition 29 | H1 | 530□4h | 105 |
| Ex. 5 3 | Composition6 | Condition 29 | H2 | 530□4h | 109 |
| Ex. 5 4 | Composition6 | Condition 29 | H3 | 530□4h | 118 |
| Ex. 5 5 | Composition6 | Condition 29 | H5 | 530□4h | 111 |
| Ex. 5 6 | Composition6 | Condition 29 | H6 | 530□4h | 117 |
| Ex. 5 7 | Composition6 | Condition 29 | H7 | 530□4h | 111 |
| Ex. 5 8 | Composition6 | Condition 29 | H8 | 530□4h | 109 |

[Table 34]

| | Ingot Composition | Step1 | Step2 | Step3 | Relative capacitance % |
|---|---|---|---|---|---|
| | | Washing | Heating in oxidizing atmosphere | Final annealing | |
| Ex. 5 9 | Composition6 | Condition 29 | H9 | 530□4h | 112 |

(continued)

| | Ingot Composition | Step1 | Step2 | Step3 | Relative capacitance % |
|---|---|---|---|---|---|
| | | Washing | Heating in oxidizing atmosphere | Final annealing | |
| Ex. 6 0 | Composition6 | Condition 29 | H10 | 530□4h | 117 |
| Ex. 6 1 | Composition6 | Condition 29 | H11 | 530□4h | 111 |
| Ex. 6 2 | Composition6 | Condition 29 | H12 | 530□4h | 105 |
| Ex.6 3 | Composition7 | Condition 1 | H1 | 530□4h | 104 |
| Ex.6 4 | Composition7 | Condition 1 | H2 | 530□4h | 107 |
| Ex. 6 5 | Composition7 | Condition 1 | H3 | 530□4h | 116 |
| Ex. 6 6 | Composition7 | Condition 1 | H5 | 530□4h | 111 |
| Ex. 6 7 | Composition7 | Condition 1 | H6 | 530□4h | 115 |
| Ex. 6 8 | Composition7 | Condition 1 | H7 | 530□4h | 109 |
| Ex. 6 9 | Composition7 | Condition 1 | H8 | 530□4h | 108 |
| Ex. 7 0 | Composition7 | Condition 1 | H9 | 530□4h | 111 |
| Ex. 7 1 | Composition7 | Condition 1 | H10 | 530□4h | 114 |
| Ex. 7 2 | Composition7 | Condition 1 | H11 | 530□4h | 110 |
| Ex. 7 3 | Composition7 | Condition 1 | H12 | 530□4h | 104 |
| Ex. 7 4 | Composition7 | Non Washing | H3 | 530D4h | 116 |
| Ex. 7 5 | Composition7 | Non Washing | H3 | 480□24h | 111 |
| Ex. 7 6 | Composition7 | Non Washing | H3 | 570□4h | 113 |
| Ex. 7 7 | Composition6 | Condition 4 | H4 | 530□4h | 109 |

[Table 35]

| | Ingot Composition | Step 3 | Step 4 | Step 5 | Relative capacitance % |
|---|---|---|---|---|---|
| | | Washing | Heating in oxidizing atmosphere | Final annealing | |
| Comp.Ex. | 1 Composition6 | Condition 4 | No heating | 530□4h | 100 |
| Comp.Ex. 2 | Composition12 | Condition 4 | H4 | 530□4h | 76 |
| Comp.Ex. 3 | Composition12 | Condition 4 | No heating | 530□4h | 71 |
| Comp.Ex. 4 | Composition13 | Condition 1 | H4 | 530□4h | 98 |
| Comp.Ex. 5 | Composition14 | Condition 1 | H4 | 530□4h | 98 |

As understood from the results shown in the aforementioned Tables, by subjecting an aluminum material containing Pb falling within the concentration range specified by the present invention to final annealing after heating in an oxidizing atmosphere, an aluminum material for electrolytic capacitors excellent in etching characteristics can be obtained. Furthermore, Examples in which the Cu content is less than 10 ppm but not more than 15 ppm were higher in capacitance than Examples in which the Cu content is less than 10 ppm or exceeding 150 ppm and heating in an oxidizing atmosphere and final annealing were executed in the same conditions.

On the other hand, in Comparative Example 1, since no heating in an oxidizing atmosphere was performed, the capacitance was lower than those of Examples. In Comparative Example 2, since heating was executed in an oxidizing atmosphere, although the capacitance was increased as compared with Comparative Example 3 in which no heating in an oxidizing atmosphere was executed, in Comparative Example 2 and 3, since the Pb content was less than 0.1 mass ppm, the capacitance was lower than those of Examples. In Comparative Example 4, the Pb content was less than the lower limit of the present invention. In Comparative Example 5, the Pb content exceeded the upper limit of the present invention. Therefore, both of them were low in capacitance.

[FIFTH EMBODIMENT]

This embodiment is also directed to a production method preferably used to produce the aluminum material for electrolytic capacitor electrodes explained in the first embodiment.

The present inventors have found the fact that in producing an aluminum material for electrolytic capacitor electrodes in which an aluminum material containing Pb not less than 0.3 mass ppm but not more than 2.5 mass ppm is sequentially subjected to hot rolling, cold rolling, intermediate annealing, tensile strain giving, and then final annealing, by executing intermediate annealing in an oxidizing atmosphere and heating the aluminum material in an oxidizing atmosphere before the final annealing but after giving tensile strain, when the aluminum material is etched after the final annealing, the solubility of the surface layer of the aluminum material becomes even, resulting in enhanced electrolytic etching characteristics.

Hereinafter, the production method of an aluminum material for electrolytic capacitors will be detailed.

The purity of the aluminum material is not specifically limited so long as it falls within a range in which an electrolytic capacitor electrode can be used. It is preferable that the aluminum material is 99. mass% or higher in purity, more preferably 99.95 mass% or higher in purity. In this invention, for descriptive purposes, aluminum purity of an aluminum material will be defined as a value obtained by subtracting a total concentration (mass%) of Fe, Si and Cu from 100 mass%.

In this specification, in some cases, "mass ppm" is used in place of "mass%." In this case, 1 mass% is 10,000 mass ppm.

Pb segregates in an aluminum material surface layer at the time of executing final annealing, which heavily affects etching pit generation. In creating tunnel-like etching pits by a DC etching method, if the Pb concentration is too low, the etchingpit dispersity deteriorates, and if the Pb concentration is too high, the surface dissolved amount of the aluminum material increases. In the present invention, in order to exert improving effects of etching characteristics by heating an aluminum material in an oxidizing atmosphere, the Pb content is regulated to not less than 0.3 mass ppm but not more than 2.5 mass ppm.

Furthermore, it is preferable that Cu not less than 10 mass ppm but not more than 150 mass ppm is contained to further improve the dispersity of etching pits. If the Cu content is less than 10 mass ppm, the dispersity of etching pits may become insufficient. If it exceeds 150 mass ppm, the dissolved decreased amount of the aluminum material during the electrolytic etching increases, which may cause deterioration of capacitance. It is more preferable that the Cu content is not less than 15 mass ppm but not more than 100 mass ppm.

Theproduction steps of the aluminummaterial are not limited. A dissolution component adjustment of an aluminum material and slab casting, hot rolling, cold rolling, intermediate annealing in an oxidizing atmosphere, tensile strain giving, heating in an oxidizing atmosphere, and final annealing are executed sequentially. Washing can be executed after giving tensile strain but before the heating in the oxidizing atmosphere.

The heating method for the intermediate annealing in an oxidizing atmosphere is not specifically limited. As the heating method, ventilation heating and radiation heating can be exemplified. The temperature raising rate and pattern at the time of heating the aluminum material in an oxidizing atmosphere is not specifically limited, and can be performed under the conditions that the area fraction of cube orientation after the final annealing increases. The form of the aluminum material to be heated is not specifically limited. The aluminum material can be subjected to batch heating in a coiled state or can be winded into a coil after being continuously heated while being rewound.

The oxygen concentration in the oxidizing atmosphere for the intermediate annealing is preferably not less than 0.1 vol%. If the oxygen concentration is less than 0.1 vol%, the aluminum material surface may not be sufficiently oxidized at the time of the heating. It is preferable that the oxygen concentration is not less than 1 vol%, more preferably not less than 5 vol% to preferably utilize air as an oxidizing atmosphere. In the case of utilizing the air as an oxidizing atmosphere, it is not required to control the oxygen concentration, resulting in reduced cost of the intermediate annealing step.

The intermediate annealing temperature in an oxidizing atmosphere is preferably not lower than 200 °C but not higher than 320 °C. The aluminum material will be oxidized by the intermediate annealing in the aforementioned temperature range. If the intermediate annealing temperature is less than 200 °C, it may be difficult to obtain sufficient texture required to preferentially growth recrystallized grains with cube orientation at the time of the final annealing. To the contrary, if the intermediate annealing temperature exceeds 320 °C, recrystallized grains which disturbs preferential growth of cubic orientation grains at the time of the final annealing may grow. The intermediate annealing temperature and time to obtain good area fraction of cube orientation depends on the composition of the aluminum material. Conditions capable of obtaining high area fraction of cube orientation after the final annealing are selected.

The tensile strain giving is a step for controlling the cubit orientation to be executed in combination with intermediate annealing. The tensile strain giving does not cause a problem that a large amount of lubricant oil adheres to the aluminum material surface at the time of executing finish cold rolling. Therefore, without executing washing before the heating in an oxidizing atmosphere after giving tensile strength, the aluminum material surface layer can be oxidized by the heating in an oxidizing atmosphere. Furthermore, tensile strain giving tends to be difficult to cause growing of aluminum crystal grains at the time of executing the final annealing even if the aluminum material is thick as compared with the finish cold rolling, which makes it easy to produce a thick aluminum material. The tensile strain giving method is not specifically limited, and can be a method disclosed in WO2004-003248A1.

The tensile strain to be given after the intermediate annealing is preferably not less than 1% but not larger than 15%. If the tensile strain is less than 1%, the process strain for preferentially growing crystal grains having cubit orientation becomes insufficient. If it exceeds 15%, the aluminum material may break during the tensile giving step. The tensile strain giving can be performed by giving tensile strain in one direction with respect to an aluminum material, for example, by uniaxial extension giving tensile strain only in the length direction, or by giving tensile strain in two directions, for example, by biaxial extension giving tensile strain in the length and width directions. The tensile stain can be given by bending the aluminum material.

A washing liquid used for washing the aluminum material can be organic solvent, water containing surfactant, alkaline aqueous solution or acid aqueous solution.

In the case of removing the aluminum material surface layer by washing, at least one of alkaline aqueous solution and acid aqueous solutioncanbeused. Eitheroneofthemcanbeused. After executing using alkaline aqueous solution, washing can be executed using acid aqueous solution.

The Pb content in the aluminummaterial in the case of removing the aluminum material surface layer by the washing using at least one of the alkaline aqueous solution and the acid aqueous solution can be not less than 0.3 mass ppm but not more than 2.5 mass ppm which is within the range of the present invention. If the Pb content is less than 0.3 mass ppm, the etching pit dispersity deteriorates. If it exceeds 2.5 mass ppm, the surface dissolution of the aluminum material increases, causing decreased capacitance. The Pb content is preferably not less than 0.4 mass ppm but not more than 1.8 mass ppm, more preferably not less than 0.5 mass ppm but not more than 1.2 mass ppm.

The Pb content in the case of washing the aluminum material using at least one of organic solvent, water containing surfactant, and a mixture of water-soluble organic solvent and water is preferably not less than 0.6 mass ppm but not more than 2.5 mass ppm. If the Pb content is less than 0.6 mass ppm, the etching pit dispersity deteriorates. If it exceeds 2.5 mass ppm, the surface dissolution of the aluminum material increases, which may cause decreased capacitance. The Pb content is preferably not less than 0.7 mass ppm but not more than 1.8 mass ppm, more preferably not less than 0.7 mass ppm but not more than 1.2 mass ppm.

The organic solvent for use in the washing is not specifically limited. As examples, alcohol, diol, aromatic hydrocarbon such as, e.g., toluene, xylene, alkane series of hydrocarbons, cyclohexane, ketone, ether, ester, and petroleum products can be exemplified.

As examples of the aforementioned alcohol, methanol ($CH_3oH$), ethanol ($C_2H_5OH$), 1- propanol ($CH_3CH_2CH_2OH$), 2-propanol ($CH_3CH(OH)CH_3$), 1-butanol ($CH_3CH_2CH_2CH_2OH$), 2-butanol ($CH_3CH_2CH(OH)CH_3$), 1-pentanol ($CH_3CH_2CH_2CH_2\ CH_2OH$), and 2-pentanol ($CH_3CH_2CH_2CH(OH)CH_3$) can be exemplified. It is preferable that the alcohol is represented by $C_nH_{2n+1}OH$(n=1-10: natural number). Alicyclic compounds, such as, e.g., cyclohexanol, can also be used.

As examples of the aforementioned diol, 1, 2-ethanediol ($HOCH_2CH_2OH$), 1, 2-propanediol ($CH_3CH(OH)CH_2OH$), an 1, 3-propanediol ($HOCH_2CH_2CH_2OH$) can be exemplified.

As examples of the aforementioned alkane hydrocarbon, pentane ($C_5H_{12}$), hexane ($C_6H_{14}$), heptane ($C_7H_{16}$), octane ($C_8H_{18}$), nonane ($C_9H_{20}$), and decane ($C_{10}H_{22}$) can be exemplified. It is preferable that the alkane hydrocarbon is represented by $C_nH_{2n+2}$ (n=5-15: natural number). Alicyclic hydrocarbon, such as, e.g., cyclohexane, can also be used.

As examples of the aforementioned ketone, acetone ($CH_3COCH_3$), 2- butanone ($CH_3COC_2H_5$), 3-pentanone ($CH_3CH_2COCH_2CH_3$), and 3-methyl-2-butanone ($CH_3COCH(CH_3)H_2$) can be exemplified. It is preferable that the ketone is represented by R1COR2 (R1 and R2: aliphatic hydrocarbon group, the total of carbon number of R1 and R2 is 8 or less). Cyclic ketone, such as, e. g. , cyclohexane ($C_6H_{10}O$), can be used.

As examples of the aforementioned ether, a substance represented by R1-O-R2 (R1 and R2: aliphatic hydrocarbon group, the total of carbon number of R1 and R2 is 8 or less), and glycol ether, such as, e.g., 2- methoxyethanol ($CH_3OCH_2CH_2OH$), 2-ethoxyethanol ($CH_3CH_2OCH_2CH_2OH$), 2- butoxyethanol ($CH_3CH_2CH_2OCH_2CH_2OH$), 2-(2-ethoxy) ethoxyethanol ($CH_3CH_2OCH_2CH_2O\ CH_2CH_2OH$), can be exemplified.

As examples of the aforementioned ester, acetate ester represented by $CH_3COOR$ (R: aliphatic hydrocarbon group with carbon number 1-5) can be exemplified.

As examples of the aforementioned petroleum products, industrial gasoline (JIS K 2201), automobile gasoline (JIS K 2202), aviation gasoline (JIS K 2206), kerosene (JIS K 2203), diesel oil (JIS K 2204), petroleum ether (JIS K 8593), petroleum benzin (JIS K 8594), ligroin (JIS K 8937), and kerosene can be exemplified.

As water-soluble organic solvent capable of being used by mixing in water, Among the aforementioned organic solvents, methanol, ethanol, propanol, acetone, etc., can be exemplified.

The aforementioned surfactant contained in the washing liquid to which surfactant is added to water is not specifically limited, and can be anion surfactant, Cationic surfactant, or nonionic surfactant.

As the aforementioned anion surfactant, sulfuric ester salt or sulfonate salt can be used.

As the aforementioned sulfuric ester salt, $R-OSO_3Na$ (R= saturated hydrocarbon group with carbon number 8-18 or non-saturated hydrocarbon group with one double bond) can be used. Concretely, sodium dodecyl sulfate ($C_{12}H_{25}OSO_3Na$), sodium hexadecyl sulfate ($C_{16}H_{33}OSO_3Na$), and sodium stearyl sulfate ($C_{18}H_{37}OSO_3Na$), sodium oleyl sulfate ($C_{18}H_{35}OSO_3Na$) can be exemplified.

The aforementioned sulfonate can be a substance represented by $R-SO_3Na$ (R=saturated hydrocarbon group with a carbon number of 8-18 or unsaturated hydrocarbon group with one double-bond) or $R-SO_3Na$ (R= saturated hydrocarbon group with a carbon number of 8-14 or alkyl-benzil which is unsaturated hydrocarbon group with one double-bond) such as sodium dodecylbenzenesulfonate ($C_{12}H_{25}-C_6H_6-SO_3Na$).

As the aforementioned cationic surfactant, quaternary ammonium represented by $R-N^+(CH_3)_3Cl^-$ (r= saturated hydrocarbon group with carbon number 8-16) can be used.

As the aforementioned nonionic surfactant, polyethylene glycols type ionic surfactant represented by $R-O-(-CH_2CH_2O)_nH$ (R= saturated hydrocarbon group with carbon number 8-16 or non-saturated hydrocarbon group with one double bond, n=6-14) or $R-O-(-CH_2CH_2O)_nH$ (R= alkylphenyl in which alkylphenyl is saturated hydrocarbon group with a carbon number of 8-12 or unsaturated hydrocarbon group with one double-bond, n=6-14) can be exemplified. A substance in which n exceeds the aforementioned range can be contained in nonionic surfactant at the mole ratio of not more than 50%.

Washing liquid in which at least one or more of the aforementioned surfactant is added to water can be used. Surfactant whose carbon number is less than the aforementioned range can be added at the mole ratio of 50% or less. It is preferable to avoid mixture of anion surfactant and cation surfactant in water because the mixture thereof in water results in a precipitate.

Although the additive concentration of the surfactant is not specifically limited, it is preferably not less than the critical micellar concentration to exert the washing effects.

As the alkali in the alkaline aqueous solution used for washing, sodium hydroxide, calcium hydroxide, potassium hydroxide, sodium orthosilicate, sodium metasilicate, sodium tertiary phosphate, and sodium carbonate can be exemplified. One of more selected from the above alkali dissolved with water can be used washing liquid.

As the acid in the acid aqueous solution used for washing, one or more acids selected from the group comprising hydrochloric acid, sulfuric acid, nitric acid, acid containing phosphorus can be used. As the acid containing phosphorus, orthophosphoric acid (hereinafter referred to as "phosphoric acid"), pyrophoric acid, metaphosphoric acid, and polyphosphoric acid can be exemplified. Perchloric acid and hypochlorous acid can also be used.

The removal amount of the surface layer of the aluminum material by alkaline aqueous solution or acid aqueous solution can be adjusted by appropriately setting the concentration of alkali or acid, the temperature of the alkaline aqueous solution or the acid aqueous solution, and the contact time of the aluminum material in contact with the alkaline aqueous solution or the acid aqueous solution. For the purpose of enhancing the washing effects of the surface layer of the aluminum member, surfactant or chelating agent can be added to the washing liquid.

The removal amount of the aluminum material surface layer by the washing is preferably not less than 1 nm but not more than 500 nm per one side of the aluminum material on an average. If the surface layer removal amount is less than 1 nm on an average, the removal of the oxide film of the aluminum material surface may become insufficient. If the surface layer is removed by 500 nm or more, generation of etching pit nuclei in the aluminum material surface layer is suppressed, which rather causes deterioration of capacitance due to poor etching characteristics. The preferable removal amount by washing is not less than 1.5 nm but not more than 20 nm per one side of the aluminum material, more preferably not less than 5 nm but not more than 200 nm, still more preferably not less than 10 nm but not more than 150 nm, on an average.

Although the aluminum material surface layer oxide film and the metallic aluminum are different in density, in the present invention, the removal amount D (nm) of the aluminum material surface layer is defined as D (nm) $=E \times 10^7/2$. using the reduced amount E ($g/cm^2$) per unit surface area by the washing and the aluminum density 2.7 $g/cm^3$.

The contact method of the washing liquid and the aluminum material is not specifically limited. As the contact method, immersing the aluminum material in washing liquid, contacting the aluminum material to washing liquid surface, and spray washing liquid can be exemplified.

The heating method in an oxidizing atmosphere is not specifically limited. As the heating method, ventilation heating and radiation heating can be exemplified. The form of the aluminum material to be heated is not specifically limited. The aluminum material can be subjected to batch heating in a coiled state or can be winded into a coil after being continuously heated while being rewound.

The heating temperature of the aluminum material in an oxidizing atmosphere is preferably 50 to 400 °C. If the heating temperature is lower than 50 °C, the property of the aluminum surface layer dissolve at the time of etching the aluminum material executed after the final annealing becomes uneven. If the heating temperature exceeds 400 °C, the surface layer oxide film of the aluminum material becomes excessively thick, resulting in deteriorated etching characteristics of the aluminum material after the final annealing. The more preferable heating temperature of the aluminum material is 70 to 350 °C.

The heating time is preferably not shorter than 3 seconds but not longer than 72 hours. If the heating time is shorter than 3 seconds, the property of the aluminum surface layer dissolve at the time of etching the aluminum material executed after the final annealing becomes uneven. If the heating time exceeds 72 hours, the solubility evenness of the aluminum material surface layer becomes almost unchanged, resulting increased cost due to the energy consumption at the time of the heating. The preferable heating time is not shorter than 10 seconds but not longer than 48 hours, more preferably not shorter than 70 seconds but not longer than 48 hours.

The heating temperature and time in the oxidizing atmosphere are appropriately selected depending on the heating method. For example, in the case of heating the aluminum material in a coiled manner, the coiled aluminum material is preferably heated at a temperature of 50 °C to 280 °C for 30 minutes to 72 hours. In the case of heating the aluminum material in an uncoiled manner or in a sheet-like cut manner, it is preferable that the heating time t (time) meets $10/(1.44 \times X^{1.5}) \leqq t \leqq 72$, more preferably $10/(1.44 \times X^{1.5}) \leqq t \leqq 48$, where the heating temperature is X °C.

The oxygen concentration at the time of heating the aluminum material in the oxidizing atmosphere is preferably not less than 0.1 vol%. If the oxygen concentration is less than 0.1 vol%, the aluminum material surface may not be sufficiently oxidized at the time of the heating. It is preferable that the oxygen concentration is not less than 1 vol%, more preferably not less than 5 vol% to preferably utilize air as an oxidizing atmosphere.

The processing atmosphere for the final annealing of the aluminum material is not specifically limited. It is preferable to heat the aluminum material in an atmosphere with less water and oxygen so as not to increase the thickness of the oxide film. Concretely, it is preferable to heat the aluminum material in an inert gas atmosphere such as an argon atmosphere or a nitrogen atmosphere or in a vacuum atmosphere 0.1 Pa or below. As the atmosphere for the final annealing, hydrogen gas can be preferably used.

The area fraction of cube orientation of the aluminummaterial after the final annealing is preferably not less than 90%.

The method of the final annealing is not specifically limited. The aluminum material can be subjected to batch annealing in a coiled state, or the coiled aluminum material can be rewound and subjected to continuous annealing, then wound into a coil. At least one of the batch annealing and the continuous annealing can be preformed plural times.

The temperature and time for the annealing is not specifically limited. For example, in the case of executing batch annealing, it is preferable to execute the annealing at a temperature of 450 to 600 °C for 10 minutes to 50 hours. If the temperature is less than 10 minutes, a surface capable of creating etching pits evenly may not be obtained. To the contrary, if the annealing is executed at a temperature exceeding 600 °C, the aluminum material becomes adhesive. Even if the annealing is executed for 50 hours or more, the surface enlarging effects by the etching will be saturated, which rather increases the heat energy cost. Especially, the annealing is preferably executed at a temperature of 460 to 570 °C for 20 minutes to 40 hours.

The temperature raising speed and pattern is not specifically limited. The temperature can be raised at a constant speed. Alternatively, while repeating the temperature raising and the temperature maintaining, step temperature raising and cooling can be performed. In any event, at the annealing step, it is enough to execute the annealing at a temperature range of from 450 °C to 600 °C for a total 10 minutes to 50 hours.

Steps and step conditions other than those defined by the present invention are not specifically limited, and can be performed by common procedures. Considering etching conditions of the aluminum material, the production method of the aluminum material can be arbitrarily changed.

The thickness of the aluminum material for electrolytic capacitor electrodes to be obtained after the final annealing is not specifically limited. In the present invention, the thickness can be 200 $\mu$m or less called "foil" and a thickness exceeding 200 $\mu$m.

The aluminum material to which the final annealing was executed is subjected to etching treatment to enhance the area increasing ratio. Although the etching treatment conditions are not specifically limited, it is preferable to employ a DC etching method. By employing a DC etching method, at portions where etching pit nuclei were generated at the annealing, the aluminum material will be etched deeply and thickly, creating a number of tunnel-like pits, which realizes high capacitance.

After the etching treatment, it is preferable to execute a formation of dielectric (by anodizing) to obtain an anode material. It is preferably used as a medium-voltage or high-voltage electrolytic capacitor electrode, but the present invention does not prevent the material from being used as a cathodic material. An electrolytic capacitor using this electrode material can have large capacitance.

The measurement of capacitance can be performed by a common procedure. For example, in an etched, and then formed foil to which a formation of dielectric (by anodizing) was executed, a method of measuring the capacitance in an ammonium borate aqueous solution 80 g/L at 30 °C using a stainless plate as a counter electrode can be exemplified.

**EXAMPLE 5**

Hereinafter, examples according to a fifth embodiment and comparative examples are shown.

Aluminum slabs containing Fe, Si, Cu and Pb shown in Table 36 were prepared. A plate obtained by hot-rolling the aluminum slab was cold-rolled into an aluminum plate 118 $\mu$m in thickness, 500 in width and 1,600 m in length. The plate was subjected to intermediate annealing, 6% tensile strain giving by uniaxial tensile expansion in the rolling direction, washing, heating in an oxidizing annealing, and final annealing to obtain an aluminum material for electrolytic capacitor electrodes.

Table 37 shows types of steps from the intermediate annealing to the final annealing (types of production steps of an aluminum material for electrolytic capacitor electrodes executed after the tensile strain giving (Steps 1-5)), Table 38 shows conditions of the intermediate annealing (Step 1), Tables 39-41 show conditions of the washing (Step 3) shown in Table 37, and Table 42 shows conditions of the heating (Step 4)in an oxidizing atmosphere shown in Table 37.

The removal amount of the aluminum material surface layer was controlled by adjusting the immersion time in washing liquid in the case of sequentially washing using alkaline aqueous solution, washing using acid aqueous solution, washing using alkaline aqueous solution and washing using acid aqueous solution, or by adjusting the immersion time in alkaline aqueous solution in the case of washing using acid aqueous solution after washing using alkaline aqueous solution.

EXAMPLE 1

The aluminum slab having the composition 6 shown in Table 36 was subjected to cold rolling to obtain an aluminum material 118 $\mu$m in thickness, 500 in width and 1, 600 m in length. After executing the intermediate annealing (Step 1) in the air at 260 °C for 12 hours, 6% tensile strain was given to the aluminum material (Step 2). The aluminum material to which tensile strain was given was washed with 80 °C 20 mass % $H_2SO_4$ aqueous solution under the conditions 29 shown in Table 41, the aluminum material surface layer was removed by 10 nm (Step 3) . The aluminum material was heated in the air for 8 hours at 200 °C under the condition H4 shown in Table 42 (Step 4), and then subjected to 550 °Cx4 hours final annealing in argon atmosphere. Thus, an aluminum material for electrolytic capacitor electrodes was obtained.

EXAMPLES 2-86, COMPARATIVE EXAMPLES 1-5

The aluminum slabs having various compositions (concrete compositions ware shown in Table 36) shown in Tables 43-47 were processed under the conditions shown in Tables 43-47 to obtain an aluminum material for electrolytic capacitor electrodes.

The aluminum material obtained in each Example satisfied at least a condition that the L value measured under the same conditions as those of the example in the first embodiment is not less than 25 but not more than 56 when a pre-treatment time is 30 seconds or a condition that the L value is not less than 27 but not more than 58 when the pre-treatment time is 45 seconds.

After immersing in an aqueous solution 75 °C containing HC1 1.0 mol/L and $H_2SO_4$ 3.5 mol/L, the aluminum materials obtained in each Example and Comparative Example were subjected to electrolytic treatment at current density of 0.2 A/cm$^2$. The aluminum materials to which the electrolytic treatment were executed were immersed in hydrochloric acid-sulfuric acid mixed aqueous solution having the aforementioned compositions at 90 °C for 360 seconds to increase the pit diameter. Thus, etched foils were obtained. The obtained etched foils were subjected to formation of dielectric (by anodizing) with forming voltage of 270 V in accordance with EIAJ standard to obtain capacitance measuring samples.

Tables 43-47 show the relative capacitance when the capacitance of Comparative Example 1 is defined as 100.

As understood from the results shown in the aforementioned Tables, by subjecting an aluminum material containing Pb falling within the concentration range specified by the present invention to intermediate annealing in the oxidizing atmosphere, tensile strain giving, and heating in an oxidizing atmosphere, then final annealing, an aluminum material for electrolytic capacitors excellent in etching characteristics can be obtained. Furthermore, Examples in which the Cu content is less than 10 ppm but not more than 15 ppm were higher in capacitance than Examples in which the Cu content is less than 10 ppm or exceeding 150 ppm and heating in an oxidizing atmosphere and final annealing were executed in the same conditions.

On the other hand, in Comparative Example 1, since the atmosphere for the intermediate annealing was not oxidizing and no heating in an oxidizing atmosphere was performed before the final annealing but after the tensile strain giving, the capacitance was lower than those of Examples. In Comparative Example 2, since heating was executed in an oxidizing atmosphere before the final annealing but after the tensile strain giving, although the capacitance was increased as compared with Comparative Example 3 in which no heating in an oxidizing atmosphere was executed, in Comparative Example 2 and 3, since the Pb content was less than 0.1 mass ppm and the atmosphere for the intermediate annealing was not oxidizing, the capacitance was lower than those of Examples. In Comparative Example 4, the atmosphere for the intermediate annealing was not oxidizing and the Pb content was less than the lower limit of the present invention. In Comparative Example 5, the atmosphere for the intermediate annealing was not oxidizing and the Pb content exceeded the upper limit of the present invention. Therefore, both of them were low in capacitance.

[Table 36]

| Si,Fe,Cu and Pb concentration of Aluminum slab | | | | |
|---|---|---|---|---|
| | Concentration/Mass ppm | | | |
| | Fe | Si | Cu | Pb |
| Composition 1 | 16 | 23 | 15 | 0.9 |
| Composition 2 | 16 | 23 | 15 | 1.4 |
| Composition 3 | 16 | 23 | 15 | 2.3 |
| Composition 4 | 15 | 21 | 40 | 0.9 |
| Composition 5 | 15 | 21 | 55 | 0.4 |
| Composition 6 | 15 | 21 | 55 | 0.6 |
| Composition 7 | 15 | 21 | 55 | 0.9 |
| Composition 8 | 14 | 21 | 100 | 0.9 |
| Composition 9 | 12 | 20 | 130 | 0.9 |
| Composition 1 0 | 18 | 25 | 8 | 0.9 |
| Composition 1 1 | 10 | 18 | 200 | 0.9 |
| Composition 1 2 | 14 | 21 | 58 | Less than 0.1 |
| Composition 1 3 | 14 | 21 | 57 | 0.2 |
| Composition 1 4 | 15 | 21 | 58 | 3.0 |
| Composition 1 5 | 50 | 50 | 20 | 0.9 |
| Composition 1 6 | 30 | 38 | 20 | 0.9 |
| Composition 1 7 | 8 | 8 | 60 | 0.9 |

[Table 37]

| Step | | | |
|---|---|---|---|
| | | | Method |
| Step 1 | Intermediate annealing | | Executed under conditions shown in Table 3 |
| Step 2 | Tensile strain giving | | 6% tensile strain was given by uniaxial expansion in the longitudinal direction. |
| Step 3 | Washing | | Executed under conditions shown in Tables 4-6. After rewinding from a coil, washed and winded. |
| Step 4 | Heating in oxidizing atmosphere | | Executed under conditions containing oxygen shown in Table 7. In the case of executing in a uncoiled state, winded after heating. |
| Step 5 | Final annealing | | Executed in argon atmosphere |

[Table 38]

| Step 1 Conditions (intermediate annealing) | | | |
|---|---|---|---|
| Atmosphere | Heating temperature (°C) | Heating time | Heating condition |
| Air | 210 | 12 Hours | Condition A |
| | 210 | 25 Hours | Condition B |
| | 230 | 19 Hours | Condition C |
| | 260 | 12 Hours | Condition D |
| | 275 | 4 Hours | Condition E |
| | 275 | 7 Hours | Condition F |
| | 290 | 4 Hours | Condition G |
| Oxygen 5vol%, nitrogen 95vol% | 260 | 12 Hours | Condition H |
| Oxygen 1vol%, nitrogen 99vol% | 260 | 12 Hours | Condition I |
| Oxygen 0.1vol%, nitrogen 99.9vol% | 260 | 12 Hours | Condition J |
| Nitrogen 99.99vol% or more | 260 | 12 Hours | Condition K |

[Table 39]

| Step 3 Conditions (Washing) | |
|---|---|
| Washing method | Condition Number |
| After immersing in n- hexane, dried in the air | Condition 1 |
| After immersing in water containing 0.2 mass% sodium dodecyl sulfate, washed and dried. | Condition 2 |

[Table 40]

| Step 3 Conditions (Washing) | | |
|---|---|---|
| Washing method | Aluminum material surface layer removal amount | Condition number |
| 40°C 0.2mass% sodium hydroxide aqueous solution immersion (※1)→ water washing→ drying in the air | 7nm | Condition 3 |
| 40°C 0.2mass% sodium hydroxide aqueous solution immersion(※1)→ water washing→ drying in the air | 10nm | Condition 4 |
| 40°C 0.2mass% sodium hydroxide aqueous solution immersion(※1)→ water washing→ drying in the air | 100nm | Condition 5 |
| 40°C 0.2mass% sodium hydroxide aqueous solution immersion(※1)→ water washing→ drying in the air | 190nm | Condition 6 |

(continued)

| Step 3 Conditions (Washing) | | |
| --- | --- | --- |
| Washing method | Aluminum material surface layer removal amount | Condition number |
| 40°C 0.2mass% sodium hydroxide aqueous solution immersion(※ 1 )→ water washing→ drying in the air | 490nm | Condition 7 |
| 40°C 0.2mass% calcium hydroxide aqueous solution immersion(※1)→ water washing→ drying in the air | 100nm | Condition 8 |
| 40°C 0.2mass% potassium hydroxide aqueous solution immersion(※ 1)→ water washing→ drying in the air | 100nm | Condition 9 |
| 40°C 0.2mass% sodium orthosilicate aqueous solution immersion(※ 1)→ water washing→ drying in the air | 100nm | Condition 1 0 |
| 40°C 0.2mass% sodium metasilicate aqueous solution immersion(※ 1 )→ water washing→ drying in the air | 100nm | Condition 1 1 |
| 40°C 0.2mass% sodium tertiary phosphate aqueous solution immersion(※1 )→ water washing→ drying in the air | 100nm | Condition 1 2 |
| 40°C 0.2mass% sodium carbonate aqueous solution immersion(※ 1)→ water washing→ drying in the air | 100nm | Condition 1 3 |
| 40°C (0.2mass% sodium hydoxide+0.2mass%calcium hydroxide aqueous solution)aqueous solution immersion(※ 1) → water washing→ drying in the air | 100nm | Condition 1 4 |
| 40°C (0.2mass% sodium hydroxide+0.2mass% potassium hydroxide) aqueous solution immersion(※ 1 )→ water washing → drying in the air | 100nm | Condition 1 5 |
| 40°C (0.2mass% sodium hydroxide+0.2mass% sodium orthosilicate) aqueous solution immersion(※ 1)→ water washing→ drying in the air | 100nm | Condition 1 6 |
| 40°C (0.2mass% sodium hydoxide+0.2mass% sodium tertiary phosphate) aqueous solution immersion(※ 1 )→ water washing→ drying in the air | 100nm | Condition 1 7 |
| ※ 1 : The removal amount of the aluminum material surface layer was controlled by changing the immersion time in aqueous solution. | | |

[Table 41]

| Step 3 Conditions (Washing) | | |
|---|---|---|
| Washing method | Aluminum material surface layer removal amount | Condition number |
| 40°C 0.2mass% sodium hydroxide aqueous solution immersion (※ 1) → water washing→ 40°C 5mass% hydrochloric acid aqueous solution 1 minute immersion→ water washing→ drying in the air | 100nm | Condition 1 8 |
| 40°C 0.2mass% sodium hydroxide aqueous solution immersion (※ 1) → water washing→ 40°C 5mass% sulfuric acid aqueous solution 1 minute immersion- water washing→ drying in the air | 100nm | Condition 1 9 |
| 40°C 0.2mass% sodium hydroxide aqueous solution immersion (※ 1) → water washing→ 40°C 5mass% nitric acid aqueous solution1 minute immersion- water washing→ drying in the air | 100nm | Condition 2 0 |
| 40°C 0.2mass% sodium hydroxide aqueous solution immersion (※ 1) → water washing→ 40°C 5mass% orthophosphoric acid aqueous solution1 minute immersion→ water washing→ drying in the air | 100nm | Condition 2 1 |
| 40°C 0.2mass% sodium hydroxide aqueous solution immersion (※ 1) → water washing→ 40°C 3mass% hydrochloric acid+3mass% sulfuric acid aqueous solution 1 minute immersion→ water washing→ drying in the air | 100nm | Condition 2 2 |
| 40°C 0.2mass% sodium hydroxide aqueous solution immersion (※ 1) → water washing→ 40°C3mass% hydrochloric acid+3mass% nitric acid aqueous solution 1 minute immersion→ water washing→ drying in the air | 100nm | Condition 2 3 |
| 40°C 0.2mass% sodium hydroxide aqueous solution immersion (※ 1) → water washing→ 40°C 3mass% hydrochloric acid+3 mass% orthophosphoric acid aqueous solution 1 minute immersion- water washing→ drying in the air | 100nm | Condition 2 4 |
| 40°C 0.2mass% sodium hydroxide aqueous solution immersion (※ 1) → water washing→ 40°C3mass% sulfuric acid+3mass% nitric acid aqueous solution 1 minute immersion→ water washing→ drying in the air | 100nm | Condition 2 5 |

(continued)

| Step 3 Conditions (Washing) | | |
|---|---|---|
| Washing method | Aluminum material surface layer removal amount | Condition number |
| 40°C 0.2mass% sodium hydroxide aqueous solution immersion (※ 1) → water washing→ 40°C3mass% sulfuric acid+3mass% orthophosphoric acid aqueous solution 1 minute immersion→ water washing→ drying in the air | 100nm | Condition 26 |
| 40°C 0.2mass% sodium hydroxide aqueous solution immersion (※1) → water washing→ 40°C3mass% nitric acid +3mass% orthophosphoric acid aqueous solution 1 minute immersion→ water washing→ drying in the air | 100nm | Condition 2 7 |
| 80°C8mass% hydrochloric acid aqueous solution immersion (※ 1) → water washing→ drying in the air | 1.3nm | Condition 2 8 |
| 80°C 20mass% sulfuric acid aqueous solution immersion(※ 1) → water washing→ drying in the air | 10nm | Condition 2 9 |
| 80°C 4.5mass% nitric acid aqueous solution immersion (※ 1)→ water washing→ drying in the air | 1.7nm | Condition 3 0 |
| 80°C 20mass% phosphoric acid aqueous solution immersion(※ 1) → water washing→ drying in the air | 10nm | Condition 3 1 |
| ※ 1 : The removal amount of the aluminum material surface layer was controlled by changing the immersion time in aqueous solution. | | |

[Table 42]

| Step 4 Condition (heating in oxidizing atmosphere) | | | | |
|---|---|---|---|---|
| Atmosphere | Heating temperature °C | Heating time | Heating type Batch type: Heating in a coiled state Continuous type: Heating in a uncoiled state | Heating condition |
| Air | 5 0 | 7 2 hours | Batch type | H1 |
| | 7 0 | 4 8 hours | Batch type | H2 |
| | 1 5 0 | 2 4 hours | Batch type | H3 |
| | 2 0 0 | 8 hours | Batch type | H4 |
| | 2 0 0 | 3 0 minutes | Batch type | H5 |
| | 2 2 0 | 5 hours | Batch type | H6 |
| | 3 5 0 | 1 0 seconds | Continuous type | H7 |
| | 3 8 0 | 4 seconds | Continuous type | H8 |
| | 3 3 0 | 7 0 seconds | Continuous type | H9 |
| Oxygen 5vol%, Nitrogen 95vol% | 2 0 0 | 8 hours | Batch type | H10 |
| Oxygen 1vol% Nitrogen 99vol% | 2 0 0 | 8 hours | Batch type | H11 |
| Oxygen 0.1vol%, Nitrogen 99.9vol% | 2 0 0 | 8 hours | Batch type | H12 |

[Table 43]

| | Ingot Composition | Step 1 Intermediate annealing | Step 2 Tensile strain giving | Step 3 Washing | Step 4 Heating in oxidizing atmosphere | Step 5 Final annealing | Relative capacitance % |
|---|---|---|---|---|---|---|---|
| Ex. 1 | Composition 6 | Condition D | Executed | Condition 29 | H4 | 550□4h | 124 |
| Ex. 2 | Composition 7 | Condition I | Executed | Condition 1 | H4 | 550□4h | 120 |
| Ex. 3 | Composition 7 | Condition I | Executed | Condition 2 | H4 | 550□4h | 119 |
| Ex. 4 | Composition 6 | Condition D | Executed | Condition 31 | H4 | 550□4h | 121 |
| Ex. 5 | Composition 6 | Condition I | Executed | Condition 30 | H4 | 550□4h | 113 |
| Ex. 6 | Composition 6 | Condition I | Executed | Condition 28 | H4 | 550□4h | 111 |
| Ex. 7 | Composition 6 | Condition D | Executed | Condition 9 | H4 | 510□24h | 111 |
| Ex. 8 | Composition 6 | Condition D | Executed | Condition 10 | H4 | 510□24h | 113 |
| Ex. 9 | Composition 6 | Condition D | Executed | Condition 11 | H4 | 510□24h | 114 |
| Ex. 10 | Composition 6 | Condition D | Executed | Condition 12 | H4 | 510□24h | 114 |
| Ex. 11 | Composition 6 | Condition D | Executed | Condition 13 | H4 | 510□24h | 113 |
| Ex. 12 | Composition 6 | Condition D | Executed | Condition 14 | H4 | 510□24h | 113 |
| Ex. 13 | Composition 6 | Condition D | Executed | Condition 15 | H4 | 510□24h | 113 |
| Ex. 14 | Composition 6 | Condition D | Executed | Condition 16 | H4 | 510□24h | 114 |
| Ex. 15 | Composition 6 | Condition D | Executed | Condition 17 | H4 | 510□24h | 114 |
| Ex. 16 | Composition 6 | Condition D | Executed | Condition 18 | H4 | 510□24h | 118 |
| Ex. 17 | Composition 6 | Condition D | Executed | Condition 19 | H4 | 510□24h | 117 |
| Ex. 18 | Composition 6 | Condition D | Executed | Condition 20 | H4 | 510□24h | 117 |
| Ex. 19 | Composition 6 | Condition D | Executed | Condition 21 | H4 | 510□24h | 118 |
| Ex. 20 | Composition 6 | Condition D | Executed | Condition 22 | H4 | 510□24h | 118 |

[Table 44]

| | Ingot Composition | Step 1 Intermediate annealing | Step 2 Tensile strain giving | Step 3 Washing | Step 4 Heating in oxidizing atmosphere | Step 5 Final annealing | Relative capacitance % |
|---|---|---|---|---|---|---|---|
| Ex. 21 | Composition 6 | Condition D | Executed | Condition 23 | H4 | 510□24h | 119 |
| Ex. 22 | Composition 6 | Condition D | Executed | Condition 24 | H4 | 510□24h | 117 |
| Ex. 23 | Composition 6 | Condition D | Executed | Condition 25 | H4 | 510□24h | 118 |
| Ex. 24 | Composition 6 | Condition D | Executed | Condition 26 | H4 | 510□24h | 119 |
| Ex. 25 | Composition 6 | Condition D | Executed | Condition 27 | H4 | 510□24h | 119 |
| Ex. 26 | Composition 6 | Condition D | Executed | Condition 8 | H4 | 510□24h | 114 |
| Ex. 27 | Composition 6 | Condition D | Executed | Condition 5 | H4 | 510□24h | 115 |
| Ex. 28 | Composition 6 | Condition D | Executed | Condition 4 | H4 | 510□24h | 112 |
| Ex. 29 | Composition 7 | Condition D | Executed | Condition 6 | H4 | 510□24h | 112 |
| Ex. 30 | Composition 6 | Condition D | Executed | Condition 3 | H4 | 510□24h | 111 |
| Ex. 31 | Composition 7 | Condition D | Executed | Condition 7 | H4 | 510□24h | 109 |
| Ex. 32 | Composition 1 | Condition D | Executed | Condition 29 | H4 | 530□6h | 118 |
| Ex. 33 | Composition 2 | Condition D | Executed | Condition 29 | H4 | 530□6h | 115 |
| Ex. 34 | Composition 3 | Condition D | Executed | Condition 29 | H4 | 530□6h | 113 |
| Ex. 35 | Composition 4 | Condition D | Executed | Condition 29 | H4 | 530□6h | 119 |
| Ex. 36 | Composition 5 | Condition D | Executed | Condition 29 | H4 | 530□6h | 118 |
| Ex. 37 | Composition 7 | Condition D | Executed | Condition 29 | H4 | 530□6h | 123 |
| Ex. 38 | Composition 8 | Condition D | Executed | Condition 29 | H4 | 530□6h | 117 |
| Ex. 39 | Composition 9 | Condition D | Executed | Condition 29 | H4 | 530□6h | 114 |

[Table 45]

| | Ingot Composition | Step 1 Intermediate annealing | Step 2 Tensile strain giving | Step 3 Washing | Step 4 Heating in oxidizing atmosphere | Step 5 Final annealing | Relative capacitance % |
|---|---|---|---|---|---|---|---|
| Ex. 4 0 | Composition 10 | Condition D | Executed | Condition 29 | H4 | 530□6h | 107 |
| Ex. 4 1 | Composition 11 | Condition D | Executed | Condition 29 | H4 | 530□6h | 109 |
| Ex. 4 2 | Composition 1 | Condition I | Executed | Condition 1 | H4 | 530□6h | 115 |
| Ex. 4 3 | Composition 2 | Condition I | Executed | Condition 1 | H4 | 530□6h | 114 |
| Ex. 4 4 | Composition 3 | Condition I | Executed | Condition 1 | H4 | 530□6h | 111 |
| Ex. 4 5 | Composition 4 | Condition I | Executed | Condition 1 | H4 | 530□6h | 117 |
| Ex. 4 6 | Composition 5 | Condition I | Executed | Condition 1 | H4 | 530□6h | 107 |
| Ex. 4 7 | Composition 6 | Condition I | Executed | Condition 1 | H4 | 530□6h | 109 |
| Ex. 4 8 | Composition 8 | Condition I | Executed | Condition 1 | H4 | 530□6h | 116 |
| Ex. 4 9 | Composition 9 | Condition I | Executed | Condition 1 | H4 | 530□6h | 112 |
| Ex. 5 0 | Composition 10 | Condition I | Executed | Condition 1 | H4 | 530□6h | 107 |
| Ex. 5 1 | Composition 11 | Condition I | Executed | Condition 1 | H4 | 530□6h | 108 |
| Ex. 5 2 | Composition 6 | Condition D | Executed | Condition 29 | H1 | 530□6h | 108 |
| Ex. 5 3 | Composition 6 | Condition D | Executed | Condition 29 | H2 | 530□6h | 112 |
| Ex. 5 4 | Composition 6 | Condition D | Executed | Condition 29 | H3 | 530□6h | 121 |
| Ex. 5 5 | Composition 6 | Condition D | Executed | Condition 29 | H5 | 530□6h | 115 |
| Ex. 5 6 | Composition 6 | Condition D | Executed | Condition 29 | H6 | 530□6h | 120 |
| Ex. 5 7 | Composition 6 | Condition D | Executed | Condition 29 | H7 | 530□6h | 116 |
| Ex. 5 8 | Composition 6 | Condition D | Executed | Condition 29 | H8 | 530□6h | 114 |

[Table 46]

|  | Ingot Composition | Step 1 Intermediate annealing | Step 2 Tensile strain giving | Step 3 Washing | Step 4 Heating in oxidizing atmosphern | Step 5 Final annealing | Relative capacitance % |
|---|---|---|---|---|---|---|---|
| Ex. 5 9 | Composition 6 | Condition D | Executed | Condition 29 | H9 | 530□6h | 116 |
| Ex. 6 0 | Composition 6 | Condition D | Executed | Condition 29 | H10 | 530□6h | 119 |
| Ex. 6 1 | Composition 6 | Condition D | Executed | Condition 29 | H11 | 530□6h | 115 |
| Ex. 6 2 | Composition 6 | Condition D | Executed | Condition 29 | H12 | 530□6h | 109 |
| Ex. 6 3 | Composition 7 | Condition I | Executed | Condition 1 | H1 | 530□6h | 107 |
| Ex. 6 4 | Composition 7 | Condition I | Executed | Condition 1 | H2 | 530□6h | 110 |
| Ex. 6 5 | Composition 7 | Condition I | Executed | Condition 1 | H3 | 530□6h | 118 |
| Ex. 6 6 | Composition 7 | Condition I | Executed | Condition 1 | H5 | 530□6h | 113 |
| Ex. 6 7 | Composition 7 | Condition I | Executed | Condition 1 | H6 | 530□6h | 116 |
| Ex. 6 8 | Composition 7 | Condition I | Executed | Condition 1 | H7 | 530□6h | 111 |
| Ex. 6 9 | Composition 7 | Condition I | Executed | Condition 1 | H8 | 530□6h | 109 |
| Ex. 7 0 | Composition 7 | Condition I | Executed | Condition 1 | H9 | 530□6h | 113 |
| Ex. 7 1 | Composition 7 | Condition I | Executed | Condition 1 | H10 | 530□6h | 116 |
| Ex. 7 2 | Composition 7 | Condition I | Executed | Condition 1 | H11 | 530□6h | 112 |
| Ex. 7 3 | Composition 7 | Condition I | Executed | Condition 1 | H12 | 530□6h | 106 |
| Ex. 7 4 | Composition 7 | Condition I | Executed | No washing | H3 | 530□6h | 117 |
| Ex. 7 5 | Composition 7 | Condition I | Executed | No washing | H3 | 480□24h | 112 |
| Ex. 7 6 | Composition 7 | Condition I | Executed | No washing | H3 | 570□4h | 113 |
| Ex. 7 7 | Composition 6 | Condition I | Executed | Condition 4 | H4 | 530□6h | 111 |

# EP 1 873 268 A1

[Table 47]

| | Ingot Composition | Step 1 Intermediate annealing | Step 2 Tensile strain giving | Step 3 Washing | Step 4 Heating in oxidizing atmosphere | Step 5 Final annealing | Relative capacitance % |
|---|---|---|---|---|---|---|---|
| Ex. 7 8 | Composition 7 | Condition H | Executed | 29 | H4 | 530□6h | 123 |
| Ex. 7 9 | Composition 7 | Condition I | Executed | 29 | H4 | 530□6h | 122 |
| Ex. 8 0 | Composition 7 | Condition J | Executed | 29 | H4 | 530□6h | 121 |
| Ex. 8 1 | Composition 17 | Condition C | Executed | 29 | H4 | 530□6h | 123 |
| Ex. 8 2 | Composition 17 | Condition B | Executed | 29 | H4 | 530□6h | 121 |
| Ex. 8 3 | Composition 17 | Condition A | Executed | 29 | H4 | 530□6h | 119 |
| Ex. 8 4 | Composition 16 | Condition F | Executed | 29 | H4 | 530□6h | 118 |
| Ex. 8 5 | Composition 16 | Condition E | Executed | 29 | H4 | 530□6h | 116 |
| Ex. 8 6 | Composition 15 | Condition G | Executed | 29 | H4 | 530□6h | 115 |
| Comp.Ex.1 | Composition 6 | Condition K | Executed | Condition 4 | No heating | 530□6h | 100 |
| Comp.Ex.2 | Composition 12 | Condition K | Executed | Condition 4 | H4 | 530□6h | 77 |
| Comp.Ex.3 | Composition 12 | Condition K | Executed | Condition 4 | No heating | 530□6h | 71 |
| Comp.Ex.4 | Composition 13 | Condition K | Executed | Condition 1 | H4 | 530□6h | 98 |
| Comp.Ex.5 | Composition 14 | Condition K | Executed | Condition 1 | H4 | 530□6h | 98 |

[Description of related applications]

This application claims priority to Japanese Patent Application No. 2005-77776 filed on March 17, 2005, Japanese Patent Application No. 2005-199226 filed on July 7, 2005, Japanese Patent Application No. 2005-224565 filed on August 2, 2005, and Japanese Patent Application No. 2005-234150 filed on August 12, 2005, the entire disclosures of which are incorporated herein by reference in their entireties.

**INDUSTRIAL APPLICABILITY**

As explained above, the aluminum material for electrolytic capacitor electrodes, an anode material for aluminum electrolytic capacitors, an aluminum electrolytic capacitor, and an electrode material for electrolytic capacitors produced by the production method of an electrode material for electrolytic capacitors are excellent in capacitance and can be widely used for various productes including electronic products.

**Claims**

**1.** An aluminum material for electrolytic capacitor electrodes,
wherein Pb content is not less than 0.3 mass ppm but not more than 2.5 mass ppm, and
wherein an aluminum material subjected to evaluation etching defined below meets either a condition that a Lab lightness index (L value) of the aluminum material measured by a method defined below is not less than 25 but not more than 56 when a pre-treatment time is 30 seconds or a condition that the Lab lightness index is not less than 27 but not more than 58 when the pre-treatment time is 45 seconds:
[Method of the Evaluation Etching]
the aluminummaterial is immersed in a phosphoric acid solution of 50 °C in temperature and 2 mol/L in concentration for 30 seconds or 45 seconds, and then washed with water as pre-treatment. Thereafter, the aluminum material is subjected to DC electrolytic etching in an electrolytic solution defined below at current density of 0.4 A/cm$^2$ for 3

seconds, washed with water, and then dried.

Component of the electrolytic solution: Hydrochloric acid of 1.0 mol/L, Sulfuric acid of 2.7 mol/L, and Aluminum sulfate of 1.0 mol/L (Aluminum sulfate is added as hydrate)

Temperature of the electrolytic solution: 82 °C

Carbon electrodes as opposed electrodes are disposed at both sides of the aluminum material at a distance of 17 mm to execute double-sided etching (current density is a value per projected area of the aluminum material)

[Measuring Method of the Lab Light Index (L value)]

Optical Condition: 45-n (Condition "a" described in JIS Z 8722 5.3.1)

Measurement Condition: C light 2° visual field

Specimen Arrangement Condition: Measurement is performed in a state in which a specimen is disposed with the rolling direction perpendicularly intersecting with the normal line of central optical path of a bundle of rays and contained on a specimen surface.

2. The aluminum material for electrolytic capacitor electrodes as recited in claim 1, wherein the aluminum material meets both the condition that the lightness index (L value) is not less than 25 but not more than 56 when the pre-treatment time is 30 seconds and the condition that the lightness index is not less than 27 but not more than 58 when the pre-treatment time is 45 seconds.

3. The aluminum material for electrolytic capacitor electrodes as recited in claim 1 or 2, wherein the lightness index (Lvalue) is not less than 30 but not more than 53 when the pre-treatment time is 30 seconds and not less than 33 but not more than 55 when the pre-treatment time is 45 seconds.

4. The aluminum material for electrolytic capacitor electrodes as recited in claim 1 or 2, wherein the lightness index (L value) is not less than 33 but not more than 45 when the pre-treatment time is 30 seconds and not less than 40 but not more than 53 when the pre-treatment time is 45 seconds.

5. The aluminum material for electrolytic capacitor electrodes as recited in any one of claims 1 to 4, wherein the Pb content is not less than 0.4 mass ppm but not more than 1.8 mass ppm.

6. The aluminum material for electrolytic capacitor electrodes as recited in any one of claims 1 to 4, wherein the Pb content is not less than 0.5 mass ppm but not more than 1.2 mass ppm.

7. The aluminum material for electrolytic capacitor electrodes as recited in any one of claims 1 to 4, wherein the aluminum material includes Cu not less than 10 mass ppm but not more than 150 mass ppm.

8. The aluminum material for electrolytic capacitor electrodes as recited in any one of claims 1 to 4, wherein the aluminum material includes Cu not less than 15 mass ppm but not more than 100 mass ppm.

9. The aluminum material for electrolytic capacitor electrodes as recited in any one of claims 1 to 8, wherein aluminum purity of the aluminum material is 99.9 mass% or higher.

10. The aluminum material for electrolytic capacitor electrodes as recited in any one of claims 1 to 8, wherein the aluminum material is used as a medium-voltage or high-voltage anode material.

11. An electrode material for electrolytic capacitors obtained by subjecting the aluminum material as recited in any one of claims 1 to 9 to etching.

12. The electrode material for electrolytic capacitors as recited in claim 11, wherein at least a part of the etching is executed by DC electrolytic etching.

13. The electrode material for electrolytic capacitors as recited in claim 11 or 12, wherein the electrode material is obtained by further subjecting the aluminum material to formation of dielectric (by anodizing).

14. The electrode material for electrolytic capacitors as recited in claim 13, wherein the electrode material is used as an anode material.

15. An aluminum electrolytic capacitor comprising the electrode material for electrolytic capacitors as recited in claim 13 or 14.

**16.** A production method of an aluminum material for electrolytic capacitor electrodes, comprising:

heating an aluminum material containing Pb not less than 0.3 mass ppm but not more than 2.5 mass ppm in an oxidizing atmosphere after completion of cold rolling; and thereafter

subjecting the aluminum material to final annealing.

**17.** The production method of an aluminum material for electrolytic capacitor electrodes as recited in claim 16, wherein the aluminum material includes Cu not less than 10 mass ppm but not more than 150 mass ppm.

**18.** The production method of an aluminum material for electrolytic capacitor electrodes as recited in claim 16 or 17, wherein aluminum purity of the aluminum material is 99.9 mass% or higher.

**19.** The production method of an aluminum material for electrolytic capacitor electrodes as recited in any one of claims 16 to 18, wherein a heating temperature of the oxidizing atmosphere is 50 to 400 °C.

**20.** The production method of an aluminum material for electrolytic capacitor electrodes as recited in claim 19, wherein a heating time in the oxidizing atmosphere is not shorter than 3 seconds but not longer than 72 hours.

**21.** The production method of an aluminum material for electrolytic capacitor electrodes as recited in any one of claims 16 to 20, wherein oxygen concentration in the oxidizing atmosphere during the heating is not less than 0.1 vol%.

**22.** The production method of an aluminum material for electrolytic capacitor electrodes as recited in any one of claims 16 to 21, wherein the aluminum material is sequentially subjected to intermediate annealing and finish cold rolling before completion of cold rolling.

**23.** The production method of an aluminum material for electrolytic capacitor electrodes as recited in any one of claims 16 to 22, wherein before the heating in the oxidizing atmosphere but after completion of the cold rolling, washing is performed.

**24.** The production method of an aluminum material for electrolytic capacitor electrodes as recited in claim 23, wherein washing liquid for use in the washing is at least one of organic solvent, water containing surfactant, and a mixture of water-soluble organic solvent and water.

**25.** The production method of an aluminum material for electrolytic capacitor electrodes as recited in claim 23, wherein washing liquid for use in the washing is at least one of acid aqueous solution and alkaline aqueous solution.

**26.** The production method of an aluminum material for electrolytic capacitor electrodes as recited in claim 23, wherein the washing is performed by sequentially executing washing with alkaline aqueous solution and washing with acid aqueous solution.

**27.** The production method of an aluminum material for electrolytic capacitor electrodes as recited in claim 25 or 26, wherein acid in the acid aqueous solution is one or more selected from the group consisting of hydrochloric acid, sulfuric acid, nitric acid, and acid containing phosphorus.

**28.** The production method of an aluminum material for electrolytic capacitor electrodes as recited in claim 25 or 26, wherein alkaline in the alkaline aqueous solution is one or more selected from the group consisting of sodium hydroxide, calcium hydroxide, potassium hydroxide, sodium orthosilicate, sodium metasilicate, sodium tertiary phosphate, and sodium carbonate.

**29.** The production method of an aluminum material for electrolytic capacitor electrodes as recited in any one of claims 25 to 28, wherein an average removal amount of a surface layer of the aluminum material by the washing is not less than 1 nm but not more than 500 nm per one side of the aluminum material, and wherein the removal amount is defined by:

$$\text{removal amount } D \text{ (nm)} = E\,(g/cm^2) \times 10^7/2.7\,(g/cm^3),$$

where E is a decreased amount per unit surface area by the washing, and 2.7g/cm$^3$ is density of the aluminum material.

30. The production method of an aluminum material for electrolytic capacitor electrodes as recited in claim 24, wherein Pb concentration in the aluminum material is not less than 0.6 mass ppm but not more than 2.5 mass ppm.

31. The production method of an aluminum material for electrolytic capacitor electrodes as recited in any one of claims 22 to 30, wherein the intermediate annealing is executed in an inert gas atmosphere.

32. The production method of an aluminum material for electrolytic capacitor electrodes as recited in any one of claims 16 to 31, wherein the final annealing is executed in an inert gas atmosphere.

33. The production method of an aluminum material for electrolytic capacitor electrodes as recited in any one of claims 16 to 32, wherein the final annealing is executed at a temperature of not lower than 450 °C but not higher than 600 °C.

34. An aluminum material for electrolytic capacitor electrodes produced by the production method as recited in any one of claims 16 to 33.

35. The aluminum material for electrolytic capacitor electrodes as recited in claim 34, wherein the aluminum material is used as a medium-voltage or high-voltage anode material.

36. A production method of an electrode material for electrolytic capacitors, comprising a step of subjecting the aluminum material produced by the production method as recited in any one of claims 16 to 33 to etching.

37. The production method of an electrode material for electrolytic capacitors as recited in claim 36, wherein at least a part of the etching is DC electrolytic etching.

38. The production method of an electrode material for electrolytic capacitors as recited in claim 37, wherein after the etching, formation of dielectric (by anodizing) is executed.

39. An anode material for aluminum electrolytic capacitors produced by the production method as recited in claim 37 or 38.

40. An aluminum electrolytic capacitor, wherein the aluminum electrode material produced by the production method as recited in any one of claims 36 to 38 is used as an electrode material.

41. A production method of an aluminum material for electrolytic capacitor electrodes, comprising:

sequentially subjecting an aluminum material containing Pb not less than 0.3 mass ppm but not more than 2.5 mass ppm to hot rolling, cold rolling, intermediate annealing in an oxidizing atmosphere and finish cold rolling; further heating the aluminum material in an oxidizing atmosphere; and thereafter subjecting the aluminum material to final annealing.

42. The production method of an aluminum material for electrolytic capacitor electrodes as recited in claim 41, wherein the aluminum material contains Cu not less than 10 mass ppm but not more than 150 mass ppm.

43. The production method of an aluminum material for electrolytic capacitor electrodes as recited in claim 41 or 42, wherein aluminum purity of the aluminum material is 99.9 mass% or higher.

44. The production method of an aluminum material for electrolytic capacitor electrodes as recited in any one of claims 41 to 43, wherein a heating temperature of the heating executed in an oxidizing atmosphere after the finish cold rolling is 50 to 400 °C.

45. The production method of an aluminum material for electrolytic capacitor electrodes as recited in claim 44, wherein a heating time of the heating executed in an oxidizing atmosphere after the final cold rolling is not shorter than 3 seconds but not longer than 72 hours.

46. The production method of an aluminum material for electrolytic capacitor electrodes as recited in any one of claims 41 to 45, wherein oxygen content in the oxidizing atmosphere at the time of heating executed after the finish cold rolling is not less than 0.1 vol%.

**47.** The production method of an aluminum material for electrolytic capacitor electrodes as recited in any one of claims 41 to 46, wherein the intermediate annealing in the oxidizing atmosphere is executed at a temperature of not lower than 200 °C but not higher than 320 °C.

**48.** The production method of an aluminum material for electrolytic capacitor electrodes as recited in any one of claims 41 to 47,
wherein oxygen concentration in the oxidizing atmosphere for executing the intermediate annealing is not less than 0.1 vol%.

**49.** The production method of an aluminum material for electrolytic capacitor electrodes as recited in any one of claims 41 to 48, wherein washing is executed before heating in the oxidizing atmosphere after the finish cold rolling.

**50.** The production method of an aluminum material for electrolytic capacitor electrodes as recited in claim 49, wherein washing liquid for use in the washing is at least one of organic solvent, water containing surfactant,and a mixture of water-soluble organic solvent and water.

**51.** The production method of an aluminum material for electrolytic capacitor electrodes as recited in claim 49, wherein washing liquid for use in the washing is at least one of acid aqueous solution and alkaline aqueous solution.

**52.** The production method of an aluminum material for electrolytic capacitor electrodes as recited in claim 49, wherein the washing is performed by sequentially executing washing with alkaline aqueous solution and washing with acid aqueous solution.

**53.** The production method of an aluminum material for electrolytic capacitor electrodes as recited in claims 51 or 52, wherein acid in the acid aqueous solution is one or more selected from the group consisting of hydrochloric acid, sulfuric acid, nitric acid, and acid containing phosphoric acid.

**54.** The production method of an aluminum material for electrolytic capacitor electrodes as recited in claims 51 or 52, wherein alkaline in the alkaline aqueous solution is one or more selected from the group consisting of sodium hydroxide, calcium hydroxide, potassium hydroxide, sodium orthosilicate, sodium metasilicate, sodium tertiary phosphate, and sodium carbonate.

**55.** The production method of an aluminum material for electrolytic capacitor electrodes as recited in any one of claims 51 to 54, wherein an average removal amount of a surface layer of the aluminum material by the washing is not less than 1 nm but not more than 500 nm per one side of the aluminum material, and wherein the removal amount is defined by:

$$\text{removal amount D (nm)} = E(g/cm^2) \times 10^7 / 2.7(g/cm^3),$$

where E is a decreased amount per unit surface area by the washing, and $2.7 g/cm^3$ is density of the aluminum material.

**56.** The production method of an aluminum material for electrolytic capacitor electrodes as recited in claim 50, wherein Pb concentration in the aluminum material is not less than 0.6 mass ppm but not more than 2.5 mass ppm.

**57.** The production method of an aluminum material for electrolytic capacitor electrodes as recited in any one of claims 41 to 56, wherein the final annealing is executed in an inert gas atmosphere.

**58.** The production method of an aluminum material for electrolytic capacitor electrodes as recited in any one of claims 41 to 57, wherein the final annealing is executed at a temperature of not lower than 450 °C but not higher than 600 °C.

**59.** An aluminum material for electrolytic capacitor electrodes produced by the production method as recited in any one of claims 41 to 58.

**60.** The aluminum material for electrolytic capacitor electrodes as recited in claim 59, wherein the aluminum material is used as a medium-voltage or high-voltage anode material.

61. A production method of an electrode material for electrolytic capacitors, comprising a step of subjecting the aluminum material produced by the production method as recited in any one of claims 41 to 58 to etching.

62. The production method of an electrode material for electrolytic capacitors as recited in claim 61, wherein at least a part of the etching is DC electrolytic etching.

63. The production method of an electrode material for electrolytic capacitors as recited in claim 62, wherein after the etching, formation of dielectric (by anodizing) is executed.

64. An anode material for aluminum electrolytic capacitors produced by the production method as recited in claim 62 or 63.

65. An aluminum electrolytic capacitor, wherein the aluminum electrode material produced by the production method as recited in any one of claims 61 to 63 is used as an electrode material.

66. A production method of an aluminum material for electrolytic capacitor electrodes, comprising:

subjecting an aluminum material to hot rolling and cold rolling; then
subjecting the aluminum material to intermediate annealing;
giving tensile strain to the aluminum material before initiation of final annealing but after the intermediate annealing; and
subjecting the aluminum material to final annealing to thereby produce an aluminum material for electrolytic capacitor electrodes,

wherein the aluminum material contains Pb not less than 0.3 mass ppm but not more than 2.5 mass ppm, and wherein the aluminum material is subjected to heating in an oxidizing atmosphere after giving the tensile strain but before the final annealing.

67. The production method of an aluminum material for electrolytic capacitor electrodes as recited in claim 66, wherein the aluminum material contains Cu not less than 10 mass ppm but not more than 150 mass ppm.

68. The production method of an aluminum material for electrolytic capacitor electrodes as recited in claim 66 or 67, wherein aluminum purity of the aluminum material is 99. 9 mass% or higher.

69. The production method of an aluminum material for electrolytic capacitor electrodes as recited in any one of claims 66 to 68, wherein a heating temperature in the oxidizing atmosphere is 50 to 400 °C.

70. The production method of an aluminum material for electrolytic capacitor electrodes as recited in claim 69, wherein a heating time of the heating executed in an oxidizing atmosphere is not shorter than 3 seconds but not longer than 72 hours.

71. The production method of an aluminum material for electrolytic capacitor electrodes as recited in any one of claims 66 to 70, wherein oxygen content in the oxidizing atmosphere is not less than 0.1 vol%.

72. The production method of an aluminum material for electrolytic capacitor electrodes as recited in any one of claims 66 to 71, wherein washing is executed before heating in the oxidizing atmosphere but after giving the tensile strain.

73. The production method of an aluminum material for electrolytic capacitor electrodes as recited in claim 72, wherein washing liquid for use in the washing is at least one of organic solvent, water containing surfactant, and a mixture of water-soluble organic solvent and water.

74. The production method of an aluminum material for electrolytic capacitor electrodes as recited in claim 72, wherein washing liquid for use in the washing is at least one of acid aqueous solution and alkaline aqueous solution.

75. The production method of an aluminum material for electrolytic capacitor electrodes as recited in claim 72, wherein the washing is performed by sequentially executing washing with alkaline aqueous solution and washing with acid aqueous solution.

76. The production method of an aluminum material for electrolytic capacitor electrodes as recited in claim 74 or 75, wherein acid in the acid aqueous solution is one or more selected from the group consisting of hydrochloric acid, sulfuric acid, nitric acid, and acid containing phosphorus.

77. The production method of an aluminum material for electrolytic capacitor electrodes as recited in claim 74 or 75, wherein alkaline in the alkaline aqueous solution is one or more selected from the group consisting of sodium hydroxide, calcium hydroxide, potassium hydroxide, sodium orthosilicate, sodium metasilicate, sodium tertiary phosphate, and sodium carbonate.

78. The production method of an aluminum material for electrolytic capacitor electrodes as recited in any one of claims 74 to 77, wherein an average removal amount of a surface layer of the aluminum material by the washing is not less than 1 nm but not more than 500 nm per one side of the aluminum material, and wherein the removal amount is defined by:

$$\text{removal amount D (nm)} = E(g/cm^2) \times 10^7/2.7(g/cm^3),$$

where E is a decreased amount per unit surface area by the washing, and 2.7 $g/cm^3$ is density of the aluminum material.

79. The production method of an aluminum material for electrolytic capacitor electrodes as recited in any one of claims 66 to 72, wherein without executing washing after giving the tensile strain, heating in an oxidizing atmosphere is executed.

80. The production method of an aluminum material for electrolytic capacitor electrodes as recited in claim 73 or 79, wherein Pb concentration in the aluminum material is not less than 0.6 mass ppm but not more than 2.5 mass ppm.

81. The production method of an aluminum material for electrolytic capacitor electrodes as recited in any one of claims 66 to 80, wherein the final annealing is executed in an inert gas atmosphere.

82. The production method of an aluminum material for electrolytic capacitor electrodes as recited in any one of claims 66 to 81, wherein the final annealing is executed at a temperature of not lower than 450 °C but not higher than 600 °C.

83. An aluminum material for electrolytic capacitor electrodes produced by the production method as recited in any one of claims 66 to 82.

84. An aluminum material for electrolytic capacitor electrodes as recited in claim 83, wherein the aluminum material is used as a medium-voltage or high-voltage anode material.

85. A production method of an electrode material for electrolytic capacitors, comprising a step of subjecting the aluminum material produced by the production method as recited in any one of claims 66 to 82 to etching.

86. The production method of an electrode material for electrolytic capacitors as recited in claim 85, wherein at least a part of the etching is DC electrolytic etching.

87. The production method of an electrode material for electrolytic capacitors as recited in claim 86, wherein after the etching, formation of dielectric (by anodizing) is executed.

88. An anode material for aluminum electrolytic capacitors produced by the production method as recited in claim 86 or 87.

89. An aluminum electrolytic capacitor, wherein the aluminum electrode material produced by the production method as recited in any one of claims 85 to 87 is used as an electrode material.

90. A production method of an aluminum material for electrolytic capacitor electrodes, comprising:

subjecting an aluminum material to hot rolling and cold rolling; then
subjecting the aluminum material to intermediate annealing;
giving tensile strain to the aluminum material before initiation of final annealing but after the intermediate annealing; and

subjecting the aluminummaterial to final annealing to thereby produce an aluminum material for electrolytic capacitor electrodes,

wherein the aluminum material contains Pb not less than 0.3 mass ppm but not more than 2.5 mass ppm, wherein the intermediate annealing is executed in an oxidizing atmosphere, and wherein the aluminum material is subjected to heating in an oxidizing atmosphere after giving the tensile strain but before the final annealing.

91. The production method of an aluminum material for electrolytic capacitor electrodes as recited in claim 90, wherein the aluminum material contains Cu not less than 10 mass ppm but not more than 150 mass ppm.

92. The production method of an aluminum material for electrolytic capacitor electrodes as recited in claim 90 or 91, wherein aluminum purity of the aluminum material is 99.9 mass% or higher.

93. The production method of an aluminum material for electrolytic capacitor electrodes as recited in any one of claims 90 to 92, wherein a heating temperature of heating executed after giving tensile strain but before the final annealing in the oxidizing atmosphere is 50 to 400 °C.

94. The production method of an aluminum material for electrolytic capacitor electrodes as recited in claim 93, wherein a heating time of the heating executed after giving tensile strain but before the final annealing in an oxidizing atmosphere is not shorter than 3 seconds but not longer than 72 hours.

95. The production method of an aluminum material for electrolytic capacitor electrodes as recited in any one of claims 90 to 94, wherein oxygen content in the oxidizing atmosphere for the heating executed after giving tensile strain but before the final annealing is not less than 0.1 vol%.

96. The production method of an aluminum material for electrolytic capacitor electrodes as recited in any one of claims 90 to 95, wherein the intermediate annealing in the oxidizing atmosphere is executed at a temperature of not lower than 200 °C but not higher than 300 °C.

97. The production method of an aluminum material for electrolytic capacitor electrodes as recited in any one of claims 90 to 96, wherein oxygen content in the oxidizing atmosphere for executing the intermediate annealing is not less than 0.1 vol%.

98. The production method of an aluminum material for electrolytic capacitor electrodes as recited in any one of claims 90 to 97, wherein washing is executed before heating in the oxidizing atmosphere but after giving the tensile strain.

99. The production method of an aluminum material for electrolytic capacitor electrodes as recited in claim 98, wherein washing liquid for use in the washing is at least one of organic solvent, water containing surfactant, and a mixture of water-soluble organic solvent and water.

100. The production method of an aluminum material for electrolytic capacitor electrodes as recited in claim 98, wherein washing liquid for use in the washing is at least one of acid aqueous solution and alkaline aqueous solution.

101. The production method of an aluminum material for electrolytic capacitor electrodes as recited in claim 98, wherein the washing is performed by sequentially executing washing with alkaline aqueous solution and washing with acid aqueous solution.

102. The production method of an aluminum material for electrolytic capacitor electrodes as recited in claim 100 or 101, wherein acid in the acid aqueous solution is one or more selected from the group consisting of hydrochloric acid, sulfuric acid, nitric acid, and acid containing phosphorus.

103. The production method of an aluminum material for electrolytic capacitor electrodes as recited in claim 100 or 101, wherein alkaline in the alkaline aqueous solution is one or more selected from the group consisting of sodium hydroxide, calcium hydroxide, potassium hydroxide, sodium orthosilicate, sodium metasilicate, sodium tertiary phosphate, and sodium carbonate.

104. The production method of an aluminum material for electrolytic capacitor electrodes as recited in any one of claims 100 to 103, wherein an average removal amount of a surface layer of the aluminum material by the washing is not less than 1 nm but not more than 500 nm per one side of the aluminum material, and wherein the removal amount is defined by:

$$\text{removal amount } D \text{ (nm)} = E(g/cm^2) \times 10^7/2.7(g/cm^3),$$

where E is a decreased amount per unit surface area by the washing, and $2.7 g/cm^3$ is density of the aluminum material.

105. The production method of an aluminum material for electrolytic capacitor electrodes as recited in any one of claims 90 to 97, wherein without executing washing after giving the tensile strain, heating in an oxidizing atmosphere is executed.

106. The production method of an aluminum material for electrolytic capacitor electrodes as recited in claim 99 or 105, wherein Pb concentration in the aluminum material is not less than 0.6 mass ppm but not more than 2.5 mass ppm.

107. The production method of an aluminum material for electrolytic capacitor electrodes as recited in any one of claims 90 to 106, wherein the final annealing is executed in an inert gas atmosphere.

108. The production method of an aluminum material for electrolytic capacitor electrodes as recited in any one of claims 90 to 107, wherein the final annealing is executed at a temperature of not lower than 450 °C but not higher than 600 °C.

109. An aluminum material for electrolytic capacitor electrodes produced by the production method as recited in any one of claims 90 to 108.

110. An aluminum material for electrolytic capacitor electrodes as recited in claim 109, wherein the aluminum material is used as a medium-voltage or high-voltage anode material.

111. A production method of an electrode material for electrolytic capacitors, comprising a step of subjecting the aluminum material produced by the production method as recited in any one of claims 90 to 108 to etching.

112. The production method of an electrode material for electrolytic capacitors as recited claim 111, wherein at least a part of the etching is DC electrolytic etching.

113. The production method of an electrode material for electrolytic capacitors as recited in claim 112, wherein after the etching, formation of dielectric (by anodizing) is executed.

114. An anode material for aluminum electrolytic capacitors produced by the production method as recited in claim 112 or 113.

115. An aluminum electrolytic capacitor, wherein the aluminum electrode material produced by the production method as recited in any one of claims 111 to 113 is used as an electrode material.

Fig. 1

## INTERNATIONAL SEARCH REPORT

| | International application No. |
|---|---|
| | PCT/JP2006/305436 |

A. CLASSIFICATION OF SUBJECT MATTER
*C22C21/00*(2006.01), *C22F1/04*(2006.01), *H01G9/04*(2006.01)

According to International Patent Classification (IPC) or to both national classification and IPC

B. FIELDS SEARCHED

Minimum documentation searched (classification system followed by classification symbols)
C22F1/04-1/057, C22C21/00-21/18, H01G9/04

Documentation searched other than minimum documentation to the extent that such documents are included in the fields searched

| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2000-239773 A  (Nippon Foil Mfg. Co., Ltd.), 05 September, 2000 (05.09.00), Claims; Par. Nos. [0015] to [0020]; table 1; example 1 (Family: none) | 1-115 |
| Y | JP 58-42746 A  (Toyo Aluminium Kabushiki Kaisha), 12 March, 1983 (12.03.83), Claims; page 1, lower left column, line 15 to page 2, upper left column, line 1; lower left column, line 18 to lower right column, line 14; Figs. 1, 2 (Family: none) | 1-15 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 April, 2006 (19.04.06) | 02 May, 2006 (02.05.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2006/305436 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 8-97098 A  (Mitsubishi Aluminum Co., Ltd.),<br>12 April, 1996 (12.04.96),<br>Claims; Par. Nos. [0001] to [0008]<br>(Family: none) | 1-15 |
| Y | JP 7-201673 A  (Showa Aluminum Corp.),<br>04 August, 1995 (04.08.95),<br>Claims; Par. No. [0009]<br>(Family: none) | 16-115 |
| Y | JP 2002-43186 A  (Mitsubishi Aluminum Co., Ltd.),<br>08 February, 2002 (08.02.02),<br>Claims; Par. No. [0009]<br>(Family: none) | 65-115 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H07201673 A
- JP 2000239773 A
- JP H04127412 A
- JP H03122260 A
- WO 03091482 A1
- JP H02254140 A

- WO 2004003248 A1
- JP 2005077776 A
- JP 2005199226 A
- JP 2005224565 A
- JP 2005234150 A